# EUROPEAN PATENT SPECIFICATION

(11) **EP 2 677 878 B1**
(45) Date of publication and mention of the grant of the patent: **17.02.2016**
(21) Application number: 12710823.1
(22) Date of filing: 23.02.2012
(51) Int. Cl.: A23G 4/06

(54) **FLAVOR PRE-BLENDS FOR CHEWING GUM, METHODS OF MAKING FLAVOR PRE-BLENDS AND CHEWING GUM COMPOSITIONS THEREOF**
GESCHMACKVORMISCHUNGEN FÜR KAUGUMMI, VERFAHREN ZUR HERSTELLUNG VON GESCHMACKVORMISCHUNGEN UND KAUGUMMIZUSAMMENSETZUNGEN DARAUS
PRÉMÉLANGES D'ARÔMES POUR GOMME À MÂCHER, PROCÉDÉS DE FABRICATION DE PRÉMÉLANGES D'ARÔME ET COMPOSITIONS POUR GOMME À MÂCHER DE CEUX-CI

(30) Priority: 23.02.2011 US 201161445685 P; 30.09.2011 US 201161541493 P
(43) Date of publication of application: 01.01.2014
(73) Proprietor: Intercontinental Great Brands LLC, East Hanover, NJ 07936 (US)
(72) Inventor: CAMPBELL, Bruce, Glenview, Illinois 60025 (US); GAONKAR, Anil, Glenview, Illinois 60025 (US); KABSE, Kishor, Whippany, New Jersey 07981 (US); KAR, Simkie, Whippany, New Jersey 07981 (US); LEVENSON, Deborah, Whippany, New Jersey 07981 (US); WANG, Yan, Glenview, Illinois 60025 (US); ZAKHARKIN, Stanislav, Whippany, New Jersey 07981 (US); ZBYLUT, Steven, Glenview, Illinois 60025 (US)
(74) Representative: Wilson Gunn
(86) International application number: PCT/US2012/026275
(87) International publication number: WO 2012/116152

(56) References cited:
- WO-A1-96/01057
- WO-A1-2010/071026
- JP-A- 6 269 248
- US-A- 5 370 881
- US-A- 5 633 027
- US-A1- 2009 022 846

## Description

### FIELD

This disclosure generally relates to chewing gum, more particularly to chewing gum containing flavor pre-blends. Such chewing gum is known and has been disclosed for example in US 5370881, WO 9601057, US 5633027, US 20090022846, JP 062669248 and WO 2010071026.

### BACKGROUND

Traditional chewing gum is made using bulking agents in the form of crystalline powders such as crystalline sugar, sorbitol, or mannitol. Chewing gum is generally designed to have a certain chew texture throughout the majority of the chew time. However, designing for a targeted chew texture is complicated by the fact that the temperature of the chewing gum at the initial bite occurs when the gum piece is at ambient temperature (∼22 to 25°C). As the consumer continues to chew the gum piece, the gum reaches body temperature (37°C). If the gum composition is designed to chew soft ("just right" chew) in the initial bite, then as the temperature increases, the chewing gum may become softer than a "just right" chew during the later chew stage. Thus, to design for a targeted chew texture during the majority of the chew duration, the initial chew may be harder than ideal. In such an instance, the consumer expectation of soft chew and large flavor hit in the first bite is not completely met by traditional chewing gum compositions.

An additional problem in the chewing gum art is ensuring sufficient flavor, sweeteners, and other ingredients are released from the chewing gum during the chewing process. Various flavors, sensates and other additives which may be of a hydrophobic nature, can get trapped in the hydrophobic chewing gum base. The result is an inefficient release or delayed release of flavors and reduced taste experience.

There remains a need in the art for chewing gum exhibiting a just right chew texture from the initial stage of chew and throughout the majority of the chew time, while at the same time providing a large early release of flavor followed by a long lasting flavor profile.

### SUMMARY

In one embodiment, a chewing gum composition comprises a gum base; and a flavor pre-blend comprising i) a saccharide syrup or sugar alcohol syrup, ii) a particulate saccharide or particulate sugar alcohol, iii) an emulsifier, iv) a flavorant, v) a fat, and optionally vi) a humectant, a food acid or salt thereof, a high intensity sweetener, a sensate, or a combination thereof; wherein the chewing gum composition comprises localized regions of the fat and the flavorant, wherein the localized regions of the fat and the flavorant have a degree of co-localization of at least 10% as determined by Confocal Raman Spectroscopy.

In one embodiment, a chewing gum composition comprises a gum base; and a flavor pre-blend comprising i) a saccharide syrup or sugar alcohol syrup, ii) a particulate saccharide or particulate sugar alcohol, iii) an emulsifier, iv) a flavorant, v) a fat, and optionally vi) a humectant, a food acid or salt thereof, a high intensity sweetener, a sensate, or a combination thereof; wherein the flavor pre-blend exhibits less than 10% phase separation by visual inspection after centrifuging the flavor pre-blend at 239 g-force and 25°C for 20 minutes; and wherein the chewing gum composition releases more flavor than a comparative chewing gum having identical type and amount of ingredients, wherein the ingredients i)- vi) are not prepared as a pre-blend.

In another embodiment, a chewing gum composition comprises a gum base; and a flavor pre-blend comprising i) a saccharide syrup or sugar alcohol syrup, ii) a particulate saccharide or particulate sugar alcohol, iii) an emulsifier, iv) a flavorant, v) a fat, and optionally vi) a humectant, a food acid or salt thereof, a high intensity sweetener, a sensate, or a combination thereof; wherein the flavor pre-blend exhibits less than 10% phase separation by visual inspection after centrifuging the flavor pre-blend at 239 g-force and 25°C for 20 minutes; and wherein an aqueous extraction of the chewing gum composition exhibits a creaming rate slower than an aqueous extraction of a comparative chewing gum having identical type and amount of ingredients, wherein ingredients i)- vi) are not prepared as a pre-blend; and wherein the creaming rate is determined using a photocentrifuge dispersion analyzer.

In another embodiment, a chewing gum composition comprises a gum base; a bulk sweetener; and a flavor pre-blend comprising i) a sugar alcohol syrup, ii) particulate mannitol, isomalt, or a combination thereof, iii) an emulsifier, iv) a flavorant, v) a fat, and optionally vi) a humectant, a food acid or salt thereof, a high intensity sweetener, a sensate, or a combination thereof; wherein the flavor pre-blend is present in an amount of about 8 to about 15 wt% of the total chewing gum composition; and wherein the flavor pre-blend is prepared separately from a mixture of gum base and bulk sweetener at a temperature less than or equal to 85°C, and then added to the mixture to form a homogeneous chewing gum composition.

The above described and other features are exemplified by the following detailed description.

### BRIEF DESCRIPTION OF THE DRAWINGS

FIG. 1a is a graphical representation of methyl salicylate release in milligrams versus time using a mechanical chew extraction method from chewing gums containing the same ingredients, with (5A) and without (CE5A) a flavor pre-blend.
FIG. 1b is a graphical representation of L-carvone release in milligrams versus time using a mechanical chew extraction method from chewing gums containing the same ingredients, with (5B) and without (CE5B) a flavor pre-blend.
FIG. 1c is a graphical representation of methyl salicylate release versus time for a chewing gum prepared with a stable flavor pre-blend (5C) vs. a chewing gum prepared without a flavor pre-blend (CE5C).
FIG. 1d is a graphical representation of methyl salicylate release versus time for a chewing gum prepared with an unstable flavor pre-blend (5D) vs. a chewing gum prepared without a flavor pre-blend (CE5D).
FIG. 1e is a graphical representation of methyl salicylate release versus time for a chewing gum prepared with an unstable flavor pre-blend (5E) vs. a chewing gum prepared without a flavor pre-blend (CE5E).
FIGS. 2a and 2b are graphical representations showing the magnitude of impact of polyol type, polyol concentration, moisture, flavor type, flavor concentration, acid concentration, and pH on flavor pre-blend viscosity (FIG. 2a) and stability (FIG. 2b).
FIG. 3 is a graphical representation showing there can be a positive or negative correlation between the particulate polyol type/concentration and pH with flavor pre-blend stability.
FIGS. 4a, 4b, and 4c are graphical representations of response profiles for particulate mannitol, maltitol, and xylitol concentration (%) versus flavor separation % for various pH and flavor types.
FIG. 5a is a graphical representation of the location of flavorant in a flavor pre-blend (derived from Raman spectroscopy data).
FIG. 5b is a graphical representation of the location of fat in a flavor pre-blend (derived from Raman spectroscopy data).
FIG. 6a is a graphical representation of the location of flavorant in a chewing gum containing a flavor pre-blend (derived from Raman spectroscopy data).
FIG. 6b is a graphical representation of the location of fat in a chewing gum containing a flavor pre-blend (derived from Raman spectroscopy data).
FIG. 7a is a graphical representation of the location of fat in a chewing gum containing a flavor pre-blend (derived from Raman spectroscopy data).
FIG. 7b is a graphical representation of the location of flavorant in a chewing gum containing a flavor pre-blend (derived from Raman spectroscopy data).
FIG. 8a is a graphical representation of the location of fat in a chewing gum not containing a flavor pre-blend (derived from Raman spectroscopy data).
FIG. 8b is a graphical representation of the location of flavorant in a chewing gum not containing a flavor pre-blend (derived from Raman spectroscopy data).

### DETAILED DESCRIPTION

Disclosed herein are chewing gums comprising a gum base; optionally a bulk sweetener; and a flavor pre-blend comprising i) a sweetener syrup, ii) a particulate sweetener, iii) an emulsifier, and iv) a fat, a flavorant, a food acid or salt thereof, a high intensity sweetener, a sensate, or a combination thereof.

In an embodiment, a chewing gum comprises a gum base; a bulk sweetener comprising a sugar polyol; and a flavor pre-blend comprising a sugar alcohol syrup, a particulate sugar alcohol, a flavorant, a fat, and an emulsifier.

The flavor pre-blend contains a combination of hydrophilic and lipophilic ingredients combined into a homogeneous mixture. The hydrophilic ingredients include sweetener syrup and humectants (e.g. corn syrup, maltitol syrup, glycerin, etc.) containing dissolved or wetted particulate sweetener (e.g., particulate sucrose, maltitol, mannitol, etc.) to increase the solids content or dry matter content of the syrup to increase viscosity. The hydrophilic ingredients are mixed with lipophilic ingredients, such as a fat, an emulsifier, flavorants, etc., to form the flavor pre-blend as a substantially homogeneous mixture. In some embodiments, the flavor pre-blend can be characterized as a flavor emulsion, particularly as an oil in water emulsion. In some embodiments, the flavor pre-blend also can be characterized as a suspension or dispersion.

Use of the flavor pre-blend in a chewing gum composition provides a chewing gum with good chew and texture characteristics and a good early release of flavor. Not wishing to be bound by theory, but it is theorized that the use of the flavor pre-blend prevents flavorants, sensates, etc., particularly of a hydrophobic nature, present in the flavor pre-blend from getting trapped in the gum base, allowing them to be released quicker and more completely. The faster release provides a quick burst of flavor such that the consumer experiences a more intense, up-front flavor, juicier perception (such as when food acid is used) and quicker sweetness profile (such as when high intensity sweetener is used) early in the chew. It is also believed a portion of certain flavor pre-blend ingredients, e.g. the hydrophilic ingredients, are maintained in a dissolved or semi-dissolved state, thus allowing quicker dissolution of these ingredients in the saliva of the mouth when the gum is chewed, thereby accentuating flavor perception. The flavor release is also maintained for a long duration during the chew experience. The flavor experience by the consumer is maintained for five minutes or greater from the initial chew, specifically 10 minutes or greater, and more specifically 15 minutes or greater.

The texture of the chewing gum containing the flavor pre-blend provides a velvety chew that stays smooth over time versus corresponding chewing gum prepared without the flavor pre-blend. The soft chew texture is maintained for five minutes or greater from the initial chew, specifically 10 minutes or greater, and more specifically 15 minutes or greater.

### Flavor pre-blend

The chewing gum comprises a flavor pre-blend as an ingredient which imparts various desirable attributes to the chewing gum including improved flavor, particularly at the earlier chew bites. The flavor pre-blend includes solids and liquids, and is sometimes referred to herein as "liquid flavor blend". The term "flavor" as used in "flavor pre-blend" and "liquid flavor blend" is inclusive of aroma, taste, and mouthfeel. The term "liquid" can include solutions, suspensions, emulsions, dispersions, semi-solids, cremes, gels, and the like, or a combination thereof. The liquid flavor blend can include a material that is fluid at room temperature and pressure, or which is a viscous liquid having a yield point.

In an embodiment, the flavor pre-blend is a viscous liquid where viscosity can be imparted by various factors such as inclusion of a sugar alcohol in a dissolved and semi dissolved state, dispersed phase that includes lipophilic matter which is micronized to increase surface area, modulated pH that supports increased viscosity, and the like.

In an embodiment, the chewing gum comprises two or more flavor pre-blends, for a multiplicity of flavor release.

In an embodiment, the flavor pre-blend generally comprises a non-crystallizing type syrup such as a saccharide syrup or sugar alcohol syrup; and a particulate saccharide or particulate sugar alcohol. Sugar alcohol is also referred to herein as "polyol".

In an embodiment, the flavor pre-blend comprises i) a saccharide syrup or sugar alcohol syrup, ii) a particulate saccharide or particulate sugar alcohol, iii) a flavorant, a food acid or salt thereof, a high intensity sweetener, a sensate, or a combination thereof, and iv) an emulsifier.

In an embodiment, the flavor pre-blend comprises a saccharide syrup or sugar alcohol syrup, a particulate saccharide or particulate sugar alcohol, a fat, and an emulsifier.

In an embodiment, the flavor pre-blend comprises a sugar alcohol syrup, a particulate sugar alcohol, a flavorant, a fat, and an emulsifier.

In an embodiment, the flavor pre-blend further comprises a food acid or salt thereof, a high intensity sweetener, a sensate, a flavor modulator or potentiator, a coloring agent, a functional ingredient, a humectant, a hydrocolloid, or a combination thereof.

In an embodiment, the flavor pre-blend comprises a sugar alcohol syrup, a particulate sugar alcohol, a flavorant, a fat, an emulsifier, a food acid or salt thereof, a sensate, a humectant, and a hydrocolloid.

In an embodiment, the flavor pre-blend comprises a sugar alcohol syrup, a particulate sugar alcohol, a flavorant, a fat, an emulsifier, a food acid or salt thereof, a sensate, and a humectant.

In an embodiment, the flavor pre-blend comprises a sugar alcohol syrup, a particulate sugar alcohol, a flavorant, a fat, an emulsifier, a food acid or salt thereof, and a humectant.

In an embodiment, the flavor pre-blend comprises a sugar alcohol syrup, a particulate sugar alcohol, a flavorant, a fat, an emulsifier, a sensate, and a humectant.

Suitable saccharide syrups include mono-saccharide, di-saccharide and polysaccharide syrups such as but not limited to, syrups prepared from sucrose (sugar), dextrose, maltose, dextrin, xylose, ribose, glucose, mannose, galactose, fructose (levulose), lactose, invert sugar, fructo oligo saccharide, partially hydrolyzed starch, high fructose corn syrup, polydextroses, or a combination thereof.

Exemplary sugar alcohol syrups include a hydrogenated starch hydrolysate syrup, an isomaltulose syrup, a maltitol syrup, a sorbitol syrup, a polyglucitol syrup, or a combination thereof. In an embodiment, the sugar alcohol syrup is a hydrogenated starch hydrolysate syrup, a maltitol syrup, or a combination thereof. In yet another embodiment, the sugar alcohol syrup is a maltitol syrup. Use of more than one sugar alcohol in a dissolved state helps to prohibit re-crystallization of other sugar alcohols present. Exemplary non-crystallizing sugar alcohol syrup includes maltitol solution (Lycasin), hydrogenated starch hydrolysate syrup including polyglucitol syrup which can contain >50% polymers or maltitol and sorbitol <50%, non crystallizing sorbitol solution which contains >5% polymers having a degree of polymerization (DP) of 3, 5, or greater, and the like. Exemplary crystallizing sugar alcohol syrup include a solution prepared from 70% crystalline sorbitol powder and 30% water, a solution prepared from crystalline maltitol dissolved in water, and the like.

The saccharide syrup or sugar alcohol syrup can have about 60 to about 90 weight percent (wt%) dry matter with the remaining weight being water, specifically about 65 to about 85 wt%, and more specifically about 70 to about 75 wt%.

Particulate saccharide and particulate sugar alcohol as used herein means particulate or powdered saccharide and sugar alcohols, and specifically excludes syrups or solutions. Suitable particulate saccharides include particulate mono-saccharides, di-saccharides and poly-saccharides such as but not limited to, sucrose (sugar), dextrose, maltose, dextrin, xylose, ribose, glucose, mannose, galactose, fructose (levulose), lactose, corn syrup solids, or a combination thereof.

The particulate sugar alcohol of the flavor pre-blend includes a crystalline sugar alcohol, an amorphous sugar alcohol, or a combination thereof. The particulate sugar alcohol can be erythritol, galactitol, isomalt, a hydrogenated starch hydrolysate, lactitol, maltitol, mannitol, polyglycitol, sorbitol, xylitol, or a combination thereof. In an embodiment, the particulate sugar alcohol is erythritol, maltitol, mannitol, sorbitol, xylitol, or a combination thereof. In an embodiment, the particulate sugar alcohol is maltitol, mannitol, sorbitol, or a combination thereof. In an embodiment, the particulate sugar alcohol is mannitol.

In an embodiment, the particulate sugar alcohol can be isomalt, a disaccharide alcohol. Isomalt can be prepared by hydrogenating isomaltulose. Products of the hydrogenation can include 6-O-α-D-glucopyranosyl-D-sorbitol (1,6-GPS); 1-O-α-D-glucopyranosyl-D-sorbitol (1,1-GPS); 1-O-α-D-glucopyranosyl-D-mannitol (1,1-GPM); 6-O-α-D-glucopyranosyl-D-mannitol (1,6-GPM); and mixtures thereof. Some commercially available isomalt materials include an almost equimolar mixture of 1,6-GPS, and 1,1-GPM. Other isomalt materials can include pure 1,6-GPS; 1,1-GPS; 1,6-GP; and 1,1-GPM. Still other isomalt materials can include mixtures of 1,6-GPS; 1,1-GPS; 1,6-GPM; and 1,1-GPM at any ratio.

As used herein "particulate sugar alcohol or saccharide of the flavor pre-blend" means a particulate sugar alcohol or particulate saccharide is used to prepare the flavor pre-blend. The particulate sugar alcohol/saccharide is typically dissolved and/or wetted in the syrup at temperatures between room temperature and 80°C, but below the boiling point of the hydrophilic portion of the flavor pre-blend. The particulate sugar alcohol/saccharide is used to increase the solids (dry matter) content of the syrup to a level of greater than 80 wt% based on the combination of the syrup and particulate, specifically greater than or equal to 82 wt%, more specifically greater than or equal to 85 wt%, and yet more specifically greater than or equal to 87 wt%.

The ratio of sugar alcohol syrup to particulate sugar alcohol for the flavor pre-blend can be selected such that the flavor pre-blend remains a liquid at the time of manufacture and during shelf life.

The amount of sugar alcohol syrup present in the flavor pre-blend is about 30 to about 75 wt% based on the total weight of the flavor pre-blend, specifically about 40 to about 65 wt% , more specifically about 45 to about 60 wt%, and yet more specifically about 50 to about 55 wt%.

The amount of particulate sugar alcohol present in the flavor pre-blend is about 5 to about 40 wt% based on the total weight of the flavor pre-blend, specifically about 10 to about 30 wt%, more specifically about 12 to about 27 wt%, yet more specifically about 15 to about 24 wt%, and still more specifically about 17 to about 22 wt%.

In an embodiment, the particulate saccharide or particulate sugar alcohol present in the flavor pre-blend has a particle size of 20 micrometers or less average particle size. Small particulates disperse well and increase viscosity of the blend.

It is believed that the particulate sugar alcohol or particulate saccharide acts as a stabilizer that increases the viscosity and stabilizes the blend of immiscible components of the flavor pre-blend (hydrophobic components: fat, emulsifier, flavor, and the like; and hydrophilic components: sugar alcohol/saccharide syrup, particulate sugar alcohol/saccharide, food acids, and the like).

As the amount of flavor pre-blend increases in the chewing gum, the crystalline material in the overall chewing gum will be reduced such that it is theorized the chewing gum will have improved sensory profile and smoother surface texture for increased consumer acceptability. In addition, the preparation of the flavor pre-blend is facile and convenient, requiring no special processing equipment or cooking conditions. The flavor pre-blend can be prepared in a convenient format and pumped to conventional gum forming equipment.

The flavor pre-blend used to prepare the chewing gum can comprise a flavorant. Exemplary flavorants (flavor, flavoring agent) that can be used include those artificial or natural flavors known in the art, for example synthetic flavor oils, natural flavoring aromatics and/or oils, oleoresins, extracts derived from plants, leaves, flowers, fruits, and the like, or a combination thereof. Nonlimiting representative flavors include oils such as spearmint oil, cinnamon oil, oil of wintergreen (methyl salicylate), peppermint oil, clove oil, bay oil, anise oil, eucalyptus oil, thyme oil, cedar leaf oil, oil of nutmeg, allspice, oil of sage, mace, oil of bitter almonds, cassia oil, and citrus oils including lemon, orange, lime, grapefruit, vanilla, fruit essences, including apple, pear, peach, grape, strawberry, raspberry, blackberry, cherry, plum, pineapple, apricot, banana, melon, tropical fruit, mango, mangosteen, pomegranate, papaya, honey lemon, and the like, or a combination thereof. Specific flavorants are mints such as peppermint, spearmint, artificial vanilla, cinnamon derivatives, and various fruit flavors.

Other types of flavorants include various aldehydes and esters such as cinnamyl acetate, cinnamaldehyde, citral diethylacetal, dihydrocarvyl acetate, eugenyl formate, p-methylamisol, acetaldehyde (apple), benzaldehyde (cherry, almond), anisic aldehyde (licorice, anise), cinnamic aldehyde (cinnamon), citral, i.e., alpha-citral (lemon, lime), neral, i.e., beta-citral (lemon, lime), decanal (orange, lemon), ethyl vanillin (vanilla, cream), heliotrope, i.e., piperonal (vanilla, cream), vanillin (vanilla, cream), alpha-amyl cinnamaldehyde (spicy fruity flavors), butyraldehyde (butter, cheese), valeraldehyde (butter, cheese), citronellal (modifies, many types), decanal (citrus fruits), aldehyde C-8 (citrus fruits), aldehyde C-9 (citrus fruits), aldehyde C-12 (citrus fruits), 2-ethyl butyraldehyde (berry fruits), hexenal, i.e., trans-2 (berry fruits), tolyl aldehyde (cherry, almond), veratraldehyde (vanilla), 2,6-dimethyl-5-heptenal, i.e., melonal (melon), 2,6-dimethyloctanal (green fruit), and 2-dodecenal (citrus, mandarin).

The flavorant can be used in liquid or solid form, specifically a liquid form for use in the flavor pre-blend.

More than one flavorant can be used in the flavor pre-blend. The amount and type of flavorant used in the flavor pre-blend can be chosen based on the targeted release profile and flavor intensity desired. The flavor pre-blend generally comprises a flavorant in an amount of about 0 to about 20 wt% based on the total weight of the flavor pre-blend, specifically about 0.01 to about 17 wt%, and yet more specifically about 0.5 to about 12 wt%, still yet more specifically about 1.0 to about 8wt%, more specifically about 1.75 to about 5 wt%, more specifically about 2.5 to about 4.5 wt%, and even more specifically about 3.5 to about 4 wt%.

Exemplary fats for use in the flavor pre-blend include fats and oils of vegetable origin, animal origin, or a combination thereof. Suitable vegetable fats can include soybean, cottonseed, corn, almond, peanut, sunflower, rapeseed, olive, palm, palm kernel, illipe, shea, coconut, cocoa, cocoa butter, or a combination thereof. The forgoing vegetable fats can be hydrogenated to varying degrees as desired or separated by fractional crystallization. Suitable animal fats include dairy fats such as milk fat and butter. As used herein, the term "fat" refers to any lipid material and can be solid or liquid (e.g. oil). Exemplary lipid materials include triglycerides, fatty alcohols, fatty acids, or a combination thereof. The triglyceride is not limited although medium chain triglycerides, long chain triglycerides, and the like can be used. The melting point of the fat is not limited although fats having a melting point of about 36 to about 68°C can be used. Specific fats include hydrogenated palm oil, hydrogenated palm kernel oil, hydrogenated soybean oil, hydrogenated peanut oil, hydrogenated cottonseed oil, hydrogenated coconut oil, or a combination thereof.

A fat can be present in the flavor pre-blend in an amount of about 2.5 to about 10 wt% based on the total weight of the flavor pre-blend, specifically about 5.0 to about 7.5, more specifically about 5.5 to about 7.0 wt%, and yet more specifically about 6.0 to about 6.75 wt%.

The flavor pre-blend can also contain an emulsifier. As used herein "emulsifier" means a material that retards the separation of two immiscible liquids after they are mixed. Suitable emulsifiers for use in the flavor pre-blend can have an HLB value in the range of 1 to 22, specifically 11 to 17, and more specifically 4 to 8. Emulsifiers can be selected based on the type of the emulsion. In general, higher HLB emulsifiers that are water soluble/dispersible can be used in the continuous aqueous phase for preparing an oil in water emulsion while lower HLB emulsifiers can be used in the continuous liphphilic phase for preparing water in oil emulsions. Exemplary emulsifiers include distilled monoglycerides, lecithin, acetic acid esters of mono and diglycerides, citric acid esters of mono and diglycerides, lactic acid esters of mono and diglycerides, mono and diglycerides, polyglycerol esters of fatty acids, ceteareth-20, polyglycerol polyricinoleate, propylene glycol esters of fatty acids, polyglyceryl laurate, glyceryl cocoate, gum arabic, acacia gum, sorbitan monostearates, sorbitan tristearates, sorbitan monolaurate, sorbitan monooleate, sodium stearoyl lactylates, calcium stearoyl lactylates, diacetyl tartaric acid esters of mono- and diglycerides, glyceryl tricaprylate-caprate / medium chain triglycerides, glyceryl dioleate, glyceryl oleate, glyceryl lacto esters of fatty acids, glyceryl lacto palmitate, glyceryl stearate (glyceryl monostearate), glyceryl laurate, glycerly dilaurate, glyceryl monoricinoleate, triglyceryl monostearate, hexaglyceryl distearate, decaglyceryl monostearate, decaglyceryl dipalmitate, decaglyceryl monooleate, polyglyceryl 10 hexaoleate, medium chain triglycerides, caprylic/capric triglyceride, propylene glycol monostearate, polysorbate 20, polysorbate 40, polysorbate 60, polysorbate 80, polysorbate 65, hexylglyceryl distearate, triglyceryl monostearate, tweens, spans, stearoyl lactylates, calcium stearoyl-2-lactylate, sodium stearoyl-2-lactylate lecithin, ammonium phosphatide, sucrose esters of fatty acids, sucroglycerides, propane-1,2-diol esters of fatty acids, or a combination thereof.

In an embodiment, the emulsifier of the flavor pre-blend is lecithin, glyceryl monostearate, or a combination thereof.

The emulsifier can be present in the flavor pre-blend in an amount of about 0.01 to about 15 wt% based on the total weight of the flavor pre-blend, specifically about 1.0 to about 7.0 wt%, more specifically about 2.5 to about 5.0 wt%, yet more specifically about 2.75 to about 3.5 wt%, and still yet more specifically about 3.0 to about 3.25 wt%.

The flavor pre-blend may optionally further comprise a hydrocolloid. Hydrocolloid materials can include naturally occurring materials such as plant exudates, seed gums, and seaweed extracts or they can be chemically modified materials such as cellulose, starch, or natural gum derivatives. Furthermore, hydrocolloid materials can include pectin, gum arabic, acacia gum, alginates, agar, carageenans, guar gum, xanthan gum, locust bean gum, gelatin, gellan gum, galactomannans, tragacanth gum, karaya gum, curdlan, konjac, chitosan, xyloglucan, beta glucan, furcellaran, gum ghatti, tamarin, and bacterial gums. Modified natural gums include propylene glycol alginate, carboxymethyl locust bean gum, low methoxyl pectin, or a combination thereof. Modified celluloses can be included such as microcrystalline cellulose, carboxymethlcellulose (CMC), methylcellulose (MC), hydroxypropylmethylcellulose (HPCM), hydroxypropylcellulose (MPC), or a combination thereof. In an embodiment, the hydrocolloid is gelatin.

The flavor pre-blend can contain the hydrocolloid in an amount to improve viscosity and stability of the blend. Exemplary amounts of hydrocolloid is about 1 to about 15 wt% based on the total weight of the flavor pre-blend, specifically about 4 to about 10 wt%, and more specifically about 6 to about 8 wt%.

The flavor pre-blend may optionally further comprise a humectant. Exemplary humectants include glycerin, propylene glycol, polyethylene glycol, or a combination thereof. The humectant can be added to retard the loss of moisture and to retard crystallization of the particulate sweetener. The use of a humectant can increase the liquidity of the flavor pre-blend without adding moisture to the blend.

The humectant can be present in an amount of about of about 0.1 to about 30 wt% based on the total weight of the flavor pre-blend, specifically about 2.5 to about 20 wt%, more specifically about 4.0 to about 15 wt%, yet more specifically about 5.0 to about 10 wt%, and still yet more specifically about 6.0 to about 9.0 wt%.

The flavor pre-blend may comprise a food acid or salt thereof. Exemplary food acids and food acid salts for use in the flavor pre-blend include acetic acid, adipic acid, ascorbic acid, butyric acid, citric acid, formic acid, fumaric acid, glyconic acid, lactic acid, phosphoric acid, malic acid, oxalic acid, succinic acid, tartaric acid, and alkali metal salts thereof (e.g., sodium citrate dihydrate), or a combination thereof. In an embodiment, the food acid is citric acid, malic acid, tartaric acid or a combination thereof.

The flavor pre-blend may comprise a sensate. Exemplary sensates include cooling agents, warming agents, tingling agents, effervescent agents, or a combination thereof. Coolants are additives that provide a cooling or refreshing effect in the mouth, in the nasal cavity, or on skin. For example, among the useful cooling agents are included menthane, menthone, ketals, menthone ketals, menthone glycerol ketals, substituted p-menthanes, acyclic carboxamides, mono menthyl glutarate, substituted cyclohexanamides, substituted cyclohexane carboxamides, substituted ureas and sulfonamides, substituted menthanols, hydroxymethyl and hydroxymethyl derivatives of p-menthane, 2-mercapto-cyclo-decanone, hydroxycarboxylic acids with 2-6 carbon atoms, cyclohexanamides, menthyl acetate, menthyl salicylate, N,2,3-trimethyl-2-isopropyl butanamide (WS-23), N-ethyl-2,2-diisopropylbutanamide, N-ethyl-p-menthane-3-carboxamide (WS-3), ethyl ester of N-[[5-methyl-2-(1-methylethyl)cyclohexyl]carbonyl]glycine (WS-5), as well as the substantially pure ethyl ester of N-[[5-methyl-2-(1-methylethyl)cyclohexyl]carbonyl]glycine as disclosed in U.S. Patent No. 7,189,760 to Erman, et al which is incorporated in its entirety herein by reference, isopulegol, menthyloxy propane diol, 3-(1-menthoxy)propane-1,2-diol, 3-(1-menthoxy)-2-methylpropane-1,2-diol, p-menthane-2,3-diol, p-menthane-3,8-diol, 6-isopropyl-9-methyl-1,4-dioxaspiro[4,5]decane-2-methanol, menthyl succinate and its alkaline earth metal salts, trimethylcyclohexanol, N-ethyl-2-isopropyl-5-methylcyclohexanecarboxamide, N-(4-cyanomethylphenyl) p-menthanecarboxamide (G-180), Japanese mint oil, peppermint oil, 3-(1-menthoxy)ethan-1-ol, 3-(1-menthoxy)propan-1-ol, 3-(1-menthoxy)butan-1-ol, 1-menthylacetic acid N-ethylamide, 1-menthyl-4-hydroxypentanoate, 1-menthyl-3-hydroxybutyrate, N,2,3-trimethyl-2-(1-methylethyl)-butanamide, n-ethyl-t-2-c-6 nonadienamide, N,N-dimethyl menthyl succinamide, substituted p-menthanes, substituted p-menthane-carboxamides, 2-isopropanyl-5-methylcyclohexanol (from Hisamitsu Pharmaceuticals, hereinafter "isopregol"); menthone glycerol ketals (FEMA 3807, tradename FRESCOLAT® type MGA); 3-1-menthoxypropane-1,2-diol (from Takasago, FEMA 3784); and menthyl lactate; (from Haarman & Reimer, FEMA 3748, tradename FRESCOLAT® type ML), WS-30, WS-14, Eucalyptus extract (p-Mehtha-3,8-Diol), Menthol (its natural or synthetic derivatives), Menthol PG carbonate, Menthol EG carbonate, Menthol glyceryl ether, N-tertbutyl-p-menthane-3-carboxamide, P-menthane-3-carboxylic acid glycerol ester, Methyl-2-isopryl-bicyclo (2.2.1), Heptane-2-carboxamide; Menthol methyl ether, menthyl pyrrolidone carboxylate; 2,5-dimethyl-4-(1-pyrrolidinyl)-3(2H)-furanone; cyclic α-keto enamines, cyclotene derivatives such as cyclopentenes including 3-methyl-2-(1-pyrrolidinyl)-2-cyclopenten-1-one and 5-methyl-2-(1-pyrrolidinyl)-2-cyclopenten-1-one, compounds of the formula: 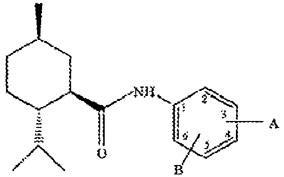 wherein B is selected from H, CH₃, C₂H₅, OCH₃, OC₂H₅; and OH; and wherein A is a moiety of the formula-CO-D, wherein D is selected from the following moieties: (i)-NR¹R², wherein R¹ and R² are independently selected from H and C₁-C₈ straight or branched-chain aliphatic, alkoxyalkyl, hydroxyalkyl, araliphatic and cycloalkyl groups, or R¹ and R² together with the nitrogen atom to which they are attached form part of an optionally-substituted, five-or six-membered heterocyclic ring; (ii)-NHCH₂COOCH₂CH₃,-NHCH₂CONH₂,-NHCH₂CH₂OCH₃,-NHCH₂CH₂OH,-NHCH₂CH(OH)CH₂OH and (iii) a moiety selected from the group consisting of: 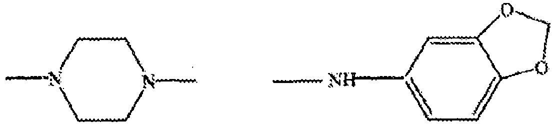 as disclosed in PCT Patent Application WO2006/125334 to Bell et al., among others; or a combination thereof. Other compounds include the alpha-keto enamines disclosed in U.S. Patent No. 6,592,884 to Hofmann et al. These and other suitable cooling agents are further described in the following U.S. patents: U.S. 4,230,688; 4,032,661; 4,459,425; 4,178,459; 4,296,255; 4,136,163; 5,009,893; 5,266,592; 5,698,181; 6,277,385; 6,627,233; 7,030,273. Still other suitable cooling agents are further described in the following U.S. Published Patent Applications: U.S. 2005/0222256; 2005/0265930.

Warming agents can be selected from a wide variety of compounds known to provide the sensory signal of warming to the user. These compounds offer the perceived sensation of warmth, particularly in the oral cavity, and often enhance the perception of flavors, sweeteners and other organoleptic components. Among the useful warming agents included are vanillyl alcohol n-butylether (TK-1000) supplied by Takasago Perfumary Company Limited, Tokyo, Japan, vanillyl alcohol n-propylether, vanillyl alcohol isopropylether, vanillyl alcohol isobutylether, vanillyl alcohol n-aminoether, vanillyl alcohol isoamylether, vanillyl alcohol n-hexylether, vanillyl alcohol methylether, vanillyl alcohol ethylether, gingerol, shogaol, paradol, zingerone, capsaicin, dihydrocapsaicin, nordihydrocapsaicin, homocapsaicin, homodihydrocapsaicin, ethanol, isopropol alcohol, iso-amylalcohol, benzyl alcohol, glycerine, or a combination thereof.

In an embodiment, tingling agents may be employed to provide a tingling, stinging or numbing sensation to the user. Tingling agents include, but are not limited to: Jambu Oleoresin or para cress (Spilanthes sp.), in which the active ingredient is Spilanthol; Japanese pepper extract (Zanthoxylum peperitum), including the ingredients known as Saanshool-I, Saanshool-II and Sanshoamide; perillartine; 4-(1-menthoxymethyl)-2-phenyl-1,3-dioxolane; black pepper extract (piper nigrum), including the active ingredients chavicine and piperine; Echinacea extract; Northern Prickly Ash extract; trans-pellitorin, and red pepper oleoresin; or a combination thereof. In an embodiment, alkylamides extracted from materials such as jambu or sanshool may be included. Additionally, in an embodiment, a sensation is created due to effervescence. Such effervescence is created by combining an alkaline material with an acidic material, either or both of which may be encapsulated. In an embodiment, an alkaline material may include alkali metal carbonates, alkali metal bicarbonates, alkaline earth metal carbonates, alkaline earth metal bicarbonates or a combination thereof. In an embodiment, an acidic material may include acetic acid, adipic acid, ascorbic acid, butyric acid, citric acid, formic acid, fumaric acid, glyconic acid, lactic acid, phosphoric acid, malic acid, oxalic acid, succinic acid, tartaric acid or a combination thereof. Examples of "tingling" type sensates include those disclosed in U.S. Patent Nos. 6,780,443, 6,159,509, 5,545,424, and 5,407,665.

A sweet taste can come from flavor modulators or potentiators and/or from flavorants as well as from sweeteners. Flavor potentiators can consist of materials that intensify, supplement, modify or enhance the taste or aroma perception of an original material without introducing a characteristic taste or aroma perception of their own. Flavor modulators can impart a characteristic of their own that complements or negates a characteristic of another component. In an embodiment, flavor modulators or potentiators are designed to intensify, supplement, modify, or enhance the perception of flavor, sweetness, tartness, umami, kokumi, saltiness or a combination thereof can be included. Thus, the addition of flavor modulators or potentiators can impact the overall taste of the chewing gum. For example, flavors can be compounded to have additional sweet notes by the inclusion of flavor modulators or potentiators, such as vanilla, vanillin, ethyl maltol, furfual, ethyl propionate, lactones, or a combination thereof.

Exemplary flavor modulators or potentiators include monoammonium glycyrrhizinate, licorice glycyrrhizinates, citrus aurantium, alapyridaine, alapyridaine (N-(1-carboxyethyl)-6-(hydroxymethyl)pyridinium-3-ol) inner salt, miraculin, curculin, strogin, mabinlin, gymnemic acid, cynarin, glupyridaine, pyridinium-betain compounds, neotame, thaumatin, neohesperidin dihydrochalcone, tagatose, trehalose, maltol, ethyl maltol, vanilla extract, vanilla oleoresin, vanillin, sugar beet extract (alcoholic extract), sugarcane leaf essence (alcoholic extract), compounds that respond to G-protein coupled receptors (T2Rs and T1Rs), or a combination thereof. In an embodiment, sugar acids, sodium chloride, potassium chloride, sodium acid sulfate, or a combination thereof are used. In an embodiment, glutamates such as monosodium glutamate, monopotassium glutamate, hydrolyzed vegetable protein, hydrolyzed animal protein, yeast extract, or a combination thereof are included. Further examples include adenosine monophosphate (AMP), glutathione, and nucleotides such as inosine monophosphate, disodium inosinate, xanthosine monophosphate, guanylate monophosphate, or a combination thereof. Further examples of flavor potentiator compositions that impart kokumi are also included in U.S. Patent No. 5,679,397 to Kuroda et al.

The amount of flavor modulators, flavor potentiators, and flavorants used herein can be a matter of preference subject to such factors as the type of final product composition, the individual flavor, and the strength of flavor desired. Thus, the amount of flavoring can be varied in order to obtain the result desired in the final product and such variations are within the capabilities of those skilled in the art without the need for undue experimentation.

Exemplary functional ingredients for use in the flavor pre-blend include a breath freshener, a dental care component, an active, an herbal, an effervescing system, an appetite suppressor, a vitamin, a micronutrient, a mouth moistening component, a throat care component, an energy boosting agent, a concentration boosting agent, or a combination thereof.

The flavor pre-blend may comprise a high intensity sweetener. A "high intensity sweetener" as used herein means agents having a sweetness greater than the sweetness of sucrose. In an embodiment, a high intensity sweetener has a sweetness that is at least 100 times that of sugar (sucrose) on a per weight basis, specifically at least 500 times that of sugar on a per weight basis. In an embodiment the high intensity sweetener is at least 1,000 times that of sugar on a per weight basis, more specifically at least 5,000 times that of sugar on a per weight basis. The high intensity sweetener can be selected from a wide range of materials, including water-soluble sweeteners, water-soluble artificial sweeteners, water-soluble sweeteners derived from naturally occurring water-soluble sweeteners, dipeptide based sweeteners, and protein based sweeteners. Combinations comprising one or more sweeteners or one or more of the foregoing types of sweeteners can be used. Without being limited to particular sweeteners, representative categories and examples include:
water-soluble sweetening agents such as dihydrochalcones, monellin, steviosides, rebaudiosides, glycyrrhizin, dihydroflavenol, monatin, and L-aminodicarboxylic acid aminoalkenoic acid ester amides, such as those disclosed in U.S. Pat. No. 4,619,834, or a combination thereof;
water-soluble artificial sweeteners such as soluble saccharin salts, i.e., sodium or calcium saccharin salts, cyclamate salts, acesulfame salts, such as the sodium, ammonium or calcium salt of 3,4-dihydro-6-methyl-1,2,3-oxathiazine-4-one-2,2-dioxide, the potassium salt of 3,4-dihydro-6-methyl-1,2,3-oxathiazine-4-one-2,2-dioxide (Acesulfame-K), the free acid form of saccharin, or a combination thereof; dipeptide based sweeteners, for example the L-aspartic acid derived sweeteners such as L-aspartyl-L-phenylalanine methyl ester (Aspartame) and materials described in U.S. Pat. No. 3,492,131, L-alpha-aspartyl-N-(2,2,4,4-tetramethyl-3-thietanyl)-D-alaninamide hydrate (Alitame), methyl esters of L-aspartyl-L-phenylglycerine and L-aspartyl-L-2,5-dihydrophenyl-glycine, L-aspartyl-2,5-dihydro-L-phenylalanine; L-aspartyl-L-(1-cyclohexen)-alanine, neotame, or a combination thereof;
water-soluble sweeteners derived from naturally occurring water-soluble sweeteners, such as steviosides and stevia derived compounds such as but not limited to steviol glycosides such as rebaudiocides including rebaudiocide A, and the like, lo han quo and lo han quo derived compounds such as iso-mogroside V and the like, chlorinated derivatives of ordinary sugar (sucrose), e.g., chlorodeoxysugar derivatives such as derivatives of chlorodeoxysucrose or chlorodeoxygalactosucrose, known, for example, under the product designation of Sucralose; examples of chlorodeoxysucrose and chlorodeoxygalactosucrose derivatives include but are not limited to: 1-chloro-1'-deoxysucrose; 4-chloro-4-deoxy-alpha-D-galactopyranosyl-alpha-D-fructofuranoside, or 4-chloro-4-deoxygalactosucrose; 4-chloro-4-deoxy-alpha-D-galactopyranosyl-1-chloro-1-deoxy-beta-D-fructo-furanoside, or 4,1'-dichloro-4,1'-dideoxygalactosucrose; 1',6'-dichlorol',6'-dideoxysucrose; 4-chloro-4-deoxy-alpha-D-galactopyranosyl-1,6-dichloro-1,6-dideoxy-beta-D- fructofuranoside, or 4,1',6'-trichloro-4,1',6'-trideoxygalactosucrose; 4,6-dichloro-4,6-dideoxy-alpha-D-galactopyranosyl-6-chloro-6-deoxy-beta-D- fructofuranoside, or 4,6,6'-trichloro-4,6,6'-trideoxygalactosucrose; 6,1',6'-trichloro-6,1',6'-trideoxysucrose; 4,6-dichloro-4,6-dideoxy-alpha-D-galacto-pyranosyl-1,6-dichloro-1,6-dideox y-beta-D-fructofuranoside, or 4,6,1',6'-tetrachloro4,6,1',6'-tetradeoxygalacto-sucrose; 4,6,1',6'-tetradeoxy-sucrose, or a combination thereof;
protein based sweeteners such as thaumaoccous danielli, talin, or a combination thereof; and
amino acid based sweeteners.

The flavor pre-blend may optionally further comprise a color. Coloring agents (colors, colorants, colorings) can be used in amounts effective to produce a desired color for the flavor pre-blend and ultimately the chewing gum. Suitable coloring agents include pigments, which can be incorporated in amounts up to about 6 wt% based on the total weight of the chewing gum. For example, titanium dioxide can be incorporated in amounts up to about 2 wt%, and specifically less than about 1 wt% based on the total weight of the chewing gum. Suitable coloring agents also include natural food colors and dyes suitable for food, drug, and cosmetic applications. Suitable colors include annatto extract (E160b), bixin, norbixin, astaxanthin, dehydrated beets (beet powder), beetroot red/betanin (E162), ultramarine blue, canthaxanthin (E161g), cryptoxanthin (E161c), rubixanthin (E161d), violanxanthin (E161e), rhodoxanthin (E161f), caramel (E150(a-d)), β-apo-8'-carotenal (E160e), β-carotene (E160a), alpha carotene, gamma carotene, ethyl ester of beta-apo-8 carotenal (E160f), flavoxanthin (E161a), lutein (E161b), cochineal extract (E120), carmine (E132), carmoisine/azorubine (E122), sodium copper chlorophyllin (E141), chlorophyll (E140), toasted partially defatted cooked cottonseed flour, ferrous gluconate, ferrous lactate, grape color extract, grape skin extract (enocianina), anthocyanins (E163), haematococcus algae meal, synthetic iron oxide, iron oxides and hydroxides (E172), fruit juice, vegetable juice, dried algae meal, tagetes (Aztec marigold) meal and extract, carrot oil, corn endosperm oil, paprika, paprika oleoresin, phaffia yeast, riboflavin (E101), saffron, titanium dioxide, turmeric (E100), turmeric oleoresin, amaranth (E123), capsanthin/capsorbin (E160c), lycopene (E160d), FD&C blue #1, FD&C blue #2, FD&C green #3, FD&C red #3, FD&C red #40, FD&C yellow #5 and FD&C yellow #6, tartrazine (E102), quinoline yellow (E104), sunset yellow (E110), ponceau (E124), erythrosine (E127), patent blue V (E131), titanium dioxide (E171), aluminium (E173), silver (E174), gold (E175), pigment rubine/lithol rubine BK (E180), calcium carbonate (E170), carbon black (E153), black PN/brilliant black BN (E151), green S/acid brilliant green BS (E142), or a combination thereof. In an embodiment, certified colors can include FD&C aluminum lakes, or a combination thereof. A full recitation of all FD& C colorants and their corresponding chemical structures may be found in the Kirk-Othmer Encyclopedia of Chemical Technology, 4th Edition, in volume 1 at pages 492-494.

Coloring agents can also include food grade glitter which can be incorporated into the flavor pre-blend. The edible glitter can include a food grade colorant and a carrier such as a sugar, a sugar alcohol, a disaccharide, a polysaccharide, a hydrocolloid material, or a combination thereof. Exemplary glitter includes the commercially available Edible Glitter^{™} from Watson Inc. of West Haven, CT.

The coloring agent can include food grade pearlescent pigments prepared from mica optionally coated with titanium dioxide, iron oxide, and the like.

In an embodiment, flavor pre-blend does not comprise added water. As used herein "added water" means water added as a discrete ingredient. Added water excludes the water present in the saccharide or sugar alcohol syrups. In an embodiment, the flavor pre-blend has a moisture content of about 5 to about 10 wt% of the total flavor pre-blend, specifically about 6 to about 9, more specifically about 7 to about 8.5, and yet more specifically about 7.5 to about 8.

In an embodiment, the ratio of hydrophilic ingredients (e.g. sugar alcohol/saccharide syrup, particulate sugar alcohol/saccharide, humectant, hydrocolloid, food acid, color, etc.) to hydrophobic ingredients (fat, emulsifier, flavor, etc.) is about 9:1, specifically about 8.5:1, yet more specifically about 8:1, and still yet more specifically about 7.5:1. As more lipophilic matter is added to the flavor pre-blend, the HLB of the emulsifier can be selected to improve stability of the blend.

It has been determined that the flavor pre-blend can be formed having improved stability by choice of blend ingredients. In an embodiment, stability means the hydrophilic and hydrophobic portions of the flavor pre-blend separates less than 10 wt% (10% flavor separation/90% absorbed) upon standing at room temperature (∼20-25°C) for greater than 24 hours, specifically greater than 48 hours, more specifically greater than 168 hours, excluding sedimentation. Stability can be determined by various techniques in the art, including visual inspection of the separate layers of hydrophilic and hydrophobic components versus a homogenous blend, viscosity, sedimentation, and the like.

In an embodiment, the flavor pre-blend is kinetically stable meaning the blend will not separate into components, i.e. no phase separation of lipophilic and hydrophilic components, no creaming, and no sedimentation, during processing or in the product during typical shelf life. Kinetic stability can be determined by a centrifugation test of the flavor pre-blend at select temperature, time, and relative centrifugal force ("g-force").

In an embodiment, a stable flavor pre-blend exhibits less than 10% phase separation determined by visual inspection after centrifuging the flavor pre-blend at 239 g-force and 25°C for 20 minutes. As used herein, "phase separation" when used to describe a stable flavor pre-blend that exhibits less than 10% phase separation as determined by visual inspection after centrifuging the flavor pre-blend means the separation of hydrophilic and hydrophobic components such as immiscible liquids and the like. This phase separation is not intended to include sedimentation of solids from the flavor pre-blend exhibited after centrifugation.

In another embodiment, a stable flavor pre-blend exhibits less than 10% phase separation determined by visual inspection after centrifuging the flavor pre-blend at 1699 g-force and 25°C for 30 minutes.

Kinetic stability of a flavor pre-blend can also be determined using a photocentrifuge (e.g. LUMiSizer® dispersion analyzer by L.U.M. GmbH of Berlin Germany) at a select temperature, time, and relative centrifugal force. A photocentrifuge measures the intensity of transmitted light as a function of time and position over the entire length of a sample simultaneously. This characterization method is described in D. Frömer and D. Lerche, "An experimental approach to the study of the sedimentation of dispersed particles in a centrifugal field" Archive of Applied Mechanics, Volume 72, Numbers 2-3, 85-95. The light source sends out parallel NIR-light which is passed through the sample vials lying on the centrifuge rotor. The distribution of local transmission is recorded over the entire sample length by the CCD-line detector. The vials containing the samples are centrifuged at constant speed, thus accelerating the sedimentation process. Based on these space- and time-resolved light transmission profiles, data relating to the settling characteristics of the sample can be calculated. The data can be used to quantify the rate of free oil formation as a measure of flavor pre-blend stability.

In an embodiment, the flavor pre-blend is stable, i.e. exhibits no phase separation, when tested using a photocentrifuge dispersion analyzer at 25°C, about 100 to about 1000 g-force for 3 hours.

In an embodiment, a stable flavor pre-blend exhibits a lipophilic phase having an average diameter of less than 100 micrometers, specifically less than 30 micrometers, more specifically less than 20 micrometers, yet more specifically less than 10 micrometers, and still yet more specifically less than 5 micrometers when analyzed by light microscopy.

In an embodiment, a stable flavor pre-blend has a viscosity of about 3950 to about 52000 centipoise (cP), specifically about 8000 to about 40000, more specifically about 12000 to about 30000, and yet more specifically about 16000 to about 20000, measured using a Brookfield Viscometer, at a temperature of 50°C, nozzle #27, 10 rpm, readings taken after 2 minutes. Generally, the higher the viscosity of the flavor pre-blend, the more stable it is.

It has been found that certain particulate sugar alcohols provide a more stable flavor pre-blend than other particulate sugar alcohols. Generally isomalt and mannitol result in a more stable flavor pre-blend as they provided increased viscosity while maltitol provides less stable blends. When the same particulate sugar alcohols are used in a flavor pre-blend containing acid, the trend in stability of the flavor pre-blend is mannitol and isomalt (ST-PF or GS) each forming the most stable blends, then xylitol, erythritol, and sorbitol each forming stable blends albeit generally less stable than mannitol or isomalt, and maltitol forming the least stable blends out of this select group of sugar alcohols.

The pre-blend can have a pH of about 2 to about 9, specifically 3 to about 8, more specifically 4 to about 7, and still yet more specifically about 5 to about 6 as measured using a standardized pH meter measured when the flavor pre-blend temperature is at 50°C. In an embodiment, a stable flavor pre-blend has a pH of about 2 to about 6, specifically about 4 to about 5.5, and more specifically about 4.5 to about 5.2, and still yet more specifically about 4.8 to about 5.0 as measured using a standardized pH meter measured when the flavor pre-blend temperature is at 50°C. It has been determined that the flavor pre-blend is more stable as the pH approaches 7.

In an embodiment, a stable flavor pre-blend comprises particulate mannitol, fruit flavor, and a pH of 2.5 to 2.73, wherein the flavor pre-blend comprises particulate mannitol in an amount that meets the following equation: Flavor Separation(%) = 28.308 - 0.675 * mannitol(%) + 0.002 * mannitol(%) squared, wherein Flavor Separation (%) is </=10% by weight of the flavor pre-blend.

In an embodiment, a stable flavor pre-blend comprises particulate mannitol, mint flavor, and a pH of 3.71 to 5.12, wherein the flavor pre-blend comprises particulate mannitol in an amount that meets the following equation: Flavor Separation(%) = 32.865 - 2.238 * mannitol(%) + 0.037 * mannitol(%) squared, wherein Flavor Separation (%) is </=10% by weight of the flavor pre-blend.

In an embodiment, a stable flavor pre-blend comprises particulate mannitol, fruit flavor, and a pH of 3.54 to 3.89, wherein the flavor pre-blend comprises particulate mannitol in an amount that meets the following equation: Flavor Separation(%) = -45.459 + 3.148 * mannitol(%) - 0.047 * mannitol(%) squared, wherein Flavor Separation (%) is </=10% by weight of the flavor pre-blend.

In an embodiment, a stable flavor pre-blend comprises particulate maltitol, fruit flavor, and a pH of 3.38 to 4.27, wherein the flavor pre-blend comprises particulate maltitol in an amount that meets the following equation: Flavor Separation(%) = 247.613 - 15.625 * maltitol(%) + 0.249 * maltitol(%) squared, wherein Flavor Separation (%) is </=10% by weight of the flavor pre-blend.

In an embodiment, a stable flavor pre-blend comprises particulate xylitol, fruit flavor, and a pH of 2.2 to 3.07, wherein the flavor pre-blend comprises particulate xylitol in an amount that meets the following equation: Flavor Separation(%) = 0.969 + 1.127 * xylitol(%) - 0.025 * xylitol(%) squared, wherein Flavor Separation (%) is </=10% by weight of the flavor pre-blend.

In an embodiment, a stable flavor pre-blend comprises particulate xylitol, mint flavor, and a pH of 3.94 to 5.44, wherein the flavor pre-blend comprises particulate xylitol in an amount that meets the following equation: Flavor Separation(%) = 40.062 - 3.146 * xylitol(%) + 0.059 * xylitol(%) squared, wherein Flavor Separation (%) is </=10% by weight of the flavor pre-blend.

In an embodiment, a stable flavor pre-blend comprises particulate xylitol, fruit flavor, and a pH of 3.42 to 4.05, wherein the flavor pre-blend comprises particulate xylitol in an amount that meets the following equation: Flavor Separation(%) = 32.283 - 2.535 * xylitol(%) + 0.048 * xylitol(%) squared, wherein Flavor Separation (%) is </=10% by weight of the flavor pre-blend.

In an embodiment, the hydrophilic ingredients form a discrete phase and the lipophilic ingredients form a continuous phase.

### Methods of making the flavor pre-blend

The flavor pre-blend is typically prepared by blending the flavor pre-blend ingredients together with optional gentle heating or high shear to effect dissolution of the blend ingredients. In an embodiment, the flavor pre-blend ingredients are combined in no particular order. The flavor pre-blend is not cooked or boiled nor is heat, vacuum, and/or coevaporation used to drive off or remove water from the blend during the process to make the blend. In an embodiment, external heat is not added. In another embodiment, high shear is used to prepare the flavor pre-blend. In another embodiment, the flavor pre-blend is prepared by micronizing.

In an embodiment, the flavor pre-blend is prepared by melting the fat with the emulsifier with mixing. The temperature used to melt the fat with the emulsifier is less than or equal to 85°C, specifically about 40 to about 80, more specifically about 50 to about 75, and yet more specifically about 60 to about 70°C. The sugar alcohol syrup or saccharide syrup is mixed with a particulate sugar alcohol or particulate saccharide, optionally with a humectant or hydrocolloid, to form a sweetener mixture where the particulate sugar alcohol/saccharide is dissolved, partially dissolved and wetted in the syrup. To hasten the dissolution of the particulate sugar alcohol/saccharide, the ingredients can be warmed to less than or equal to 85°C, specifically about 40 to about 80°C, more specifically about 50 to about 75°C, and yet more specifically about 60 to about 70°C. The melted fat/emulsifier is added to the sweetener mixture and mixed until a homogeneous mixture is formed. Any type of equipment can be used to prepare the flavor pre-blend, specifically to form a homogeneous mixture of the flavor pre-blend ingredients. Exemplary equipment includes propeller mixers and homogenizers, and the like. The homogeneous mixture is then cooled to about 35 to about 60°C, specifically about 40 to about 55°C and flavorant and other optional ingredients (e.g. food acid, sensate, etc.) are added to the homogeneous mixture with mixing to form the flavor pre-blend.

In an embodiment, a premix of sugar alcohol syrup or saccharide syrup is mixed with a hydrocolloid or humectant to about 50 to about 85°C to form a homogeneous mixture, then a particulate sugar alcohol or particulate saccharide, fat, and emulsifier are added with mixing, finally flavor and optional acid and/or sensates are added with mixing to form the flavor pre-blend.

In an embodiment, the sugar alcohol syrup or saccharide syrup is mixed with the particulate sugar alcohol or particulate saccharide at low temperatures, such as at or around room temperature, to form a homogeneous mixture. Optionally, extra shear can be applied in the mixing process to force dissolution.

In an embodiment, a fat is melted and the flavorant is added to form a preblend. The emulsifier can be added to the hydrophilic system (sugar alcohol/saccharide syrup, particulate sugar alcohol/saccharide, and optional hydrophilic ingredients such as humectant), then the fat/flavorant preblend can be added. Alternatively, the emulsifier can be added to the fat/flavorant to form a preblend which is then added to the hydrophilic system.

The preparation of the flavor pre-blend is conducted entirely at temperatures below the boiling point of the hydrophilic portion, specifically less than or equal to 85 °C, specifically less than or equal to about 80 °C, and still more specifically less than or equal to about 75 °C.

### Chewing gum composition

In general the chewing gum comprises a gum base; an optional bulk sweetener; and a flavor pre-blend as described above. When used, the bulk sweetener of the chewing gum, independent of the ingredients of the gum base and flavor pre-blend, can be a sugar-based or sugar-free bulk sweetener, specifically sugar-free.

The amount of flavor pre-blend present in the chewing gum composition can be about 1 to about 60 wt% based on the total weight of the chewing gum, specifically about 5 to about 50 wt%, more specifically about 8 to about 40, yet more specifically about 10 to about 30 wt%, and still yet more specifically about 12 to about 25 wt%.

Bulk sugar sweeteners generally include saccharides. Suitable sugar sweeteners include mono-saccharides, di-saccharides and poly-saccharides such as but not limited to, sucrose (sugar), dextrose, maltose, dextrin, xylose, ribose, glucose, mannose, galactose, fructose (levulose), lactose, invert sugar, fructo oligo saccharide syrups, partially hydrolyzed starch, corn syrup solids, such as high fructose corn syrup, or a combination thereof.

In an embodiment, the bulk sweetener comprises a sugar alcohol. The sugar alcohol can be erythritol, galactitol, isomalt, a hydrogenated starch hydrolyzate, lactitol, maltitol, mannitol, polyglycitol, sorbitol, xylitol, and the like, or a combination thereof.

The amount of bulk sweetener, when present, in the chewing gum composition can be about 1 to about 85 wt% based on the total weight of the chewing gum, specifically about 10 to about 75 wt%, more specifically about 15 to about 65 wt%, yet more specifically about 25 to about 55 wt%, and yet more specifically about 35 to about 45 wt% (the forgoing amounts are independent of any bulk sweetener used in the flavor pre-blend).

The chewing gum may further comprise an additional ingredient wherein the additional ingredient is a food acid or salt thereof, a high intensity sweetener, a sensate, a flavorant, a flavor modulator or potentiator, a coloring agent, a functional ingredient, a hydrocolloid, or a combination thereof. The foregoing additional ingredients are in addition to the food acid or salt thereof, high intensity sweetener, sensate, flavorant, flavor modulator or potentiator, coloring agent, and/or functional ingredient which may be present in the flavor pre-blend.

Exemplary additional food acid or salt thereof for use in the chewing gum can include those described above for use in the flavor pre-blend. The additional food acid or salt thereof may be used in free form or in an encapsulated form.

Exemplary additional high intensity sweetener for use in the chewing gum can include those described above for use in the flavor pre-blend. Furthermore, the additional high intensity sweetener can be used in a variety of distinct physical forms, for example those known in the art to provide an initial burst of sweetness and/or a prolonged sensation of sweetness. Without being limited thereto, such physical forms include free forms (e.g., spray dried or powdered), beaded forms, encapsulated forms, or a combination thereof.

Exemplary additional sensate for use in the chewing gum can include those described above for use in the flavor pre-blend. The additional sensate may be used in free form or in an encapsulated form.

Exemplary additional flavorant for use in the chewing gum can be those described above for use in the flavor pre-blend. The flavorant can be used in liquid or solid form. When used in solid (dry) form, suitable drying means such as spray drying the oil can be used. Alternatively, the flavorant can be encapsulated, absorbed onto water soluble materials by means known in the art, for example cellulose, starch, sugar, maltodextrin, gum arabic, and the like. In an embodiment, the flavorant can be used in physical forms effective to provide an initial burst of flavor or a prolonged sensation of flavor.

Exemplary additional flavor modulator or potentiator, additional coloring agent, and additional functional ingredient for use in the chewing gum includes those previously described above for use in the flavor pre-blend.

The amount of additional food acid or salt thereof, additional flavorant, additional sensate, additional coloring agent, additional flavor modulator or potentiator, additional functional agent, or a combination thereof present in the chewing gum can be up to about 5.0 wt% for each ingredient based on the total weight of the chewing gum composition, specifically about 1.0 to about 4.0 wt%, and more specifically about 2.0 to about 3.0 wt%.

The moisture content of the chewing gum composition can be about 0.5 to about 10 wt% based on the total weight of the chewing gum, specifically about 1 to about 8 wt%, yet more specifically about 1.5 to about 5 wt%, and still yet more specifically about 2.5 to about 4 wt%. The water activity of the chewing gum composition can be about 0.1 to about 0.7, specifically about 0.2 to about 0.6, and more specifically, about 0.25 to about 0.5.

The chewing gum may comprise a hydrocolloid as an additional ingredient. Exemplary hydrocolloids include those described above including pectin, gum arabic, acacia gum, alginates, agar, carageenans, guar gum, xanthan gum, locust bean gum, gelatin, gellan gum, galactomannans, tragacanth gum, karaya gum, curdlan, konjac, chitosan, xyloglucan, beta glucan, furcellaran, gum ghatti, tamarin, and bacterial gums; modified natural gums such as propylene glycol alginate, carboxymethyl locust bean gum, and low methoxyl pectin; modified celluloses such as microcrystalline cellulose, carboxymethlcellulose (CMC), methylcellulose (MC), hydroxypropylmethylcellulose (HPCM), and hydroxypropylcellulose (MPC); or a combination thereof.

In an embodiment, the hydrocolloid used as an additional ingredient in the chewing gum is pectin in an unswollen, unhydrated and powder form, which is added directly into a chewing gum composition. The pectin enhances the release of lipophilic ingredients, such as flavors, from chewing gum during mastication.

In an embodiment, the pectin used in the chewing gum is not gelled, hydrated or swollen with a solvent (e.g., water). Rather, it is used in a dry powder form, specifically a free-flowing dry powder form. Furthermore, the powdered pectin is not used as an agglomerating agent or as an encapsulant or coating ingredient. In an embodiment, the pectin is in a dry, powder form, which exhibits a loss on drying of less than or equal to 10.0%. Dry, powder form is intended to mean that the product be pourable without substantial caking, is unswollen and unhydrated.

Suitable powdered pectins are commercially available and include, for example, Genu® Pectin available from CP Kelco, such as Genu® Pectin type USP-L/200 (a high methoxyl pectin; galacturonic acid ≥ 74.0%; methoxy groups ≥ 6.7%; free of standardizing agents such as sucrose, dextrose, or buffer salts; particle size, 0.075 mm ≤ 1.0%; loss on drying, ≤ 10.0%); the pectins available from Pacific Pectin, Inc.; and Grindsted® pectins available from Danisco, including Grindsted® SF, SF Extra, CF, Prime, and USP.

In an embodiment, the unswollen, unhydrated and powder pectin meets the requirements of the United States Pharmacopoeia (USP) monograph for pectin (United States Pharmacopoeia and National Formulary: USP 31).

In an embodiment, the particle size of the powdered pectin is greater than or equal to about 50 micrometers, specifically greater than or equal to about 65 micrometers, more specifically greater than or equal to about 70 micrometers, and still yet more specifically greater than or equal to about 75 micrometers, as determined by sieve analysis. The upper limit of particle size can be less than or equal to about 2000 micrometers, specifically less than or equal to about 1000 micrometers, more specifically less than or equal to about 500 micrometers, and yet more specifically less than or equal to about 250 micrometers, as determined by sieve analysis.

The amount of unswollen and unhydrated pectin added in the form of a powder to a chewing gum composition can be about 0.01 to about 10 wt% of the chewing gum composition based on the weight of the chewing gum composition, specifically about 0.1 to about 7 wt%, more specifically about 0.15 to about 4 wt%, yet more specifically about 0.3 to about 1 wt%, and still yet more specifically about 0.4 to about 0.5 wt%. In an embodiment, the amount of unswollen and unhydrated pectin added in the form of a powder to a chewing gum composition can be about 0.01 to about 1.0 wt% of the chewing gum composition based on the weight of the chewing gum composition, specifically about 0.05 to about 0.7 wt%, more specifically about 0.15 to about 0.6 wt%, yet more specifically about 0.25 to about 0.5 wt%, and still yet more specifically about 0.3 to about 0.4 wt%.

In an embodiment, the chewing gum composition further comprises inclusions. The inclusions can be large particles of sugar alcohol, saccharide, or a confectionery such as a chewy candy, a crunchy candy, a low boiled candy, a hard boiled, a fondant, a caramel, a jelly, a gummy, a nougat, a fruit leather, a nut paste, chocolate, fudge, or a combination thereof. Generally, the inclusion can have an average particle size of about 0.35 to about 5 mm.

### Gum base

The chewing gum further comprises a chewing gum base. In an embodiment, the chewing gum comprises a gum base comprising an elastomer; a fat; an emulsifier; and optionally an additional gum base ingredient, wherein the additional gum base ingredient is a wax, a filler, an antioxidant, or a combination thereof.

As used herein, the term "gum base" refers to water insoluble material(s) and can include, but is not limited to, elastomers, bulking agents, waxes, elastomer solvents, emulsifiers, plasticizers, fillers, or a combination thereof.

The amount of gum base employed will vary greatly depending upon various factors such as the type of base used, the consistency of the chewing gum desired, piece weight, desired bolus size, and the other components used in the composition to make the final chewing gum. In general, the gum base will be present in amounts of about 5 to about 60 wt % based on the total weight of the chewing gum, specifically about 25 to about 50 wt %, more specifically about 30 to about 45 wt%, and yet more specifically about 35 to about 40 wt%.

Exemplary elastomers to be used in the chewing gum base include both natural and synthetic elastomers and rubbers, for example, substances of vegetable origin such as chicle, crown gum, nispero, rosadinha, jelutong, perillo, niger gutta, tunu, balata, gutta-percha, lechi-capsi, sorva, gutta kay, and the like, or a combination thereof. Synthetic elastomers such as butadiene-styrene copolymers, polyisobutylene, isobutyleneisoprene copolymers, polyethylene, a combination thereof, and the like, or a combination thereof are also useful. The gum base can include a non-toxic vinyl polymer, such as polyvinyl acetate and its partial hydrolysate, polyvinyl alcohol, or a combination thereof When utilized, the molecular weight of the vinyl polymer can range from about 3,000 up to and including about 94,000 or higher. Additional useful polymers include: crosslinked polyvinyl pyrrolidone, polymethylmethacrylate; copolymers of lactic acid, polyhydroxyalkanoates, plasticized ethylcellulose, polyvinyl acetatephthalate, or a combination thereof.

Conventional additives can be included in the gum base in effective amounts such as plasticizers or softeners to provide a variety of desirable textures and consistency properties. Because of the low molecular weight of these components, the plasticizers and softeners are able to penetrate the fundamental structure of the gum base making it plastic and less viscous. Suitable plasticizers and softeners include lanolin, palmitic acid, oleic acid, stearic acid, sodium stearate, potassium stearate, glyceryl triacetate, glyceryl lecithin, glyceryl monostearate, propylene glycol monostearate, acetylated monoglyceride, glycerin, or a combination thereof. Some of these ingredients may be added at the time of gum base formation or added later during the production of the chewing gum composition.

Waxes, for example, natural and synthetic waxes, hydrogenated vegetable oils, petroleum waxes such as polyurethane waxes, polyethylene waxes, paraffin waxes, microcrystalline waxes, fatty waxes, sorbitan monostearate, tallow, propylene glycol, and the like, or a combination thereof, can also be incorporated into the gum base to obtain a variety of desirable textures and consistency properties.

When a wax is present in the gum base, it softens the polymeric elastomer mixture and improves the elasticity of the gum base. The waxes employed may have a melting point below about 60° C., and specifically between about 45° C and about 55° C. The low melting wax can be a paraffin wax. The wax can be present in the gum base in an amount of about 6 to about 10 wt%, and specifically about 7 to about 9.5wt% based on the total weight of the gum base.

In addition to the low melting point waxes, waxes having a higher melting point can be used in the gum base in amounts up to about 5wt% based on the total weight of the gum base. Such high melting waxes include beeswax, vegetable wax, candelilla wax, carnuba wax, most petroleum waxes, and the like, or a combination thereof.

The chewing gum or gum base can optionally contain conventional elastomer solvents to aid in softening the elastomer base component, for example trepanned resins such as polymers of alpha-pinene or beta-pinene; methyl, glycerol or pentaerythritol esters of rosins or modified rosins and gums, such as hydrogenated, dimerized or polymerized rosins, or a combination thereof; the pentaerythritol ester of partially hydrogenated wood or gum rosin; the pentaerythritol ester of wood or gum rosin; the glycerol ester of wood rosin; the glycerol ester of partially dimerized wood or gum rosin; the glycerol ester of polymerized wood or gum rosin; the glycerol ester of tall oil rosin; the glycerol ester of wood or gum rosin; the partially hydrogenated wood or gum rosin; the partially hydrogenated methyl ester of wood or rosin; and the like; or a combination thereof. The elastomer solvent can be used in amounts of about 5 to about 75 wt % base on the total weight of the gum base, and specifically about 45 to about 70 wt %.

The gum base can include effective amounts of bulking agents such as mineral adjuvants, which can serve as fillers and textural agents. Suitable mineral adjuvants include calcium carbonate, magnesium carbonate, alumina, aluminum hydroxide, aluminum silicate, talc, tricalcium phosphate, tricalcium phosphate and the like, or a combination thereof. These fillers or adjuvants can be used in the gum base in various amounts. Specifically the amount of filler, when used, can be present in an amount of greater than about 0 to about 60 wt % based on the total weight of the gum base, and more specifically from about 20 to about 30 wt %.

Suitable emulsifiers for use in the gum base include distilled monoglycerides, acetic acid esters of mono and diglycerides, citric acid esters of mono and diglycerides, lactic acid esters of mono and diglycerides, mono and diglycerides, polyglycerol esters of fatty acids, ceteareth-20, polyglycerol polyricinoleate, propylene glycol esters of fatty acids, polyglyceryl laurate, glyceryl cocoate, gum arabic, acacia gum, sorbitan monostearates, sorbitan tristearates, sorbitan monolaurate, sorbitan monooleate, sodium stearoyl lactylates, calcium stearoyl lactylates, diacetyl tartaric acid esters of mono- and diglycerides, glyceryl tricaprylate-caprate / medium chain triglycerides, glyceryl dioleate, glyceryl oleate, glyceryl lacto esters of fatty acids, glyceryl lacto palmitate, glyceryl stearate, glyceryl laurate, glycerly dilaurate, glyceryl monoricinoleate, triglyceryl monostearate, hexaglyceryl distearate, decaglyceryl monostearate, decaglyceryl dipalmitate, decaglyceryl monooleate, polyglyceryl 10 hexaoleate, medium chain triglycerides, caprylic/capric triglyceride, propylene glycol monostearate, polysorbate 20, polysorbate 40, polysorbate 60, polysorbate 80, polysorbate 65, hexylglyceryl distearate, triglyceryl monostearate, tweens, spans, stearoyl lactylates, calcium stearoyl-2-lactylate, sodium stearoyl-2-lactylate lecithin, ammonium phosphatide, sucrose esters of fatty acids, sucroglycerides, propane-1,2-diol esters of fatty acids, or a combination thereof.

### Methods of making the chewing gum composition

The chewing gum composition can be prepared using standard techniques and equipment. In an embodiment, the flavor pre-blend is added at the end of the chewing gum ingredients mixing process and mixed enough to form a homogenous mass comprising microscopic regions of flavor pre-blends within the chewing gum matrix. However, the processes described herein are not necessarily limited to addition of the flavor pre-blend at the end of the mixing process and it can be added at any desired stage of the chewing gum manufacturing process. The chewing gum can contain a discrete phase of flavor pre-blend containing fat and flavorant dispersed in a continuous chewing gum phase.

In one exemplary process, a gum base is heated to a temperature sufficiently high to soften the base without adversely affecting the physical and chemical make up of the base, which will vary depending upon the composition of the gum base used, and is readily determined by those skilled in the art without undue experimentation. For example, the gum base can be conventionally melted to about 60°C to about 160°C, or melted to about 150°C to about 175°C, for a period of time sufficient to render the base molten, e.g., about thirty minutes, just prior to being admixed incrementally with the remaining ingredients of the base such as the plasticizer, fillers, and softener to plasticize the blend as well as to modulate the hardness, viscoelasticity and formability of the base, the chewing gum ingredients are next blended with the gum base, with the flavor pre-blend being added at the end of the process. Mixing is continued until a uniform or homogeneous mixture of the chewing gum composition is obtained. Thereafter the chewing gum composition can be formed into a desired shape.

In another exemplary process, chewing gum ingredients are mixed with gum base, with the flavor pre-blend being added at the end of the process. Mixing is continued until a uniform or homogeneous mixture of the chewing gum composition is obtained. Thereafter the chewing gum composition can be formed into a desired shape. Within this embodiment, the starting gum base can be in an unmolten form, such as in the form of a pelletized gum base, that can be softened at 40 to 50°C rather than melting at higher temperatures as in the prior embodiment.

The chewing gum composition can be prepared using a batch method or a continuous method or a combination thereof.

The processing equipment used to prepare the chewing gum composition can be monitored and/or controlled automatically. For example, the processing equipment can be coupled to a computerized system which allows the user to input certain and/or all of the operational parameters, including, e.g., feeding of the ingredients, mixing or processing the ingredients, conveying the ingredients. In an embodiment, the system can be coupled to batch processing equipment, continuous processing equipment, or both if both types are used. In an embodiment, changing the input parameters used to control the processing can create changes in the final composition, e.g., ingredient amount and type, etc. For example, the ingredient and/or processing temperatures and/or feed rates of the ingredients can be monitored and fed back to a central unit so that the operator can adjust as needed and/or in which the system can automatically adjust. After the ingredients have been mixed, the formation, processing into a particular shape and/or form can also be monitored and fed back for the operators input and/or automatic adjustment. An audible and/or visual alarm can also be implemented to signal the operator when the system detects a problem and/or a variation in one or more processing parameters.

The chewing gum composition can be formed using a variety of processes including an extrusion process, a coextrusion process, a triple extrusion process, a laminate process, a molding process, a compression process, a rolling and scoring process, a chain die process, a rotary die process, or a cut and wrap process.

The chewing gum composition can be shaped using devices and techniques that are known in the confectionery art. For example, the chewing gum composition can be shaped by hand, with molds and/or dies, cutters, pullers, stretchers, extruders and the like. Non-limiting examples of molds that can be used include, flexible (e.g., made of silicone), metal, plastic, glass, and the packaging itself (e.g., by placing the unshaped mass into the pack), such as a blister pack. Combinations of these may also be employed.

The chewing gum composition can be prepared into discrete units in the form of slabs, sticks, pellets, balls, cubes, and the like. The formation into discrete units can be achieved using a chain die, or rolling and scoring process.

There is no limitation to the size of the discrete unit of the chewing gum composition. In an embodiment, each discrete unit is about 1.5 to about 3.0 grams, specifically about 1.8 to about 2.7 grams, and more specifically about 2.3 to about 2.5 grams as a pellet, slab, or stick format.

The unit of chewing gum can have a thickness of about 2 to about 6 mm thick, specifically about 2.8 to about 5 mm thick, and more specifically about 3 to about 4 mm thick.

The chewing gum can be packaged using techniques and equipment known in the art. For example gum stick packaging, packaging tins, blister trays, and the like can be used. In an embodiment is a packaged product that includes a chewing gum wherein the package has indicia on an outer surface that is indicative of the product contained in the package.

### Other formats

In an embodiment, the chewing gum composition is formulated into pieces and surface treated using materials and techniques known in the art. Exemplary surface treatments include panned coating (hard or soft), particulate coating (e.g., sanding, dusting, etc.), and treatment with oil optionally including flavors.

As used herein, "soft panned" coatings refer to coatings that provide a soft bite as measured by sensory testing methods. As used herein, "hard panned" coatings refer to coatings that provide a hard or crunchy or crispy bite as measured by sensory testing methods. The chewing gum products may be tested by a fully-trained descriptive analysis panel using various methods, for example, the analysis may be conducted using the Spectrum™ method. This method incorporates a trained panel of individuals who measure chewing gum products for several characteristics, providing a rating for each characteristic. The hardness of the coating may be measured on any scale desired. For example, hardness may be on a ten point scale from 1-10, where a rating of 1 is the softest and a rating of 10 is the hardest. Typically, soft panned coatings have a hardness rating below the rating of hard panned coatings. For example, in an embodiment, a soft panned coated product may have a hardness sensory rating of about 3-4, while hard panned coated product may have a hardness sensory rating of about 7-8.

The uncoated chewing gum pieces (alternatively described as "cores") can be panned according to conventional processes to create a soft- or hard- panned layers. Conventional techniques for hard and soft panning technology are described in the following: "Sugarless Hard Panning", Robert Boutin, et al., The Manufacturing Confectioner, pp. 35-42, November 2004; "Panning Technology, An Overview:", John Flanyak, The Manufacturing Confectioner, pp. 65-74, January 1998; "Crystallization and Drying During Hard Panning", Richard W, Hartel, The Manufacturing Confectioner, pp. 51-57, February, 1995; "Soft Panning", Michael J. Lynch, The Manufacturing Confectioner, pp. 47-50, November 1987; and "Panning - The Specialist's Specialty", Robert D. Walter, Candy & Snack Industry, pp. 43-51, December 1974.

The coating composition at least partially surrounding the chewing gum core generally comprises a bulk sweetener and gum arabic, starch or a combination of gum arabic and starch. The coating composition optionally may further comprise an additional ingredient such as a color, a flavorant, a sensate, a food acid or salt thereof, a flavor modulator or potentiator, a functional ingredient, or a combination thereof. Each of these ingredients has been previously described herein. In an embodiment, the additional ingredient is encapsulated or unencapsulated (or "free"). If more than one ingredient is used, the coating may contain any combination of encapsulated or unencapsulated ingredients.

As used herein, the terms "coating" or "coating region" are used to refer to a region of a material that at least partially surrounds the chewing gum core.

As used herein, the terms "surround", "surrounding", "at least partially surrounding", and the like are not limited to encircling. These terms may refer to enclosing or confining on all sides, encircling or enveloping, and are not limited to symmetrical or identical thicknesses.

As used herein, the term "substantially covers" and "substantially surrounding" refers to coating compositions that cover more than 50% of the surface area of a chewing gum core. In an embodiment, "substantially covers" may refer to coverage that is more than 55%, more than 60%, more than 65%, more than 70%, more than 75%, more than 80%, more than 85%, more than 90%, more than 95%, more than 98%, and more than 99% of the surface of a chewing gum core.

The particulate coating can include a powdered sugar, a particulate sugar alcohol, and the like. The particulate layer can be applied by any method known in the art including dusting where electrostatic forces adhere the particulate layer to the chewing gum core or sanding where a binder such as water or syrup helps to adhere the particulates to the chewing gum core.

The coating may be present in an amount from about 2 to about 60wt%, specifically about 10 to about 45wt%, and yet more specifically about 25 to about 30wt% based on the total weight of the coated chewing gum.

The chewing gum may further comprise a center-fill including liquid, semisolid, solid (including powder), center-fill material. The center-filled chewing gum may be formed by any technique known in the art for forming center-filled confectionery. The method may generally include first extruding a center-filled rope of a chewing gum composition and passing the rope through a sizing mechanism including a series of pairs of pulley-shaped roller members. The roller members "size" the rope or strand of gum material such that it leaves the series of rollers with the desired size and shape for entering a piece-forming mechanism. The flavor pre-blend is not a center-fill component of the chewing gum composition since it is blended with gum base as discussed above.

The chewing gum may be prepared in the form of a layered product comprising a layer of chewing gum composition comprising the flavor pre-blend, or multiple layers of chewing gum composition comprising the flavor pre-blend. In a multilayered product, at least one layer comprises a chewing gum composition comprising a flavor pre-blend while the remaining layers can be an additional chewing gum composition or a confectionery. The layered product can be in any format including a sandwich format with each layer visible on at least 2 sides, specifically at least 4 sides of the product, jelly roll format, and the like. The layered product can be prepared by a coextrusion process, a triple extrusion process, a laminate process, a molding process, a compression process, a rolling and scoring process, a chain die process, a rotary die process, or a cut and wrap process.

The chewing gum may further comprise printed indicia on the surface, either as abstract images (e.g., swirls, lines, dots, and the like), concrete images (e.g. flowers, animals, automobiles, and the like), letters, text, logos, characters, words, symbols, pictures, or a combination thereof, and the like, using colored inks. The printed indicia can be applied using either contact or non-contact techniques. Exemplary contact techniques include gravure printing. Exemplary non-contact techniques include ink-jet printing. In one embodiment, the chewing gum has printed indicia on two or more surfaces.

There is no limitation on the type of color used to prepare the printed indicia as long as it is food safe. More than one color can be used. Additionally, the color of the chewing gum composition can be matched to the color of the printed indicia for a color on color effect. The color of the chewing gum composition and the printed indicia can be selected to provide increased contrast. Vibrant colors can be selected for consumer appeal. The color of the printed indicia can also be matched with the flavor of the chewing gum composition, for example a green printed image for a spearmint chewing gum, a blue printed image for a peppermint chewing gum, a red printed image for a red fruit flavored chewing gum, and the like.

The chewing gum comprising printed indicia on the surface can be a chewing gum product in the form of a sheet, discrete chewing gum piece, or a set of chewing gum pieces. The set of chewing gum pieces, when placed adjacent to one another, can comprise printed indicia that make up an overall image or pattern across the collection of pieces.

In an embodiment, the printed indicia comprises flavor, a sweetener, a food acid or salt thereof, a high intensity sweetener, a sensate, or a combination thereof.

### Sensory evaluation of chew texture and flavor

When the chewing gum composition is chewed, the flavor pre-blend provides an initial burst of flavor at the early stage of the chew time while at the same time providing a "just right" soft chew from the initial stage of the chew time and for the majority of the duration of the chew time. The flavor burst and chew texture experienced by the consumer can be measured using sensory evaluation techniques. Sensory evaluation techniques are described in texts such as Sensory Evaluation of Food: Principles & Practices, by Harry T. Lawless and Hildegarde Heymann.

Suitable sensory evaluation techniques include quantitative descriptive analysis (QDA). To conduct QDA testing, a panel of respondents may be assembled. Attribute terms for evaluation of samples are selected.

Normally, ballot development and respondent training is carried out initially. Descriptive terms are developed for major sensory attribute categories. Exemplary attribute qualities can include aroma, flavor, texture, aftertaste, sweetness, and the like or a combination thereof. Attributes are quantified with a linear intensity scale of from, e.g. 0 to 10; where 0 indicates that the attribute is not detected and 10 indicates the attribute is extremely strong. Overall quality rating may be measured with a linear scale of from, e.g. 1 to 10 where less than 6 is considered "poor," 6 to 7 is "fair," and 8 to 10 is "good."

Physical reference standards are determined by a panel consensus so that proper descriptive language may be developed. Panelists may be trained in evaluating certain samples until a consensus is attained.

Overall quality ratings and quantified intensity ratings may be statistically analyzed with such programs as Minitab ver. 12 or SAS ver. 6.11. Descriptive statistical measures may be calculated for all attributes. Analysis of variance may be performed on each attribute using a randomized block design for balanced data with panelists as repeated measures as described by Ott, "Analysis of variance for some standard experimental designs," pp. 844-856 in An Introduction to Statistical Methods and Data Analysis. Wadsworth Publishing. Belmont, Calif. Where F-test indicates a significant difference between treatment means, Tukey paired comparisons and orthogonal comparisons may be used to determine where the means are different. Significance of differences may be defined as P less than 0.05. Principal components analysis (PCA) may be applied with the factor analysis described by Lawless and Heymann, 1998, pp. 606-608 in Sensory Evaluation of Food: Principles and Practices. Chapman & Hall, New York, 1998. PCA may be applied to the attributes. Attributes may be omitted if the values are consistently low indicating that the attribute is not often present, if the attribute has a high standard deviation or if the attribute is highly correlated to another attribute. Kaiser's criterion may be applied (eigenvalue greater than 1) to determine the number of final factors from the initial ones as described by Massart et al., "Principal components and factor analysis," pp. 339- 369 in Chemometrics: A Textbook. Elsevier, Amsterdam, 1988. To facilitate the interpretation of results, the factors may be orthogonally rotated leading to uncorrelated factors following the Varimax method described by Massart et al., *supra*.

In an embodiment, the texture of the chewing gum composition has a softness rating on a line scale of 1 to 10 as measured by QDA. As used herein, the term "softness" refers to a quantitative descriptive analysis metric that is an integrated term measuring texture attributes that contribute to a soft chew texture.

In addition to sensory methods for measuring texture, specifically softness, of the chewing gum composition as described above, softness can also be measured by conventional analytical techniques.

The chewing gum composition exhibits an early flavor release when consumed. The early flavor release can be measured using sensory evaluation techniques such as those described above including quantitative descriptive analysis.

Various sensory properties include Initial Burst of Flavor (immediacy of flavor perception), Initial Sweetness, Soft Texture, Long Lasting Flavor, and Juicy Mouthwatering Flavor. The sensory attributes can be measured from the start of chew as well as at 0.5 1,5, 15, and 30 minutes after the start of the chew.

In an embodiment, the flavorant in the flavor pre-blend provides an initial burst of flavor when the chewing gum composition is consumed and an additional flavorant in the chewing gum that is not part of the flavor pre-blend is released from the chewing gum for a duration of about 5 minutes or greater, specifically about 10 minutes or greater, and more specifically about 15 minutes or greater.

In an embodiment, the immediacy of flavor can be measured quantitatively using a mechanical chew extraction method and flavorant/sensate markers and the like that can be detected in the extraction solvent using a UV/Vis spectrophotometer. Exemplary markers include methyl salicylate (absorption at 237 nm), L-carvone (absorption at 241 nm), menthol, WS-3, WS-23, and the like. Chewing gum samples with known amounts of a flavor marker can be subjected to an *in vitro* mechanical chew test using equipment such as a Brabender Plasticorder (C.W. Brabender® Instruments, Inc.) drive unit equipped with a mixing head. The chewing gum sample is mixed within the equipment at a predetermined rotational speed as an extraction solvent is circulated at a set volume, rate, and temperature and for a select duration of time to extract the flavor marker from the sample. The resulting extraction solvent is tested with a UV/V is spectrophotometer to measure the absorption at the wavelength of interest for the particular flavor marker. The sample absorptions are then used to calculate the concentration of flavor marker against data from a standard curve generated by measuring the absorption of solutions with known concentrations of flavor marker. The method allows for the determination of the rate and intensity of flavor release at set timeframes, e.g. early in a chew process or later.

A method of determining the amount of flavor release from a chewing gum, comprises preparing a chewing gum with a flavor marker, mixing the chewing gum in a mixing equipment equipped with circulating extraction solvent for a predetermined time, and measuring an absorption reading of the extraction solvent using a UV/Vis spectrophotometer set at a wavelength of the flavor marker. The method further comprises calculating the concentration of the flavor marker using the absorption reading.

In an embodiment, a chewing gum composition comprises a gum base; and a flavor pre-blend comprising i) a saccharide syrup or sugar alcohol syrup, ii) a particulate saccharide or particulate sugar alcohol, iii) an emulsifier, iv) a flavorant, v) a fat, and optionally vi) a humectant, a food acid or salt thereof, a high intensity sweetener, a sensate, or a combination thereof; wherein the flavor pre-blend exhibits less than 10% phase separation by visual inspection after centrifuging the flavor pre-blend at 239 g-force and 25°C for 20 minutes; and wherein the chewing gum composition releases more flavor than a comparative chewing gum having identical type and amount of ingredients, wherein the ingredients i)- vi) are not prepared as a pre-blend. The flavor release can be measured using a mechanical chew out test at selected time points in the chew process, e.g. after 5 minutes of mechanical chewing, more specifically after 10 minutes, and yet more specifically after 15 minutes.

In an embodiment, a chewing gum composition comprises a gum base; and a flavor pre-blend comprising i) a saccharide syrup or sugar alcohol syrup, ii) a particulate saccharide or particulate sugar alcohol, iii) an emulsifier, iv) a flavorant, v) a fat, and optionally vi) a humectant, a food acid or salt thereof, a high intensity sweetener, a sensate, or a combination thereof; wherein the flavor pre-blend exhibits less than 10% phase separation by visual inspection after centrifuging the flavor pre-blend at 239 g-force and 25°C for 20 minutes; and wherein the chewing gum composition after 10 minutes of mechanical chew out releases about 1.7 to about 20%, specifically about 6 to about 16%, and more specifically about 10 to about 12% more flavor than a comparative chewing gum having identical type and amount of ingredients, wherein ingredients i)- vi) are not prepared as a pre-blend. Further within this embodiment, the chewing gum composition after 15 minutes of mechanical chew out releases about 1.2 to about 17%, specifically about 4 to about 14%, and more specifically about 7 to about 11% more flavor than a comparative chewing gum having identical type and amount of ingredients, wherein ingredients i)- vi) are not prepared as a pre-blend.

In an embodiment, a chewing gum composition comprises a gum base; and a flavor pre-blend comprising i) a saccharide syrup or sugar alcohol syrup, ii) a particulate saccharide or particulate sugar alcohol, iii) an emulsifier, iv) a flavorant, v) a fat, and optionally vi) a humectant, a food acid or salt thereof, a high intensity sweetener, a sensate, or a combination thereof; wherein the flavor pre-blend exhibits less than 10% phase separation by visual inspection after centrifuging the flavor pre-blend at 239 g-force and 25°C for 20 minutes; and wherein the chewing gum composition after 10 minutes of mechanical chew out releases at least 3%, specifically at least 8%, more specifically at least 12%, yet more specifically at least 16%, and still yet more specifically at least 20% more flavor than a comparative chewing gum having identical type and amount of ingredients, wherein ingredients i)- vi) are not prepared as a pre-blend. Further within this embodiment, the chewing gum composition after 15 minutes of mechanical chew out releases at least 3%, specifically at least 8%, more specifically at least 12%, yet more specifically at least 16%, and still yet more specifically at least 20% more flavor than a comparative chewing gum having identical type and amount of ingredients, wherein ingredients i)- vi) are not prepared as a pre-blend.

### Texture

Chewing gum compositions prepared with the flavor pre-blend exhibit good chew texture including a bouncy chew and a soft chew from the initial bite and which continues to be soft throughout the chew duration. The chewing gum composition is cohesive and does not separate during the chewing process.

The texture of a chewing gum can be characterized by its rheological properties using a variety of instrumentation. The phase angle (tan delta) is related to the energy lost (shear loss modulus G") divided by the energy stored (G') per cycle. Sample firmness and mouth feel relate to its modulus (G' and G"). Chewing gum with high G' tends to have a hard texture, as opposed to chewing gum having lower G' which exhibits a soft texture.

Tan (delta) is the ratio of viscous modulus (loss modulus G") to elastic modulus (storage modulus G') and is a useful quantifier of the presence and extent of elasticity in a fluid. The higher the Tan (delta) value, the less elastic the viscoelastic liquid. A Tan Delta value of greater than 1 means that the material has more properties of a liquid than a solid. Chewing gum with high Tan (delta) has a flat chew, as opposed to chewing gum having lower Tan (delta) which exhibits a bouncier chew.

The Tan (delta) can be measured using a Rubber Polymer Analyzer (RPA) (e.g. RPA 2000) for samples that have been masticated by a human subject or standard equipment such as a Brabender for a select duration of time (e.g. 5, 10, 20, 30, minutes or more) and a select temperature.

In an embodiment, the G' and Tan (delta) of a chewing gum can be measured by masticating a sample of chewing gum in a Brabender mixer (35cc) for 30 minutes at 35°C. A 5 gram sample of the masticated chewing gum is tested on a Rubber Polymer Analyzer using the following test parameters: Constant Strain : 14%; Constant Temperature : 35°C; Frequency Sweep : 60cpm - 600cpm; Results : G' and Tan delta at 450cpm frequency.

The chewing gum composition comprising a flavor pre-blend can have a Tan (delta) value of up to 5 (e.g., at 37°C), specifically up to about 3, more specifically up to about 2, and still yet more specifically up to about 1.5 as measured using a Rubber Polymer Analyzer at 30 minutes mastication time. Ranges for Tan (delta) can be about 0.7 to about 5, specifically about 0.8 to about 3, yet more specifically about 0.9 to about 2, and still yet more specifically about 1.0 to about 1.1 as measured using a Rubber Polymer Analyzer after 30 minutes mastication time and a temperature of about 37°C.

In another embodiment, the Tan (delta) of an unmasticated sample of chewing gum comprising a flavor pre-blend is in the range of 1.1 to 1.4. Within this embodiment, the sample preparation involves weighing a 5 gram sample of each gum and rolling it in Brabender to make it softer at the room temperature. A ball is formed from the material and it is covered with a plastic sheet from the top and bottom. The sample with plastic sheet is placed into a Rubber process analyzer to test rheology under following test parameters: Constant Temperature: 37°C, Frequency sweep: 60 - 450 cpm, Strain rate: 14% strain.

In an embodiment, the chewing gum composition is suitable for blowing bubbles.

The chewing gum composition comprising a flavor pre-blend can have a modulus G' of less than about 70, specifically less than about 25, more specifically less than about 16 kPa, yet more specifically less than about 14 kPa, still more specifically less than about 12 kPa, yet more specifically less than about 10 kPa, and still yet more specifically less than about 9 kPa after 30 minutes of mastication and a temperature of about 37°C. Ranges for G' can be about 8 to about 70 kPa, specifically about 9 to about 25 kPa, more specifically about 10 to about 16 kPa, yet more specifically about 11 to about 14 kPa, and still yet more specifically about 12 to about 13 kPa after 30 minutes of mastication and a temperature of about 37°C.

In an embodiment, the chewing gum composition comprising a flavor pre-blend can have a Tan (delta) value of about 0.5 to about 2 and a G' of about 8 to about 25 kPa after 30 minutes of mastication and a temperature of about 37°C

In an embodiment, the chewing gum composition comprising a flavor pre-blend can have a Tan (delta) value of about 0.7 to about 1.5 and a G' of about 8 to about 13 kPa after 30 minutes of mastication and a temperature of about 37°C.

### Characterization of the presence of the flavor pre-blend in the chewing gum composition

The use of a flavor pre-blend to prepare a chewing gum composition results in a chewing gum that is different from traditionally prepared chewing gum. The differences can be observed by comparative flavor release analysis, physical characterization, and photocentrifuge analysis.

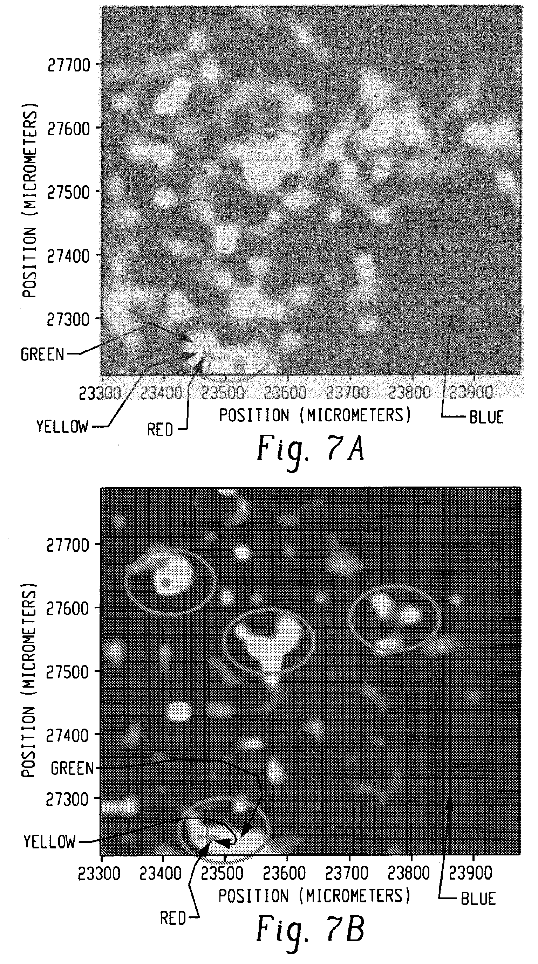

In one embodiment, the location of the flavor pre-blend in the chewing gum composition can be observed using Confocal Raman Spectroscopy. Specifically, the location of fat and flavorant can be determined by using peak location specific for each ingredient. It has been determined that concentrations of the fat and the flavorant of a flavor pre-blend are localized in the same spatial area of a sample of chewing gum prepared with a flavor pre-blend. FIG. 7a and FIG. 7b are scans of the exact same area of a chewing gum prepared with a flavor pre-blend. FIG. 7a is the scan for fat and FIG. 7b is the scan for flavorant. For FIG. 7a the color intensity is related to fat location and concentration in the order of Red>Yellow>Green>Blue; and for FIG. 7b the color intensity is related to flavorant location and concentration in the order of Red>Yellow>Green>Blue). The position of the localized regions of fat in FIG. 7a and flavorant in FIG. 7b are exemplified by circles surrounding regions of high concentration according to the previously mentioned color scale. As shown in these figures, for the same sample area of the chewing gum, the localized regions of fat (FIG. 7a) are in substantially the same spatial area of the chewing gum sample as the localized regions of flavorant (FIG. 7b). The localized regions of fat and flavorant can be characterized as being substantially co-localized within the total area analyzed.

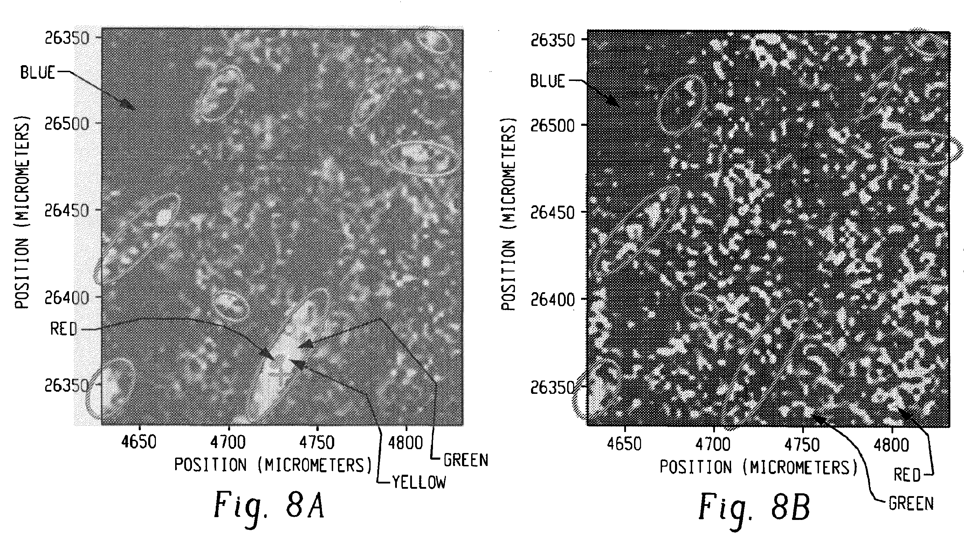

A comparative chewing gum formulation containing the same type and amount ingredients of the chewing gum of FIG. 7a and 7b, yet which are not prepared as a flavor pre-blend, does not exhibit the same degree of co-localization of fat (FIG. 8a) and flavorant (FIG. 8b). As shown, localization of the fat and flavorant appear to be independent of each other, i.e, no enhanced spatial overlap of these ingredients.

In one embodiment, the chewing gum composition comprising a flavor pre-blend comprises localized regions of the fat and the flavorant, wherein the localized regions of the fat and the flavorant have a degree of co-localization of greater than 10% as determined by Confocal Raman Spectroscopy, specifically greater than 20%, more specifically greater than 30 %, still more specifically greater than 40%, and yet more specifically greater than 50%. The upper limit of the degree of co-localization can be 100%, specifically 90%, more specifically 80%, still more specifically 70%, and yet more specifically 60%. As used herein "localized regions of the fat and the flavorant" means a planar area of a chewing gum sample analyzed by confocal Raman spectroscopy exhibits regions containing concentrations of fat and flavorant. As used herein "degree of co-localization" means the percentage of localized regions of ingredients such as fat and flavorant that are in the same spatial area of the sample of chewing gum as analyzed by Confocal Raman Spectroscopy. The procedure to calculate degree of co-localization can be found in Example 8 herein.

In one embodiment, a chewing gum composition comprises a gum base; and a flavor pre-blend comprising i) a saccharide syrup or sugar alcohol syrup, ii) a particulate saccharide or particulate sugar alcohol, iii) an emulsifier, iv) a flavorant, v) a fat, and optionally vi) a humectant, a food acid or salt thereof, a high intensity sweetener, a sensate, or a combination thereof; wherein the flavor pre-blend exhibits less than 10% phase separation by visual inspection after centrifuging the flavor pre-blend at 239 g-force and 25°C for 20 minutes; and wherein an aqueous extraction of the chewing gum composition exhibits a creaming rate lower than an aqueous extraction of a comparative chewing gum having identical type and amount of ingredients, wherein ingredients i)- vi) are not prepared as a pre-blend; wherein the creaming rates were determined using a photocentrifuge dispersion analyzer. The creaming rate for the aqueous extraction of the chewing gum composition can be less than 50% of the creaming rate of the aqueous extraction of the comparative chewing gum, specifically less than 33%, yet more specifically less than 25%, and still yet more specifically less than 20% of the creaming rate of the aqueous extraction of the comparative chewing gum when analyzed using a photocentrifuge dispersion analyzer at 2000 g-force for 20,000 seconds at 25°C.

The features and advantages are more fully shown by the following examples which are provided for purposes of illustration, and are not to be construed as limiting the invention in any way.

### EXAMPLES

### Example 1. Sugar-fee chewing_gum; humectant

Sugar-free chewing gums comprising a flavor pre-blend containing a humectant (glycerin or propylene glycol) are prepared from the ingredients listed in Tables 1a-1d below.

**Table 1a. Maltitol syrup/mannitol powder flavor pre-blend**

| Ingredient | **1A** | **1B** | **1C** | **1D** | **1E** | **1F** |
|---|---|---|---|---|---|---|
| | % weight based on total wt chewing gum | | | | | |
| Gum base | 25-35 | 25-35 | 25-35 | 25-35 | 25-35 | 25-35 |
| Mannitol powder | 0-55 | 25-35 | - | | 0-55 | 25-35 |
| Sorbitol powder | 0-55 | 25-35 | 0-55 | 25-35 | - | - |
| Maltitol powder | - | - | 0-55 | 25-35 | 0-55 | 25-35 |
| Additional Flavor/sensate | 0-5 | 0.5-4 | 0-5 | 0.5-4 | 0-5 | 0.5-4 |
| Additional Food acid | 0-3 | 0-2.5 | 0-3 | 0-2.5 | 0-3 | 0-2.5 |
| High intensity sweetener | 0-5 | 1-4 | 0-5 | 1-4 | 0-5 | 1-4 |
| Color | 0-2 | 0-2 | 0-2 | 0-2 | 0-2 | 0-2 |
| | | | | | | |
| **Flavor pre-blend** | 8-16 | 10-14 | 8-16 | 10-14 | 8-16 | 10-14 |
| Maltitol syrup | 5.5-8 | 6-7.5 | 5.5-8 | 6-7.5 | 5.5-8 | 6-7.5 |
| Mannitol powder | 2-3.5 | 2.5-3 | 2-3.5 | 2.5-3 | 2-3.5 | 2.5-3 |
| Glycerin or propylene glycol | 0.8-1.2 | 0.95-1.1 | 0.8-1.2 | 0.95-1.1 | 0.8-1.2 | 0.95-1.1 |
| Fat | 0.6-1 | 0.75-0.9 | 0.6-1 | 0.75-0.9 | 0.6-1 | 0.75-0.9 |
| Emulsifier | 0.3-0.6 | 0.35-0.5 | 0.3-0.6 | 0.35-0.5 | 0.3-0.6 | 0.35-0.5 |
| Flavor pre-blend Flavor | 0.01-2 | 0.3-2 | 0.01-2 | 0.3-2 | 0.01-2 | 0.3-2 |
| Food acid | 0-2 | 0-1 | 0-2 | 0-1 | 0-2 | 0-1 |
| | | | | | | |
| Total chewing gum (wt %) | 100 | 100 | 100 | 100 | 100 | 100 |

**Table 1b. Maltitol syrup/maltitol powder flavor pre-blend**

| Ingredient | **1G** | **1H** | **1I** | **1J** | **1K** | **1L** |
|---|---|---|---|---|---|---|
| | % weight based on total wt chewing gum | | | | | |
| Gum base | 25-35 | 25-35 | 25-35 | 25-35 | 25-35 | 25-35 |
| Mannitol powder | 0-55 | 25-35 | - | | 0-55 | 25-35 |
| Sorbitol powder | 0-55 | 25-35 | 0-55 | 25-35 | - | - |
| Maltitol powder | - | - | 0-55 | 25-35 | 0-55 | 25-35 |
| Additional Flavor/sensate | 0-5 | 0.5-4 | 0-5 | 0.5-4 | 0-5 | 0.5-4 |
| Additional Food acid | 0-3 | 0-2.5 | 0-3 | 0-2.5 | 0-3 | 0-2.5 |
| High intensity sweetener | 0-5 | 1-4 | 0-5 | 1-4 | 0-5 | 1-4 |
| Color | 0-2 | 0-2 | 0-2 | 0-2 | 0-2 | 0-2 |
| | | | | | | |
| **Flavor pre-blend** | 8-16 | 10-14 | 8-16 | 10-14 | 8-16 | 10-14 |
| Maltitol syrup | 5.5-8 | 6-7.5 | 5.5-8 | 6-7.5 | 5.5-8 | 6-7.5 |
| Maltitol powder | 2-3.5 | 2.5-3 | 2-3.5 | 2.5-3 | 2-3.5 | 2.5-3 |
| Glycerin or propylene glycol | 0.8-1.2 | 0.95-1.1 | 0.8-1.2 | 0.95-1.1 | 0.8-1.2 | 0.95-1.1 |
| Fat | 0.6-1 | 0.75-0.9 | 0.6-1 | 0.75-0.9 | 0.6-1 | 0.75-0.9 |
| Emulsifier | 0.3-0.6 | 0.35-0.5 | 0.3-0.6 | 0.35-0.5 | 0.3-0.6 | 0.35-0.5 |
| Flavor pre-blend Flavor | 0.01-2 | 0.3-2 | 0.01-2 | 0.3-2 | 0.01-2 | 0.3-2 |
| Food acid | 0-2 | 0-1 | 0-2 | 0-1 | 0-2 | 0-1 |
| | | | | | | |
| Total chewing gum (wt %) | 100 | 100 | 100 | 100 | 100 | 100 |

**Table 1c. Hydrogenated starch hydrolysate syrup/mannitol powder flavor pre-blend**

| Ingredient | **1M** | **1N** | **1O** | **1P** | **1Q** | **1R** |
|---|---|---|---|---|---|---|
| | % weight based on total wt chewing gum | | | | | |
| Gum base | 25-35 | 25-35 | 25-35 | 25-35 | 25-35 | 25-35 |
| Mannitol powder | 0-55 | 25-35 | - | - | 0-55 | 25-35 |
| Sorbitol powder | 0-55 | 25-35 | 0-55 | 25-35 | - | - |
| Maltitol powder | - | - | 0-55 | 25-35 | 0-55 | 25-35 |
| Additional | 0-5 | 0.5-4 | 0-5 | 0.5-4 | 0-5 | 0.5-4 |
| Flavor/sensate | | | | | | |
| Additional Food acid | 0-5 | 0-2.5 | 0-3 | 0-2.5 | 0-3 | 0-2.5 |
| High intensity sweetener | 0-5 | 1-4 | 0-5 | 1-4 | 0-5 | 1-4 |
| Color | 0-2 | 0-2 | 0-2 | 0-2 | 0-2 | 0-2 |
| | | | | | | |
| **Flavor pre-blend** | 8-16 | 10-14 | 8-16 | 10-14 | 8-16 | 10-14 |
| Hydrogenated starch hydrolysate syrup | 5.5-8 | 6-7.5 | 5.5-8 | 6-7.5 | 5.5-8 | 6-7.5 |
| Mannitol powder | 2-3.5 | 2.5-3 | 2-3.5 | 2.5-3 | 2-3.5 | 2.5-3 |
| Glycerin or propylene glycol | 0.8-1.2 | 0.95-1.1 | 0.8-1.2 | 0.95-1.1 | 0.8-1.2 | 0.95-1.1 |
| Fat | 0.6-1 | 0.75-0.9 | 0.6-1 | 0.75-0.9 | 0.6-1 | 0.75-0.9 |
| Emulsifier | 0.3-0.6 | 0.35-0.5 | 0.3-0.6 | 0.35-0.5 | 0.3-0.6 | 0.35-0.5 |
| Flavor pre-blend Flavor | 0.01-2 | 0.3-2 | 0.01-2 | 0.3-2 | 0.01-2 | 0.3-2 |
| Food acid | 0-2 | 0-1 | 0-2 | 0-1 | 0-2 | 0-1 |
| | | | | | | |
| Total chewing gum (wt %) | 100 | 100 | 100 | 100 | 100 | 100 |

**Table 1d. Hydrogenated starch hydrolysate syrup/maltitol powder flavor pre-blend**

| Ingredient | **1S** | **1T** | **1U** | **1V** | **1W** | **1X** |
|---|---|---|---|---|---|---|
| | % weight based on total wt chewing gum | | | | | |
| Gum base | 25-35 | 25-35 | 25-35 | 25-35 | 25-35 | 25-35 |
| Mannitol powder | 0-55 | 25-35 | - | - | 0-55 | 25-35 |
| Sorbitol powder | 0-55 | 25-35 | 0-55 | 25-35 | - | - |
| Maltitol powder | - | - | 0-55 | 25-35 | 0-55 | 25-35 |
| Additional Flavor/sensate | 0-5 | 0.5-4 | 0-5 | 0.5-4 | 0-5 | 0.5-4 |
| Additional Food acid | 0-3 | 0-2.5 | 0-3 | 0-2.5 | 0-3 | 0-2.5 |
| High intensity sweetener | 0-5 | 1-4 | 0-5 | 1-4 | 0-5 | 1-4 |
| Color | 0-2 | 0-2 | 0-2 | 0-2 | 0-2 | 0-2 |
| | | | | | | |
| **Flavor pre-bend** | 8-16 | 10-14 | 8-16 | 10-14 | 8-16 | 10-14 |
| Hydrogenated starch hydrolysate syrup | 5.5-8 | 6-7.5 | 5.5-8 | 6-7.5 | 5.5-8 | 6-7.5 |
| Maltitol powder | 2-3.5 | 2.5-3 | 2-3.5 | 2.5-3 | 2-3.5 | 2.5-3 |
| Glycerin or propylene glycol | 0.8-1.2 | 0.95-1.1 | 0.8-1.2 | 0.95-1.1 | 0.8-1.2 | 0.95-1.1 |
| Fat | 0.6-1 | 0.75-0.9 | 0.6-1 | 0.75-0.9 | 0.6-1 | 0.75-0.9 |
| Emulsifier | 0.3-0.6 | 0.35-0.5 | 0.3-0.6 | 0.35-0.5 | 0.3-0.6 | 0.35-0.5 |
| Flavor pre-blend Flavor | 0.01-2 | 0.3-2 | 0.01-2 | 0.3-2 | 0.01-2 | 0.3-2 |
| Food acid | 0-2 | 0-1 | 0-2 | 0-1 | 0-2 | 0-1 |
| | | | | | | |
| Total chewing gum (wt %) | 100 | 100 | 100 | 100 | 100 | 100 |

### Preparation of flavor pre-blend

The flavor pre-blend is prepared by melting the fat with the emulsifier. Maltitol or HSH syrup and glycerin or propylene glycol are warmed (∼65-80°C) and the mannitol or maltitol powder is dissolved in syrup mixture with mixing. The melted fat/emulsifier is added to the sweetener mixture and mixed until a homogeneous mixture is formed. The homogeneous mixture is cooled and the flavor pre-blend flavor and optional food acid is added to the homogeneous mixture with mixing to form a flavor pre-blend.

### Preparation of chewing gum composition

The gum base is melted using techniques known in the art. The bulk sweeteners and optional color are then added with mixing. The optional additional flavor/sensate are added with mixing followed by the addition of optional high intensity sweeteners to form a chewing gum mixture. The chewing gum mixture is then mixed with the flavor pre-blend to form a chewing gum composition. The chewing gum composition can be formed into pieces and optionally coated using techniques known in the art.

### Example 2. Saccharide chewing gum; hydrocolloid or humectant

Saccharide chewing gums comprising a flavor pre-blend containing a humectant (glycerin or propylene glycol) or gelatin are prepared from the ingredients listed in Table 2 below.

**Table 2.**

| Ingredient | **2A** | **2B** | **2C** | **2D** | **2E** | **2F** |
|---|---|---|---|---|---|---|
| | % weight based on total wt chewing gum | | | | | |
| Gum base | 30-40 | 30-40 | 30-40 | 30-40 | 30-40 | 30-40 |
| Sucrose (6X) | 40-55 | 40-55 | 40-55 | 40-55 | 40-55 | 40-55 |
| Additional Flavor/sensate | 0-5 | 0.5-4 | 0-5 | 0.5-4 | 0-5 | 0.5-4 |
| Additional Food acid | 0-3 | 0-1.5 | 0-3 | 0-5 | 0-3 | 0-1.5 |
| High intensity sweetener | 0-5 | 1-4 | 0-5 | 1-4 | 0-5 | 1-4 |
| Color | 0-0.2 | 0-0.2 | 0-0.2 | 0-0.2 | 0-0.2 | 0-0.2 |
| | | | | | | |
| **Flavor pre-blend** | 5-20 | 10-14 | 5-20 | 10-14 | 5-20 | 10-14 |
| Corn syrup | 2.5-13 | 5-9 | - | - | - | - |
| Maltitol syrup | - | - | 2.5-13 | 5-9 | 2.5-13 | 5-9 |
| Sucrose (6X) powder | 1-5 | 2-3.5 | 1-5 | 2-3.5 | 1-5 | 2-3.5 |
| Glycerin or propylene glycol | - | - | - | - | 0.1-2 | 0.2-1.5 |
| Gelatin (40%) | 0.1-2 | 0.2-1.5 | 0.1-2 | 0.2-1.5 | - | - |
| Water | 0-1 | 0-1 | 0-1 | 0-1 | 0-1 | 0-1 |
| Fat | 0.4-2 | 0.75-1 | 0.4-2 | 0.75-1 | 0.4-2 | 0.75-1 |
| Emulsifier | 0.2-1.5 | 0.3-1 | 0.2-1.5 | 0.3-1 | 0.2-1.5 | 0.3-1 |
| Flavor pre-blend Flavor | 0.04-1 | 0.05-0.5 | 0.04-1 | 0.05-0.5 | 0.04-1 | 0.05-0.5 |
| Food acid | 0-0.5 | 0-0.1 | 0-0.5 | 0-0.1 | 0-0.5 | 0-0.1 |
| | | | | | | |
| Total chewing gum (wt %) | 100 | 100 | 100 | 100 | 100 | 100 |

### Preparation of flavor pre-blend

When gelatin is used, it is prepared as a prehydrated ingredient at 40% in water. The fat is melted with the emulsifier. Corn syrup or maltitol syrup is warmed (∼65-80°C) with glycerin and/or water, if used, and the sucrose powder is dissolved in the syrup mixture with mixing. When gelatin is used, it is added and mixed until homogeneous. The melted fat/emulsifier is added to the sweetener mixture and mixed until a homogeneous mixture is formed. The homogeneous mixture is cooled and the flavor pre-blend flavor and optional food acid is added to the homogeneous mixture with mixing to form a flavor pre-blend.

### Preparation of chewing gum composition

The gum base is melted using techniques known in the art. The bulk sweeteners and optional color are then added with mixing. The optional additional flavor/sensate are added with mixing followed by the addition of optional high intensity sweeteners to form a chewing gum mixture. The chewing gum mixture is then mixed with the flavor pre-blend to form a chewing gum composition. The chewing gum composition can be formed into pieces and optionally coated using techniques known in the art.

### Example 3. Sugar-free chewing gum; hydrocolloid or humectant

Sugar-free chewing gums comprising a flavor pre-blend containing a humectant (glycerin or propylene glycol) or gelatin are prepared from the ingredients listed in Table 3 below.

**Table 3.**

| Ingredient | **3A** | **3B** | **3C** | **3D** | **3E** | **3F** | **3G** | **3H** |
|---|---|---|---|---|---|---|---|---|
| | % weight based on total wt chewing gum | | | | | | | |
| Gum base | 30-40 | 30-40 | 30-40 | 30-40 | 30-40 | 30-40 | 30-40 | 30-40 |
| Mannitol powder | 25-35 | 25-35 | 25-35 | 25-35 | - | - | - | - |
| Sorbitol powder | 15-25 | 15-25 | 15-25 | 15-25 | 15-25 | 15-25 | 15-25 | 15-25 |
| Maltitol powder | - | - | - | - | 25-35 | 25-35 | 25-35 | 25-35 |
| Additional Flavor/sensate | 0-3 | 0-3 | 0-3 | 0-3 | 0-3 | 0-3 | 0-3 | 0-3 |
| Additional Food acid | 0-2 | 0-2 | 0-2 | 0-2 | 0-2 | 0-2 | 0-2 | 0-2 |
| High intensity sweetener | 2-5 | 2-5 | 2-5 | 2-5 | 2-5 | 2-5 | 2-5 | 2-5 |
| Color | 0-0.2 | 0-0.2 | 0-0.2 | 0-0.2 | 0-0.2 | 0-0.2 | 0-0.2 | 0-0.2 |
| | | | | | | | | |
| **Flavor pre-blend** | 5-14 | 5-14 | 5-14 | 5-14 | 5-14 | 5-14 | 5-14 | 5-14 |
| Maltitol syrup | 2.5-9 | 2.5-9 | 2.5-9 | 2.5-9 | 2.5-9 | 2.5-9 | 2.5-9 | 2.5-9 |
| Maltitol powder | 2-3.5 | - | 2-3.5 | - | 2-3.5 | - | 2-3.5 | - |
| Mannitol powder | - | 2-3.5 | - | 2-3.5 | - | 2-3.5 | - | 2-3.5 |
| Glycerin or propylene glycol | 0.1-1.5 | 0.1-1.5 | - | - | 0.1-1.5 | 0.1-1.5 | - | - |
| Gelatin (40%) | - | - | 0.2-2 | 0.2-2 | - | - | 0.2-2 | 0.2-2 |
| Water | 0-1 | 0-1 | 0-1 | 0-1 | 0-1 | 0-1 | 0-1 | 0-1 |
| Fat | 0.2-1 | 0.2-1 | 0.2-1 | 0.2-1 | 0.2-1 | 0.2-1 | 0.2-1 | 0.2-1 |
| Emulsifier | 0.1-0.5 | 0.1-0.5 | 0.1-0.5 | 0.1-0.5 | 0.1-0.5 | 0.1-0.5 | 0.1-0.5 | 0.1-0.5 |
| Flavor pre-blend Flavor | 0.04-1 | 0.04-1 | 0.04-1 | 0.04-1 | 0.04-1 | 0.04-1 | 0.04-1 | 0.04-1 |
| Food acid | 0-0.1 | 0-0.1 | 0-0.1 | 0-0.1 | 0-0.1 | 0-0.1 | 0-0.1 | 0-0.1 |
| Total chewing gum (wt %) | 100 | 100 | 100 | 100 | 100 | 100 | 100 | 100 |

### Preparation of flavor pre-blend

When gelatin is used, it is prepared as a prehydrated ingredient at 40% in water. The fat is melted with the emulsifier. Maltitol syrup is warmed (∼65-80°C) with glycerin and or water, if used, and the mannitol or maltitol powder is dissolved in the syrup mixture with mixing. When gelatin is used, it is added and mixed until homogeneous. The melted fat/emulsifier is added to the sweetener mixture and mixed until a homogeneous mixture is formed. The homogeneous mixture is cooled and the flavor pre-blend flavor and optional food acid is added to the homogeneous mixture with mixing to form a flavor pre-blend.

### Preparation of chewing gum composition

The gum base is melted using techniques known in the art. The bulk sweeteners and optional color are then added with mixing. The optional additional flavor/sensate are added with mixing followed by the addition of optional high intensity sweeteners to form a chewing gum mixture. The chewing gum mixture is then mixed with the flavor pre-blend to form a chewing gum composition. The chewing gum composition can be formed into pieces and optionally coated using techniques known in the art.

### Example 4. Sugar-free chewing gums with flavor pre-blend versus Comparative Examples: Sensory study

Sugar-free chewing gums comprising a flavor pre-blend are prepared from the ingredients listed in Table 4 below along with two traditional chewing gum formulations free of a flavor pre-blend as Comparative Examples (CE).

**Table 4. Maltitol syrup/mannitol powder flavor pre-blend and comparatives**

| **Ingredient** | **4A** | **CE4A** | **4B** | **CE4B** |
|---|---|---|---|---|
| | % weight based on total wt chewing gum | | | |
| Gum base A | 31.8 | 38.2 | - | - |
| Gum base B | - | - | 31.8 | 38.2 |
| Sugar alcohol powder | 49.9 | 49.0 | 49.9 | 49.0 |
| Sugar alcohol syrup | - | 4.0 | - | 4.0 |
| Additional Flavor/sensate | 2.0 | 3.4 | 2.0 | 3.4 |
| Additional Food acid | 1.2 | 2.0 | 1.2 | 2.0 |
| High intensity sweetener | 2.8 | 3.4 | 2.8 | 3.4 |
| | | | | |
| **Flavor pre-blend** | 12.3 | - | 12.3 | - |
| Sugar alcohol syrup | 6.7 | - | 6.7 | - |
| Sugar alcohol powder | 2.6 | - | 2.6 | - |
| Humectant | 1.0 | - | 1.0 | - |
| Fat | 0.8 | - | 0.8 | - |
| Emulsifier | 0.5 | - | 0.5 | - |
| Flavor pre-blend Flavor | 0.1 | - | 0.1 | - |
| Food acid | 0.6 | - | 0.6 | - |
| | | | | |
| Total chewing gum (wt %) | 100 | 100 | 100 | 100 |

### Preparation of flavor pre-blend, Examples 4A, 4B

The flavor pre-blend is prepared by melting the fat with the emulsifier. The sugar alcohol syrup and humectant are warmed (∼65-80°C) and the sugar alcohol powder is dissolved in syrup mixture with mixing. The melted fat/emulsifier is added to the sweetener mixture and mixed until a homogeneous mixture is formed. The homogeneous mixture is cooled to 40-50°C and the flavor pre-blend flavor and optional food acid is added to the homogeneous mixture with mixing to form a flavor pre-blend.

### Preparation of chewing gum composition with flavor pre-blend, Examples 4A, 4B; preparation of comparative examples without flavor pre-blend

For Examples 4A and 4B, the gum base is melted using techniques known in the art. The bulk sweeteners are then added with mixing. The additional flavor/sensate are added with mixing followed by the addition of high intensity sweeteners to form a chewing gum mixture. The chewing gum mixture is then mixed with the flavor pre-blend to form a chewing gum composition.

For Examples CE4A and CE4B, the gum base is melted using techniques known in the art. The bulk sweeteners are then added with mixing. The additional flavor/sensate are added with mixing followed by the addition of high intensity sweeteners to form a chewing gum composition.

The chewing gums of Table 4 were subjected to a Sensory Evaluation for Initial Burst of Flavor, Initial Sweetness, and Juicy Mouthwatering Flavor. Examples 4A and 4B provided quicker Initial Burst of Flavor and Initial Sweetness compared to the comparative examples CE4A and CE4B, as well as increased Juicy Mouthwatering Flavor over the comparative samples.

### Example 5a. Sugar-free chewing gums with flavor pre-blend versus Comparative Examples: Mechanical Chew Extraction method for rate and intensity of early flavor release

Sugar-free chewing gums comprising a flavor pre-blend are prepared from the ingredients listed in Table 5 below along with two traditional chewing gum formulations of similar ingredients, but not containing a flavor pre-blend as Comparative Examples (CE).

**Table 5.**

| **Ingredient** | **5A** | **CE5A** | **5B (25%)** | **5B (50%)** | **CE5B** |
|---|---|---|---|---|---|
| | % weight based on total wt chewing gum | | | | |
| Gum base | 28.54 | 28.54 | 28.54 | 28.54 | 28.54 |
| Emulsifier | - | 0.48 | - | - | 0.48 |
| Fat | - | 0.82 | - | - | 0.82 |
| Maltitol syrup | - | 6.85 | - | - | 6.85 |
| Glycerin | - | 1.02 | - | - | 1.02 |
| Sugar alcohol powder | 54.08 | 56.64 | 54.29 | 54.79 | 56.85 |
| Color | 0.21 | 0.21 | - | - | - |
| Wintergreen | 1.47 | 1.96 | - | - | - |
| Spearmint | - | - | 1.47 | 0.98 | 1.96 |
| High intensity sweetener | 3.39 | 3.48 | 3.39 | 3.39 | 3.48 |
| | | | | | |
| **Flavor pre-blend** | 12.31 | - | 12.31 | 12.31 | - |
| Sugar alcohol syrup | 6.85 | - | 6.86 | 6.37 | - |
| Sugar alcohol powder | 2.55 | - | 2.55 | 2.55 | - |
| Glycerin | 1.02 | - | 1.02 | 1.02 | - |
| Fat | 0.82 | - | 0.82 | 0.82 | - |
| Emulsifier | 0.48 | - | 0.48 | 0.48 | - |
| Wintergreen | 0.49 | - | - | - | - |
| Spearmint | - | - | 0.49 | 0.98 | - |
| High intensity sweetener | 0.1 | - | 0.09 | 0.09 | - |
| Total chewing gum (wt %) | 100 | 100 | 100 | 100 | 100 |

The chewing gums of Examples 5A, 5B (25%), 5B (50%) and comparative examples CE5A and CE5B were prepared as previously described. The flavor pre-blends used in the examples were stable showing no phase separation after centrifugation at 1699 g-force for 30 minutes at room temperature.

The samples were prepared with a single flavorant that contains a compound that can be detected quantitatively using a Visible/UV spectrophotometer. Wintergreen contains methyl salicylate having an absorption at 237 nm and spearmint contains L-carvone, having an absorbance at 241 nm. Examples 5A and 5B (25%) contained 25% flavorant in the flavor pre-blend and 75% added in the gum fraction, while 5B (50%) contained 50% flavorant in the flavor pre-blend and 50% added in the gum fraction, based on the total weight of the flavorant in the final formulation. The comparative examples contained 100% of the flavor in the gum fraction.

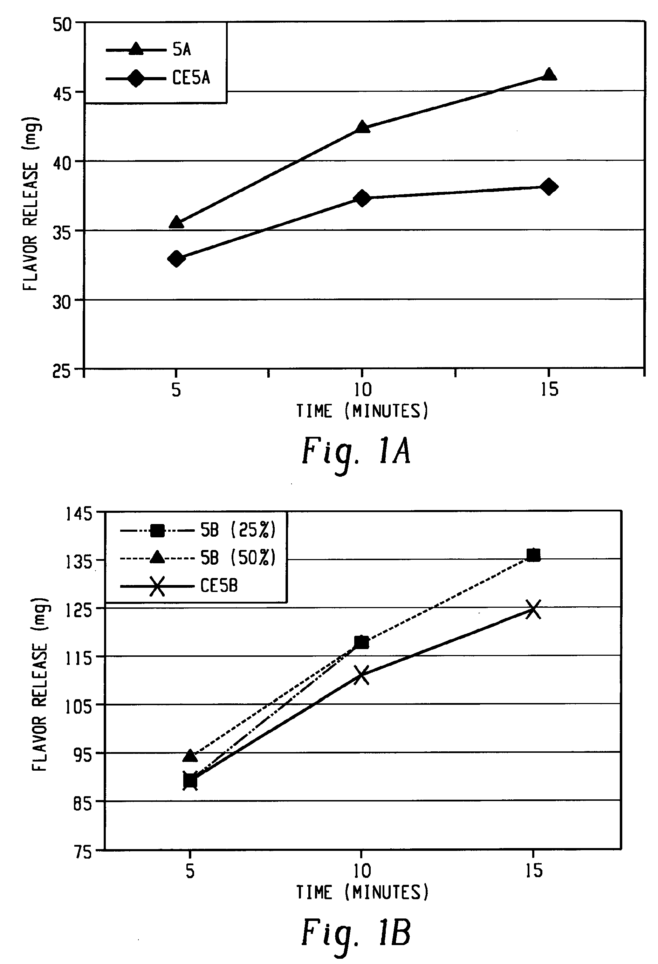

The samples were analyzed using a mechanical chew extraction method to determine the rate and intensity of early flavor release. Flavorant was extracted from a 51 gram sample of chewing gum containing 999.6 mg of flavorant using a Brabender Plasticorder (C.W. Brabender® Instruments, Inc.) drive unit with a 35cc mixing head modified to increase the opening. The rotational speed was set at 80 rpm. Water at 21°-24°C was circulated at a rate of 100 ml per minute. Two liters of water were used for each extraction that lasted for a preset amount of time (5, 10, and 15 minutes). A sample of the extraction water was used to measure the absorption at 237 or 241 nm wavelength with a Beckman DU 520 UV/Vis Spectrophotometer. The sample absorption was used to calculate the methyl salicylate concentration by using data from a standard curve. The standard curve was generated by measuring the absorption of solutions with known concentrations of methyl salicylate. The L-carvone concentration was similarly measured. The results of the study are provided in Table 6 below and the data is represented graphically in FIGS. 1a and 1b.

**Table 6.**

| **Extraction time (minutes)** | **Sample** | **UV Absorption units** | **Equivalent flavor (mg)** | **% of total Flavor released** |
|---|---|---|---|---|
| 5 | 5A | 0.953 | 35.6 | 0.36% |
| | CE5A | 0.877 | 32.9 | 0.33% |
| | 5B (25%) | 0.808 | 89.6 | 0.90% |
| | 5B (50%) | 0.856 | 93.94 | 0.94% |
| | CE5B | 0.805 | 89.31 | 0.89% |
| 10 | 5A | 1.134 | 42.3 | 0.42% |
| | CE5A | 1.000 | 37.3 | 0.37% |
| | 5B (25%) | 1.113 | 117.3 | 1.17% |
| | 5B (50%) | 1.114 | 117.4 | 1.17% |
| | CE5B | 1.043 | 110.93 | 1.11% |
| 15 | 5A | 1.250 | 46.1 | 0.46% |
| | CE5A | 1.021 | 38.1 | 0.38% |
| | 5B (25%) | 1.318 | 135.9 | 1.36% |
| | 5B (50%) | 1.319 | 136.0 | 1.36% |
| | CE5B | 1.188 | 124.1 | 1.24% |

The data shows the chewing gum prepared with the flavor pre-blend releases more flavorant during the early stage of chewing as compared to chewing gums prepared without the blend, thus exhibiting a quicker and higher flavor release property. It is noted that the shear provided during mechanical mastication is significantly lower than is provided by a human mouth. The surface of gum exposed to water in the mechanical masticator is significantly lower than a gum chewed by human. Accordingly, 3 minutes of machine chew-out is about the same as about 1 minute of human chew-out. Thus it would be expected that the flavor release from Examples 5A and 5B would be significantly faster in vivo than exhibited in the mechanical chew-out.

### Example 5b. Sugar-free chewing gums with flavor pre-blend versus Comparative Examples or versus Unstable flavor pre-blends: Mechanical Chew Extraction method for rate and intensity of early flavor release

In this example, the flavor release of a sugar-free chewing gum (Example 5C) comprising a stable flavor pre-blend is prepared from the ingredients listed in Table 7 below and compared to a comparative traditional chewing gum formulation of similar ingredients, but not containing a flavor pre-blend (Comparative Example CE5C). The flavor release of a two sugar-free chewing gums (Example 5D and Example 5E) comprising unstable flavor pre-blends are prepared from the ingredients listed in Table 7 below and compared to traditional chewing gum formulations of similar ingredients, but not containing the unstable flavor pre-blends (Comparative Examples CE5D and CE5E). The unstable flavor pre-blends of 5D and 5E exhibited more than 10% phase separation determined by visual inspection after centrifuging the flavor pre-blend at 239 g-force and 25°C for 20 minutes using a VWR Clinical 200 Centrifuge, 120V 60 Hz, with Rotor, Maximum Speed - 6000 RPM, and adapter conical tubes in 50 ml rotor (pack of 6). The flavor release analysis was conducted using a mechanical chew out extraction method as described in Example 5a.

**Table 7.**

| **Ingredient** | **5C** | **CE5C** | **5D** | **CE5D** | **5E** | **CE5E** |
|---|---|---|---|---|---|---|
| | % weight based on total wt chewing gum | | | | | |
| Gum base | 28.41 | 28.41 | 28.54 | 28.54 | 28.54 | 28.54 |
| Emulsifier | 0.13 | 0.61 | - | 0.36 | - | 0.36 |
| Water | - | - | - | 0.59 | - | 1.23 |
| Fat | - | 0.82 | - | 0.62 | - | 0.62 |
| Maltitol syrup | - | 6.85 | - | 4.86 | - | 3.48 |
| Glycerin | - | 1.02 | - | 0.77 | - | 0.77 |
| Sugar alcohol powder | 54.98 | 56.63 | 54.29 | 56.21 | 54.29 | 55.52 |
| Color | 0.21 | 0.21 | - | - | - | - |
| Citric acid | - | - | - | 2.63 | - | 4.06 |
| Wintergreen | 1.47 | 1.96 | 1.47 | 1.96 | 1.47 | 1.96 |
| High intensity sweetener | 3.39 | 3.48 | 3.39 | 3.46 | 3.39 | 3.46 |
| | | | | | | |
| **Flavor pre-blend** | 12.3, stable | - | 12.31, unstable | - | 12.31, unstable | - |
| Sugar alcohol syrup | 6.85 | - | 4.86 | - | 3.48 | - |
| Sugar alcohol powder | 2.55 | - | 1.92 | - | 1.23 | - |
| Glycerin | 1.02 | - | 0.77 | - | 0.77 | - |
| Fat | 0.82 | - | 0.62 | - | 0.62 | - |
| Emulsifier | 0.48 | - | 0.36 | - | 0.36 | - |
| Wintergreen | 0.49 | - | 0.49 | - | 0.49 | - |
| High intensity sweetener | 0.09 | - | 0.07 | - | 0.07 | - |
| Citric acid | - | - | 2.63 | - | 4.06 | - |
| Water | - | - | 0.59 | - | 1.23 | - |
| Total chewing gum (wt %) | 99.99 | 99.99 | 100 | 100 | 100 | 100 |

Table 8 below provides flavor release data as percent flavor release and as measured at different storage times.

**Table 8.**

| | | | Extraction time* | | |
|---|---|---|---|---|---|
| Formulation | Flavor pre-blend | Storage time | 5 minutes | 10 minutes | 15 minutes |
| | | | % flavor released | | |
| CE5C | no | Time zero | 4.52 | 5.13 | 5.24 |
| 5C | yes | | 4.97 | 5.80 | 6.37 |
| CE5C | no | After 6 weeks | 5.74 | 8.17 | 9.16 |
| 5C | yes | | 6.89 | 10.39 | 12.19 |
| CE5C | no | After 12 weeks | 6.27 | 8.09 | 10.04 |
| 5C | yes | | 6.99 | 9.06 | 10.61 |
| CE5C repeat | no | Time zero | 5.48 | 7.44 | 8.45 |
| 5C repeat | yes | | 6.29 | 8.67 | 10.23 |
| CE5C repeat | no | After 8 weeks | 7.03 | 8.14 | 11.28 |
| 5C repeat | yes | | 7.71 | 10.21 | 12.90 |
| | | | | | |
| CE5D | no | Time zero | 5.91 | 8.67 | 11.04 |
| 5D | unstable | | 5.77 | 7.78 | 9.17 |
| CE5D | no | After 5 weeks | 7.88 | 10.73 | 12.86 |
| 5D | unstable | | 7.20 | 9.48 | 10.96 |
| | | | | | |
| CE5E | no | Time zero | 5.43 | 8.48 | 10.95 |
| 5E | unstable | | 5.25 | 7.78 | 9.52 |
| CE5E | no | After 5 weeks | 7.42 | 9.96 | 12.15 |
| 5E | unstable | | 6.97 | 9.46 | 10.99 |

| | | | | | |
|---|---|---|---|---|---|
| *each read under 5, 10 and 15 minutes is an average of multiple readings at a time | | | | | |

Table 9 provides flavor release data where the numbers in the last four columns represent least squares means from the statistical model (e.g. estimates) and standard errors of estimates for cumulative flavor release amounts expressed in mg and in percent of total amount.

**Table 9.**

| **Set** | **Formulation** | **Description** | **N experiments** | **Time (min.)** | **Flavor amount, mg** | | **Percent of total** | |
|---|---|---|---|---|---|---|---|---|
| | | | | | **Estimate** | **Standard Error** | **Estimate** | **Standard Error** |
| 1 | CE5C | No flavor pre-blend | 9 | 5 | 56.37 | 2.59 | 5.641 | 0.257 |
| | | | | 10 | 75.10 | 2.59 | 7.515 | 0.257 |
| | | | | 15 | 90.79 | 2.59 | 9.097 | 0.257 |
| 1 | 5C | Flavor pre-blend | 9 | 5 | 61.08 | 2.59 | 6.112 | 0.257 |
| | | | | 10 | 83.61 | 2.59 | 8.366 | 0.257 |
| | | | | 15 | 99.13 | 2.59 | 9.919 | 0.257 |
| 2 | 5D | Unstable flavor pre-blend | 4 | 5 | 62.26 | 2.79 | 6.229 | 0.279 |
| | | | | 10 | 83.35 | 2.79 | 8.339 | 0.279 |
| | | | | 15 | 98.61 | 2.79 | 9.865 | 0.279 |
| 2 | CE5D | No flavor pre-blend | 4 | 5 | 67.15 | 2.79 | 6.718 | 0.279 |
| | | | | 10 | 93.45 | 2.79 | 9.349 | 0.279 |
| | | | | 15 | 117.73 | 2.79 | 11.778 | 0.279 |
| 3 | 5E | Unstable flavor pre-blend | 3 | 5 | 58.57 | 1.35 | 5.860 | 0.135 |
| | | | | 10 | 83.34 | 1.35 | 8.338 | 0.135 |
| | | | | 15 | 100.43 | 1.35 | 10.0+47 | 0.135 |
| 3 | CE5E | No flavor pre-blend | 3 | 5 | 60.88 | 1.35 | 6.091 | 0.135 |
| | | | | 10 | 90.57 | 1.35 | 9.060 | 0.135 |
| | | | | 15 | 114.64 | 1.35 | 11.469 | 0.135 |

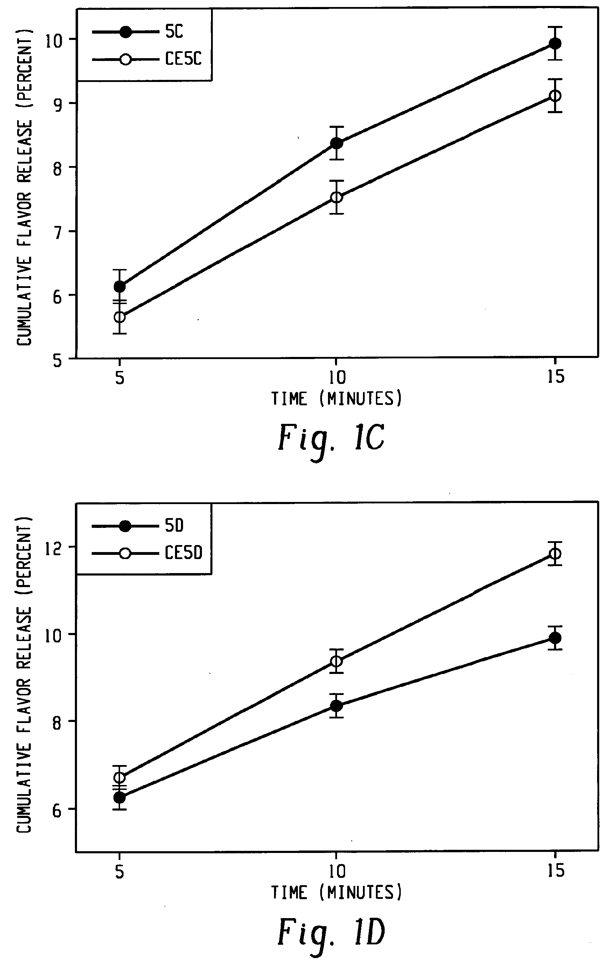

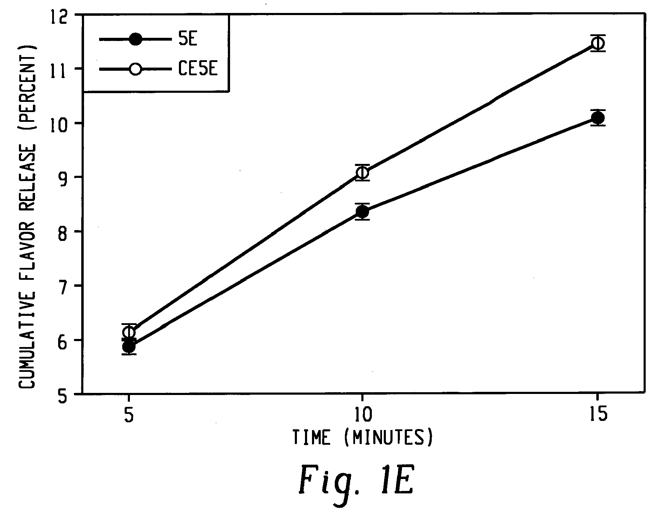

The flavor release data were analyzed statistically and the results are represented by FIG. 1c, FIG. 1d. and FIG. 1e, as well as in Table 10. The lines in the figures represent estimated levels of cumulative flavor release after adjusting for day-to-day variation and the error bars represent 95% confidence intervals of the estimates.

**Table 10.**

| Model term | 5C and CE5C | 5D and CE5D | 5E and CE5E |
|---|---|---|---|
| Overall product effect (p-value) | 0.0196 | 0.0291 | 0.0311 |
| Product * time interaction (p-value) | 0.5893 | 0.0080 | 0.0129 |
| | | | |
| Time slice | | | |
| 5 minutes (p-value) | 0.1879 | 0.2557 | 0.2866 |
| 10 minutes (p-value) | 0.0216 | 0.0427 | 0.0165 |
| 15 minutes (p-value) | 0.0260 | 0.0032 | 0.0012 |

Statistical modeling was done using PROC MIXED procedure in SAS 9.2. Means of replicate measures (typically 3 or 4) for each time point in each experiment were used as responses in the model. Model included product, time, day, and product by time interaction as fixed effects, and experiment ID as a random effect. Repeated measures analysis was done using experiment ID as a subject and AR(1) covariance structure. Kenward-Roger method was used for degrees of freedom estimation. Conditional studentized residual plots and AIC & BIC statistics were used to monitor the quality of the fit.

The results in Table 10 show that overall differences between the products are significant for all the sets. For 5D and CE5D and 5E and CE5E, the product effect is significant and the product by time interaction is significant indicating that profiles are different. For each set, differences at 5 minutes are not statistically significant and at 10 and 15 minutes are statistically significant.

It is noted that the chewing gum prepared with a stable flavor pre-blend (5C) releases flavor better in the mechanical chew out test than the corresponding comparative chewing gum prepared with the same type and amounts of ingredients, but not containing the ingredients as a flavor pre-blend (CE5C). This result is surprising in view of the flavor release results for chewing gum prepared with unstable flavor pre-blends (5D and 5E) which did not release flavor as well as their corresponding comparative chewing gums (CE5D and CE5E) prepared with the same type and amounts of ingredients, but were not made into an unstable pre-blend.

### Example 6. Determination of hydrophilic ingredients on flavor pre-blend stability

A study was conducted to explore the effects and interactions of particulate sugar alcohol (also referred to as "polyol") type and amount, pH, acid amount, flavor type and amount, and moisture on the viscosity and stability of the flavor pre-blends. A series of flavor pre-blends were prepared as previously described containing constant levels of fat, humectant, and emulsifier. Maltitol syrup was used as the polyol syrup. In an early screening, ratios of maltitol syrup:particulate polyol of 73:0, 54:20, and 34:40 were studied. The polyols studied were mannitol, isomalt ST, isomalt GS, maltitol, sorbitol, xylitol, and erythritol. Two flavors (mint: Peppermint; fruit: strawberry watermelon) were explored in amounts of 0%, nearly 6% and 11%. Acid concentration was also explored at concentrations of 0 and 4% using citric acid crystalline granules.

The flavor pre-blend stability was determined by visual analysis 48 hours after the formation of the blend. A stable flavor pre-blend was a homogenous mass having no separated phases or layers, and no precipitated solids by visual inspection. Unstable flavor pre-blends exhibited discrete layers or precipitation of solids by visual inspection.

The samples were further tested for viscosity by warming the sample to 50°C using a warm water bath set to that temperature. Once the sample reached 50°C the viscosity reading was measured in centipoise (cP) using a Brookfield Viscometer at a temperature of 50°C, nozzle #27, 10 rpm, after 2 minutes. The viscosity was measured 24 to 48 hours after flavor pre-blend preparation.

The samples were also tested for pH using a standardized pH meter.

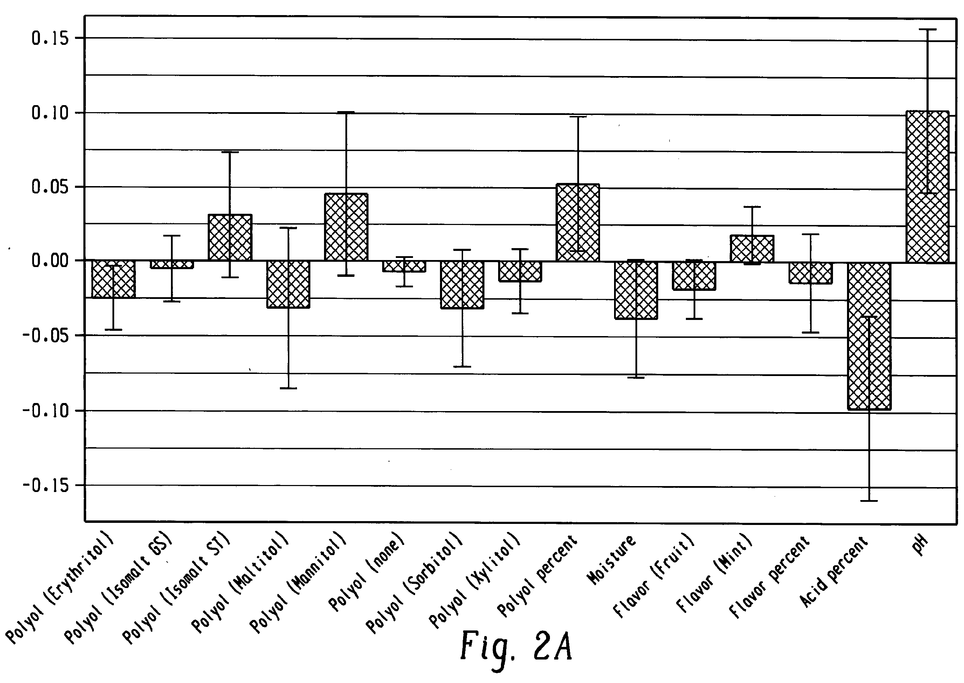

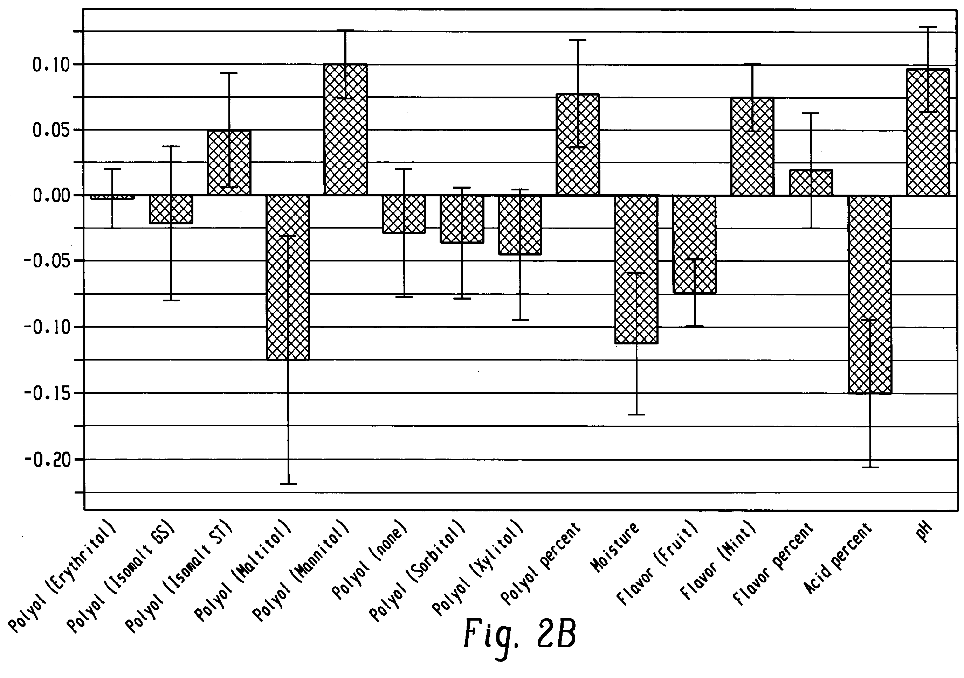

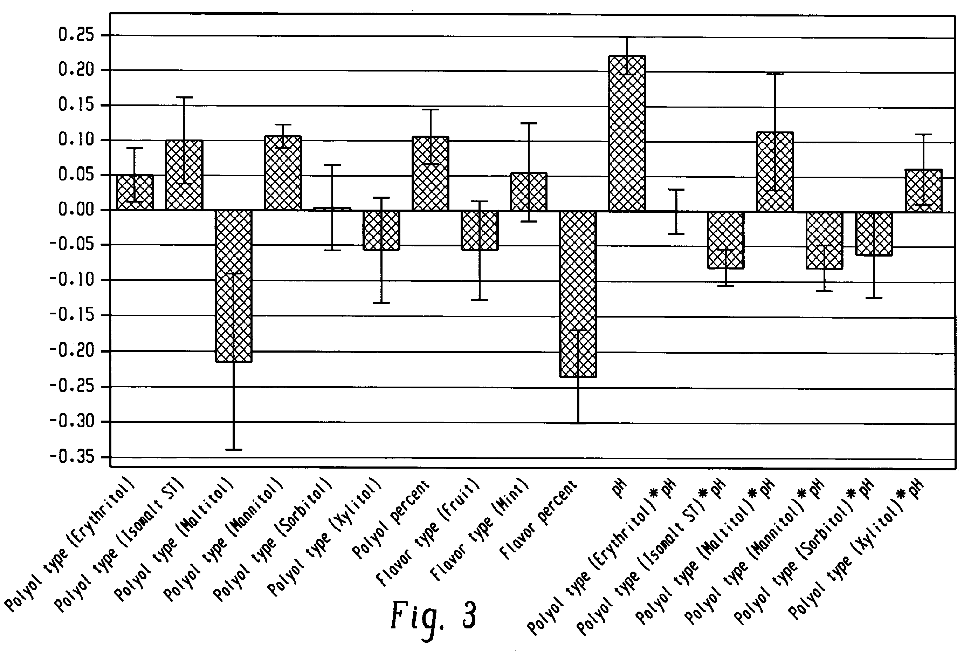

The data obtained was analyzed using Partial Least Squares (PLS) regression in the software package SIMCA-P+ 12.0 from Umetrics. The PLS approach includes generation of latent variables which are linear combinations of predictor variables. These latent variables are constructed in a way to maximize correlation with the response variables. The results of PLS are graphically presented as standardized coefficients plots (FIGS. 2a, 2b, and 3). On these plots, the bars show direction and magnitude of the effect of each factor: particulate polyol type, particulate polyol concentration, moisture, flavorant type, flavorant concentration, acid concentration, and pH. Bars above the horizontal zero line indicate positive correlations between the factor and the response, bars below the zero line indicate negative correlations. The size of the bar reflects the magnitude of the effect - the larger the bar, the larger the effect and the smaller the bar, the smaller the effect (positive or negative). In this study, 90% confidence level was considered as statistically significant, which is customary for exploratory studies. The error bars show confidence intervals of the effect as estimated by cross-validation. If one of the confidence interval includes zero, the effect is not statistically significant. In the cases where the effect is technically not statistically significant, but one of the confidence limits is very close to zero, the effect may have a directional (e.g. practical) significance. Repeating the experiment and generating additional data may likely result in such effects becoming statistically significant.

Based on the data, it was determined that i) polyol concentration and lower acid concentration had a statistically significant positive impact and ii) higher acid concentration had a statistically significant negative impact, on flavor pre-blend viscosity (FIG. 2a) and stability (FIG. 2b). Directionally, mannitol and mint flavor had a positive impact without reaching statistical significance and sorbitol and moisture had a negative impact, also without reaching statistical significance. Isomalt ST and mannitol concentration, mint flavor, and lower acid concentration had a significant positive impact and maltitol, moisture, fruit flavor and high acid concentration had a statistically significant negative impact on the stability (FIG. 2b).

Further screening results confirmed that there are differences in liquid emulsion stability profiles for different particulate polyols depending on pH, flavor type, etc. Under otherwise equal conditions, including the same viscosity levels, blends with maltitol tend to have lower stability/higher flavor separation than blends with mannitol or xylitol. Increase in pH of the blend had a statistically significant positive correlation with increase in blend stability as indicated by significantly lower flavor separation.

As can be seen in FIG. 3, mannitol and isomalt are the polyols that provide the most stable flavor pre-blends while maltitol provides the least stable. Of the polyols tested, mannitol and isomalt can be characterized as high stability polyols, maltitol can be characterized as a low stability polyol under similar destabilizing conditions because of the lower viscosity of the blend, while sorbitol, xylitol and erythritol can be characterized as medium stability polyols. Increase in pH and polyol concentration for most of the polyols studied show statistically significant positive correlation with flavor pre-blend stability and increase in flavor concentration shows statistically significant negative correlation with flavor pre-blend stability (FIG. 3).

Polyol type by pH terms show different direction suggesting that under otherwise equal conditions (e.g. flavor type, flavor concentration, and polyol concentration), stability of the flavor pre-blend is different (FIG. 3).

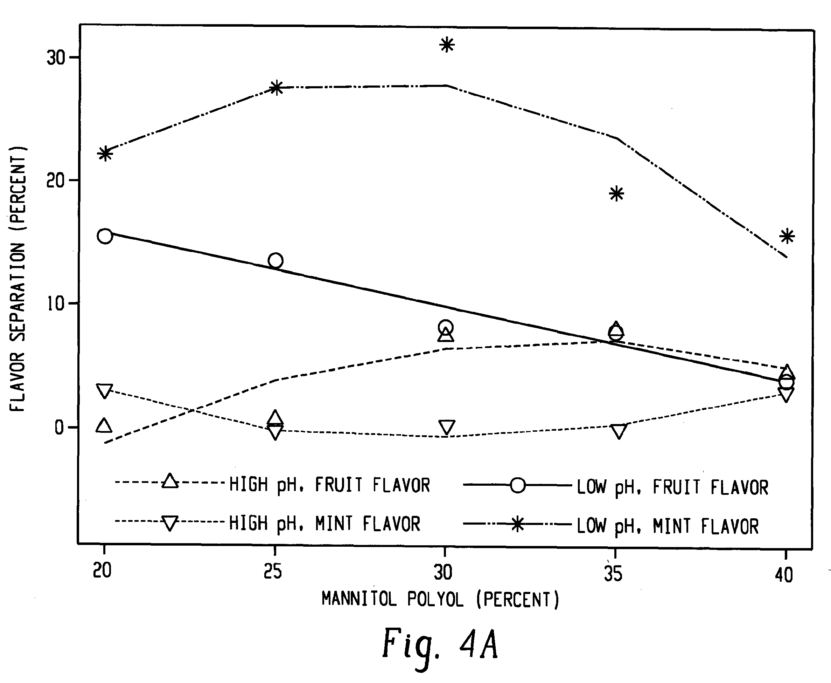

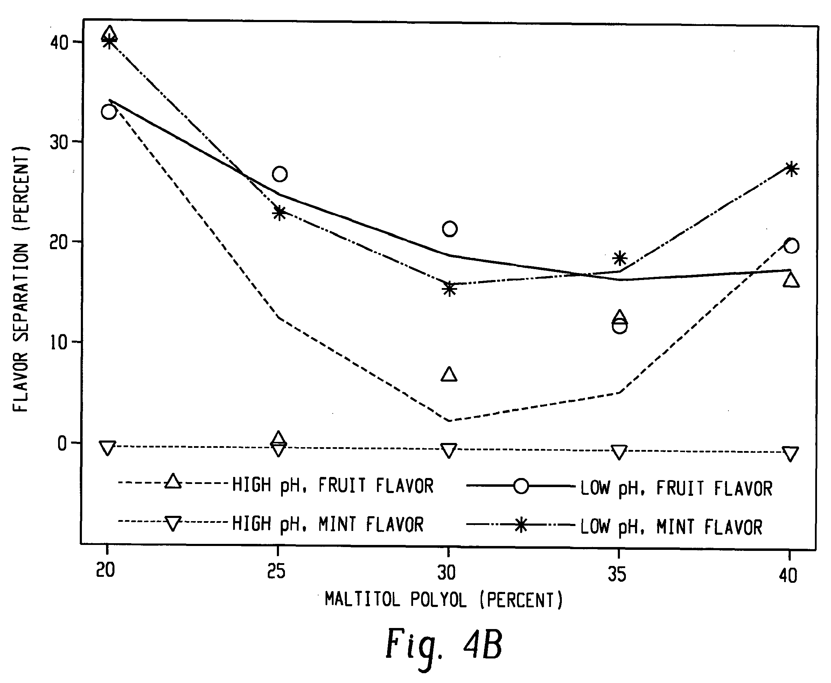

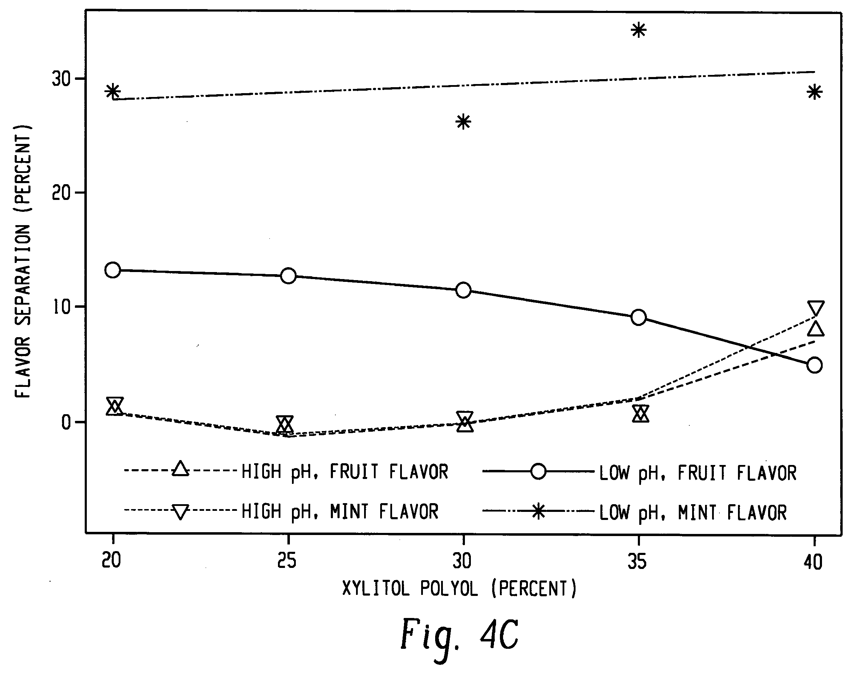

Table 11 provides a summary of flavor pre-blend stability for three particulate polyols (mannitol, xylitol, and maltitol) at different concentrations (20, 25, 30, 35, and 40%), varying pH levels (high, low), different flavor types (17% peppermint (mint) or 17% strawberry watermelon (fruit)), and citric acid concentration (0 or 4%). The amount and type of humectant (7.95%), fat (5.68%) and emulsifier (3.98%) were the same in each sample. The difference was made up with maltitol syrup. The flavor pre-blend stability cut-off was chosen at 10% of flavor separation/90% absorbed by weight percent about 48 hours after preparing the flavor pre-blend and which does not include sedimentation. A very high level of flavor was used in this experiment, and the effect of flavor separation in more stable flavor pre-blends is expected to be smaller if lower levels of flavor are used. Response profiles of the different polyols are provided in FIGS. 4a, 4b, and 4c.

**Table 11.**

| **Polyol** | **Stability range (wt% olyol)** | **pH level** | **Flavor (17%)** | **pH range** | | **Viscosity range (cP)** | | **Regression** | | | | **Equation** |
|---|---|---|---|---|---|---|---|---|---|---|---|---|
| | | | | **lower** | **upper** | **low** | **upper** | **R²** | **Intercept** | **Linear term** | **Quadratic term** | |
| Mannitol | unstable | low | Mint | 2.67 | 3.07 | 3600 | 15850 | 79.5 | -45.167 | 5.296 | -0.095 | Flavor separation(%) = - 45.167 + 5.296 * polyol(%) - 0.095 * polyol(%) squared |
| Mannitol | stable at 30-40% | low | Fruit | 2.5 | 2.73 | 6950 | 51000 | 96.19 | 28.308 | -0.675 | 0.002 | Flavor separation(%) = 28.308 - 0.675 * polyol(%) + 0.002 * polyol(%) squared |
| Mannitol | stable at 20-40% | high | Mint | 3.71 | 5.12 | 33100 | 51950 | 95.21 | 32.865 | -2.238 | 0.037 | Flavor separation(%) = 32.865 - 2.238 * polyol(%) + 0.037 * polyol(%) squared |
| Mannitol | stable at 20-40% | high | Fruit | 3.54 | 3.89 | 51250 | 51900 | 74.08 | -45.459 | 3.148 | -0.047 | Flavor separation(%) = - 45.459 + 3.148 * polyol(%) - 0.047 * polyol(%) squared |
| Maltitol | unstable | low | Mint | 2.1 | 3.33 | 15650 | 50000 | 99.42 | 193.663 | -11.266 | 0.178 | Flavor separation(%) = 193.663 - 11.266 * polyol(%) + 0.178 * polyol(%) squared |
| Maltitol | unstable | low | Fruit | 2.28 | 2.67 | 2650 | 9050 | 84.33 | 106.767 | -5 | 0.07 | Flavor separation(%) = 106.767 - 5 * polyol(%) + 0.07 * polyol(%) squared |
| Maltitol | stable at 20-40% | high | Mint | 5.87 | 6.3 | 17850 | 51650 | 0 | - | | | - |
| Maltitol | stable at 25-40% | high | Fruit | 3.38 | 4.27 | 4350 | 9950 | 70.47 | 247.613 | -15.625 | 0.249 | Flavor separation(%) = 247.613 - 15.625 * polyol(%) + 0.249 * polyol(%) squared |
| Xylitol | unstable | low | Mint | 2.51 | 3.24 | 7000 | 17250 | 9.8 | 26.51 | 0.087 | 0.001 | Flavor separation(%) = 26.51 + 0.087 * polyol(%) + 0.001 * polyol(%) squared |
| Xylitol | stable at 35-40% | low | Fruit | 2.2 | 3.07 | 7700 | 36800 | 99.92 | 0.969 | 1.127 | -0.025 | Flavor separation(%) = 0.969 + 1.127 * polyol(%) - 0.025 * polvol(%) squared |
| Xylitol | stable at 25-35% | high | Mint | 3.94 | 5.44 | 6450 | 22950 | 85.71 | 40.062 | -3.146 | 0.059 | Flavor separation(%) = 40.062 - 3.146 * polyol(%) + 0.059 * polyol(%) squared |
| Xylitol | stable at 20-40% | high | Fruit | 3.42 | 4.05 | 3950 | 12750 | 85.71 | 32.283 | -2.535 | 0.048 | Flavor separation(%) = 32.283 - 2.535 * polyol(%) + 0.048 * polyol(%) squared |

For each of the data subsets (polyol type, pH level and flavor type; FIGS. 4a-4c and in Table 11), quadratic regression was fitted using statistical software package R 2.13.1 to capture non-linear dependencies. The quadratic regression equations had a general form: Y = b₀ + b₁*X + b₂* X², where Y is the response (Flavor separation %), X is the predictor (polyol %), b₀ - coefficient for an intercept, b₁ - coefficient for a liner term and b₂ is a coefficient for a quadratic term. This is a case of a polynomial regression with degree two which is commonly used to describe nonlinear trends for one predictor and one response. A regression was not fitted for maltitol with a high pH level and mint flavor as R² was zero. For xylitol at low pH and mint flavor, all samples were very unstable at polyol % of 20-40, thus the R² is very low.

### Example 7. Confocal Raman Analysis of flavor pre-blend and chewing gum prepared with the flavor pre-blend

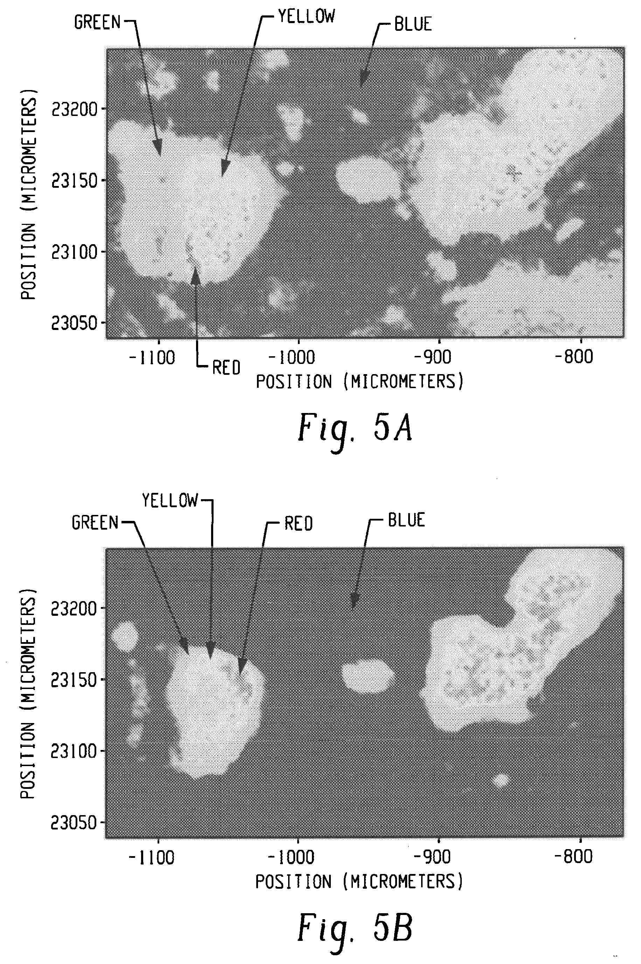

Confocal Raman Spectroscopy was used to analyze a sample of flavor pre-blend containing a fruit flavorant as well as a chewing gum prepared with the flavor pre-blend. Data was acquired using a Thermo Nicolet Almega XR Dispersive Raman system (S/N AGE0700232) equipped with both 532nm and 780nm excitation lasers. A spectrum of each ingredient of the flavor pre-blend was individually obtained to determine characteristic peaks in order to distinguish the ingredients within the blend. The fat used in the flavor pre-blend exhibited a characteristic Raman peak at 1437 cm⁻¹ while the fruit flavorant exhibited characteristic peaks at 1740, 1694, and 1596 cm⁻¹. Sample preparation involved plating the flavor pre-blend on a quartz slide and covering with a quartz cover slip prior to analysis. A 350 x 200 micrometer area of a sample of flavor pre-blend was analyzed for fat and flavorant location. The three flavorant peaks were used and spectroscopic data was obtained at a 3 x 3 micrometer step size of the 350 x 200 micrometer sample area. A total of 8487 spectra were acquired at 8s/scan/step. The data is provided graphically in FIG. 5a where the color intensity is related to flavorant location and concentration in the order of Red>Yellow>Green>Blue. Data was obtained for the location of fat in the same sample area using the peak at 1437 cm⁻¹. The data is provided graphically in FIG. 5b where the color intensity is related to fat location and concentration in the order of Red>Yellow>Green>Blue. These results illustrate that the fat and the flavorant components are located in similar areas of the blend.

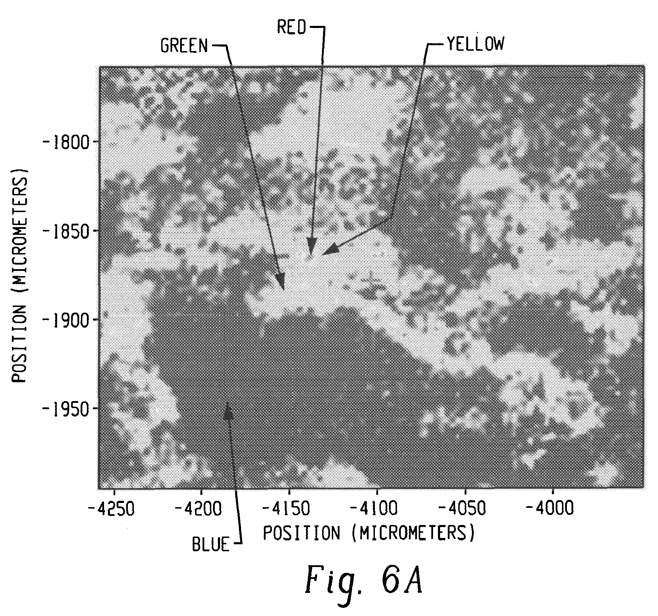

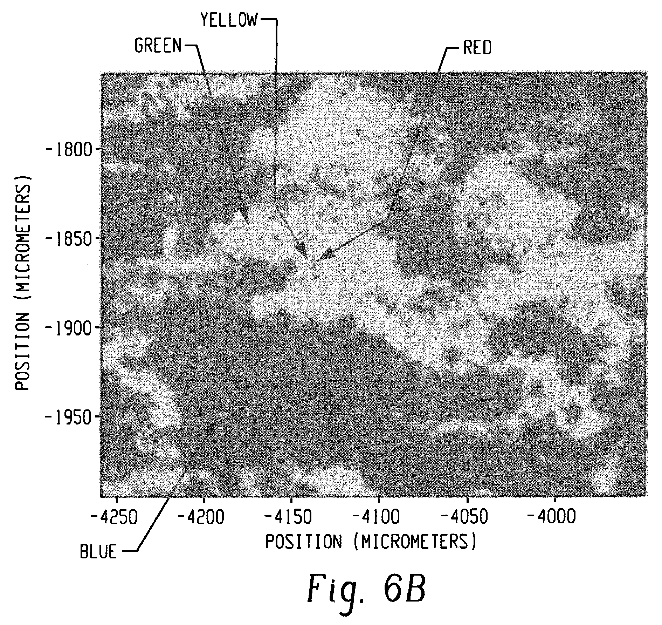

A chewing gum was prepared containing the flavor pre-blend used in the Raman analysis. The gum sample was prepared by cutting a cross-section of the gum material and then analyzing directly on the Raman system. A 300 x 150 micrometer area of a sample of the chewing gum was analyzed by Raman spectroscopy for fat and flavorant location. The three flavorant peaks were used and spectroscopic data was obtained at a 3 x 3 micrometer step size of the 300 x 150 micrometer sample area. A total of 8320 spectra were acquired at 10s/scan/step. The data is provided graphically in FIG. 6a where the color intensity is related to flavorant location and concentration in the order of Red>Yellow>Green>Blue. Data was obtained for the location of fat in the same sample area using the peak at 1437 cm⁻¹. The data is provided graphically in FIG. 6b where the color intensity is related to fat location and concentration in the order of Red>Yellow>Green>Blue. These results illustrate that the fat and the flavorant components can be distinguished in the chewing gum sample even though the signal is weaker due to the flavor pre-blend being dispersed within the chewing gum composition. The data shows the fat and flavorant are located substantially in the same area of the chewing gum sample, thus inferring a discrete phase of flavor pre-blend containing fat and flavor dispersed in the continuous chewing gum phase.

### Example 8. Confocal Raman Analysis. Characterization of Co-localization of fat and flavorant of a chewing gum prepared with a flavor pre-blend as compared to a chewing gum without a flavor pre-blend

A sugar-free chewing gum (Example 8A) comprising a stable flavor pre-blend was prepared from the ingredients listed in Table 12 below and compared to a comparative traditional chewing gum formulation of similar ingredients, but not containing a flavor pre-blend (Comparative Example CE8A).

**Table 12.**

| **Ingredient** | **8A** | **CE8A** |
|---|---|---|
| | % weight based on total wt chewing gum | |
| Gum base | 28.41 | 28.41 |
| Emulsifier | 0.13 | 0.61 |
| Fat (including 0.1% oil soluble red color) | - | 0.82 |
| Maltitol syrup | - | 6.85 |
| Glycerin | - | 1.02 |
| Sugar alcohol powder | 54.16 | 56.85 |
| Wintergreen | 1.47 | 1.96 |
| High intensity sweetener | 3.39 | 3.48 |
| | | |
| **Flavor pre-blend** | 12.44 | - |
| Sugar alcohol syrup | 6.85 | - |
| Sugar alcohol powder | 2.69 | - |
| Glycerin | 1.02 | - |
| Fat (including 0.1% oil soluble red color) | 0.82 | - |
| Emulsifier | 0.48 | - |
| Wintergreen | 0.49 | - |
| High intensity sweetener | 0.09 | - |
| Total chewing gum (wt %) | 100 | 100 |

The samples of chewing gum 8A with a flavor pre-blend and CE8A without a flavor pre-blend were analyzed by Confocal Raman Spectroscopy to determine the degree of overlap between the locations of the fat component and the flavorant component in the sample area analyzed. Data was acquired using a Thermo Nicolet Almega XR Dispersive Raman system (S/N AGE0700232) equipped with both 532nm and 780nm excitation lasers. The gum samples were prepared by cutting a cross-section of the gum material and then analyzing the samples directly on the Raman system. The spectroscopic data for sample 8A was obtained using a 25 x 25 micrometer step size across the sample area. A total of 612 spectra were acquired at a 10s/scan/step. The spectroscopic data for sample CE8A was obtained using a 3 x 3 micrometer step size across the sample area. A total of 5313 spectra were acquired at a 10s/scan/step.

A characteristic absorbance band for each of the fat and the flavorant was determined. For fat, the vibrational band of 1437cm⁻¹ was used and for the flavorant the vibrational band of 810 cm⁻¹ was used. Using the characteristic vibrational band for fat, an area of the chewing gum sample 8A was scanned to determine localized regions or concentrations of fat. The result of the scan for fat for chewing gum sample 8A is provided in FIG. 7a where the color intensity is related to fat location and concentration on the order of Red>Yellow>Green>Blue.

Using the characteristic vibrational band for flavorant, the exact same area of the chewing gum sample of 8A was scanned to determine localized regions or concentrations of flavorant. The result of the scan for flavorant is provided in FIG. 7b where the color intensity is related to flavorant location and concentration on the order of Red>Yellow>Green>Blue. The position of the localized regions of fat in FIG. 7a and flavorant in FIG. 7b are exemplified by circles surrounding regions of high concentration according to the previously mentioned color scale. As shown in these figures, for the same sample area of chewing gum 8A, the localized regions of fat (FIG. 7a) are in substantially the same spatial area of the chewing gum sample as the localized regions of flavorant (FIG. 7b). The localized regions of fat and flavorant within the sample area can be characterized as being substantially co-localized.

The degree of co-localization of fat and flavorant in the sample area of chewing gum 8A analyzed by Confocal Raman Spectroscopy can be calculated utilizing the Omnic Atlus software version 7.3 (Thermo Electron Corporation) according to the following procedure. Prior to individual band analysis, all spectral maps were processed so that all spectra that were acquired were normalized and baseline corrected. After normalization and baseline correction were complete, a profile setup analysis was performed on the spectral map in which the peak area of the unique vibrational mode for fat was individually analyzed across the entire sample image. Likewise, a profile setup analysis was performed on the spectral map in which the peak area of the unique vibrational mode for flavorant was individually analyzed across the entire sample image. After searching all of the collected spectra, an intensity profile (red>yellow>green>blue) specific to that individual ingredient is then shown side-by-side with the brightfield image. At this point, the Atlus image analysis feature is used to overlay the chemical signature of the specific individual ingredient (fat or flavorant) on top of the visual image. The Atlus image analysis feature automatically calculates thresholds related to the ingredient distribution. Then the feature sizing setup is used to calculate the individual amount of each area occupied by the individual ingredient (fat or flavorant) from the spectral map. The output of this results in the creation of a feature sizing results table (histogram) that includes the feature number (an actual area in the image with either red, yellow or green intensity, respectively), the corresponding size of that area (red, yellow or green, respectively), a total image area, a total feature area and the feature area percentage. Each of the fat and the flavorant had a similar feature sizing results histogram table that was then manually compared to each other so that the degree of co-localization can be calculated. This analysis and calculation was repeated three times and the standard deviation is listed below.

From the scan (map) obtained using the characteristic vibrational band for fat (FIG. 7a), the total percent area of larger fat droplets occupying the entire scanned area was calculated to be 77%. Thus, the percent of localized regions of fat for FIG. 7a, is 77%. From the scan obtained using the characteristic vibrational band for flavorant (FIG. 7b) the percent area of flavorant occupying the entire scanned area was determined. The percent area of flavorant that overlaps the localized regions of fat for Example 8A was calculated as 66%. To determine the degree of co-localization of fat and flavorant for the entire area analyzed by Raman, the 77% localization of fat was multiplied by the 66% overlap of flavorant to provide approximately 50.8% for Example 8A containing the flavor pre-blend ((0.77*0.66)* 100=50.8%, standard deviation of 1.7% with a 3 sigma of 5.1%).

Comparative chewing gum formulation CE8A containing the same type and amount of ingredients as 8A, yet which are not prepared as a flavor pre-blend, does not exhibit the same degree of spatial overlap of fat (FIG. 8a) and flavorant (FIG. 8b) as analyzed by Confocal Raman Spectroscopy. As shown, localization of the fat and flavorant appear to be independent of each other, i.e, no enhanced spatial overlap of these ingredients. The degree of co-localization of fat and flavorant was determined according to the procedure previously described. The percent of localized regions of fat for CE8A was calculated to be 27%. The percent area of flavorant that overlaps the localized regions of fat for CE8A was calculated to be 19%. The degree of co-localization of fat and flavorant for the entire area of sample CE8A analyzed by Raman was approximately 5.1% ((0.27*0.19)*100=5.1% standard deviation of 0.5% with a 3 sigma about 6.5%).

### Example 9. Photocentrifuge dispersion analyzer analysis, characterization of chewing gum prepared with a flavor pre-blend to a chewing gum without a flavor pre-blend

Samples of chewing gum containing a flavor pre-blend (Example 9A) and a comparative traditional chewing gum formulation of similar ingredients, but not containing a flavor pre-blend (Comparative Example CE9A) were prepared with the components listed in Table 13.

**Table 13.**

| **Ingredient** | **9A** | **CE9A** |
|---|---|---|
| | % weight based on total wt chewing gum | |
| Gum base | 28.41 | 28.41 |
| Emulsifier | 0.13 | 0.61 |
| Fat (including 10% oil soluble red color) | - | 0.82 |
| Maltitol syrup | - | 6.46 |
| Glycerin | - | 1.02 |
| Sugar alcohol powder | 54.29 | 57.23 |
| Wintergreen | 1.48 | 1.97 |
| High intensity sweetener | 3.39 | 3.48 |
| | | |
| **Flavor pre-blend** | 12.3 | - |
| Sugar alcohol syrup | 6.46 | - |
| Sugar alcohol powder | 2.94 | - |
| Glycerin | 1.02 | - |
| Fat (including 10% oil soluble red color) | 0.82 | - |
| Emulsifier | 0.48 | - |
| Wintergreen | 0.49 | - |
| High intensity sweetener | 0.09 | - |
| Total chewing gum (wt %) | 100 | 100 |

Aqueous extracts from samples of 8A, CE8A, 9A, and CE9A were analyzed using a photocentrifuge dispersion analyzer LUMiSizer® Model 611 by L.U.M. GmbH. The chewing gums were prepared in 2mm thick sheets that were first sliced in 2-3mm strips then cut into 5 mm lengths. A 6.6 gram quantity of each sample was soaked in 12 grams of water at room temperature for 12 hours to form the aqueous extracts. Each of the gum extracts was poured off and 350 microliter aliquots from each extract was placed in LumiSizer polycarbonate cuvettes (2mm path length) and spun at 4000 rpm (2000 g-force) for 20,000 seconds at 25°C. These samples were scanned every 60 seconds for 3000 seconds, then every 120 seconds for the next 7000 seconds followed by every 240 seconds for the remaining 10,000 seconds. The LumiSizer data were analyzed by SepView 6.1 software (LUM GmbH) to calculate a creaming rate for each sample provided in Table 14. The creaming rate refers to the rate that material accumulates to the top surface of a dispersion.

**Table 14.**

| Example | Run | Creaming rate | Std. Deviation |
|---|---|---|---|
| | | %/second | %/second |
| 8A | 1 | 0.0317 | 0.0004 |
| 8A | 2 | 0.0321 | 0.0009 |
| CE8A | 1 | 0.0609 | 0.0054 |
| CE8A | 2 | 0.0611 | 0.0052 |
| | | %/hour | %/hour |
| 9A | 1 | 11.91 | 1.20 |
| 9A | 2 | 10.56 | 1.30 |
| CE9A | 1 | 58.02 | 4.19 |
| CE9A | 2 | 63.17 | 0.54 |

As shown by the data, the creaming rates of the aqueous extracts of the comparative chewing gums were at least 2 times faster than the aqueous extracts of the chewing gum prepared with a flavor pre-blend.

As used herein the terms "comprising" (also "comprises," etc.), "having," and "including" is inclusive (open-ended) and does not exclude additional, unrecited elements or method steps. The singular forms "a," "an," and "the" include plural referents unless the context clearly dictates otherwise. The endpoints of all ranges directed to the same characteristic or component are independently combinable, and inclusive of the recited endpoint. The term "a combination thereof" is inclusive two or more components of the list. The term "homogeneous" refers to a uniform blend of the components.

## Claims

1. A chewing gum composition, comprising:
a gum base; and
a flavor pre-blend comprising i) a saccharide syrup or sugar alcohol syrup, ii) a particulate saccharide or particulate sugar alcohol, iii) an emulsifier, iv) a flavorant, v) a fat, and optionally vi) a food acid or salt thereof, a high intensity sweetener, a sensate, or a combination thereof;
wherein the chewing gum composition comprises localized regions of the fat and the flavorant, wherein the localized regions of the fat and the flavorant have a degree of co-localization of at least 10% as determined by Confocal Raman Spectroscopy.

2. A chewing gum composition, comprising:
a gum base; and
a flavor pre-blend comprising i) a saccharide syrup or sugar alcohol syrup, ii) a particulate saccharide or particulate sugar alcohol, iii) an emulsifier, iv) a flavorant, v) a fat, and optionally vi) a food acid or salt thereof, a high intensity sweetener, a sensate, or a combination thereof;
wherein the flavor pre-blend exhibits less than 10% phase separation by visual inspection after centrifuging the flavor pre-blend at 239 g-force and 25°C for 20 minutes; and
wherein the chewing gum composition releases more flavor than a comparative chewing gum having identical type and amount of ingredients, wherein the ingredients i)- vi) are not prepared as a pre-blend; or
wherein the flavor pre-blend exhibits less than 10% phase separation by visual inspection after centrifuging the flavor pre-blend at 239 g-force and 25°C for 20 minutes; and
wherein an aqueous extraction of the chewing gum composition exhibits a creaming rate that is slower than an aqueous extraction of a comparative chewing gum having identical type and amount of ingredients, wherein ingredients i)- vi) are not prepared as a pre-blend,
wherein the creaming rate is determined using a photocentrifuge dispersion analyzer, wherein the creaming rate for the aqueous extraction of the chewing gum composition is less than 50% of the creaming rate of the aqueous extraction of the comparative chewing gum when analyzed using a photocentrifuge dispersion analyzer at 2000 g-force for 20,000 seconds at 25°C.

3. The chewing gum composition of claim 2, wherein after 10 minutes of mechanical chewing, the chewing gum composition releases 4 to 11% more flavor than a comparative chewing gum having identical type and amount of ingredients, wherein ingredients i)- vi) are not prepared as a pre-blend.

4. The chewing gum composition of claim 2, wherein the flavor pre-blend exhibits less than 10% phase separation determined by visual inspection after centrifuging the flavor pre-blend at 1699 g-force and 25°C for 30 minutes, or wherein the flavor pre-blend exhibits no phase separation when tested using a photocentrifuge dispersion analyzer at 25°C, from 100 to 1000 g-force for 3 hours.

5. A chewing gum composition, comprising:
a gum base;
a bulk sweetener; and
a flavor pre-blend comprising i) a sugar alcohol syrup, ii) particulate mannitol, isomalt, or a combination thereof, iii) an emulsifier, iv) a flavorant, v) a fat, and optionally vi) a humectant, a food acid or salt thereof, a high intensity sweetener, a sensate, or a combination thereof;
wherein the flavor pre-blend is present in an amount of 8 to 15 wt% of the total chewing gum composition; and
wherein the flavor pre-blend is prepared separately from a mixture of gum base and bulk sweetener at a temperature less than or equal to 85°C, and then added to the mixture to form a homogeneous chewing gum composition.

6. The chewing gum composition of claim 5, wherein the flavor pre-blend exhibits less than 10% phase separation determined by visual inspection after centrifuging the flavor pre-blend at 1699 g-force and 25°C for 30 minutes, and
the flavor pre-blend comprises particulate mannitol; and
wherein the flavor pre-blend has a viscosity of 6950 to 51000 cP at 50°C.

7. The chewing gum of any one of claims 1-6, wherein the sugar alcohol syrup of the flavor pre-blend is a hydrogenated starch hydrolysate syrup, an isomaltulose syrup, a maltitol syrup, a sorbitol syrup, a polyglucitol syrup, or a combination thereof.

8. The chewing gum of any one of claims 1-6, wherein the flavor pre-blend comprises the saccharide syrup or sugar alcohol syrup in an amount of 30 to 75 wt% based on the total weight of the flavor pre-blend;
wherein the flavor pre-blend comprises a particulate saccharide or particulate sugar alcohol in an amount of 5 to 40 wt% based on the total weight of the flavor pre-blend;
wherein the flavor pre-blend comprises a flavorant in an amount of 0.01 to 20 wt% based on the total weight of the flavor pre-blend;
wherein the flavor pre-blend comprises a fat in an amount of 2.5 to 10 wt% based on the total weight of the flavor pre-blend;
wherein the flavor pre-blend comprises an emulsifier in an amount of 1.0 to 15 wt% based on the total weight of the flavor pre-blend;
wherein the flavor pre-blend further comprises a humectant in an amount of 0.1 to 30 wt% based on the total weight of the flavor pre-blend; or
wherein the chewing gum comprises the flavor pre-blend in an amount of 5 to 60 wt% based on the total weight of the chewing gum.

9. The chewing gum of any one of claims 1-4, wherein the particulate sugar alcohol of the flavor pre-blend is erythritol, galactitol, a hydrogenated starch hydrolysate, isomalt, lactitol, maltitol, mannitol, polyglycitol, sorbitol, xylitol, or a combination thereof.

10. A method of making a chewing gum composition, comprising:
mixing gum base, optionally with a bulk sweetener, to form an intermediate chewing gum composition; and
mixing the intermediate chewing gum composition with a flavor pre-blend to form a chewing gum composition,
wherein the flavor pre-blend comprises i) a saccharide syrup or sugar alcohol syrup, ii) a particulate saccharide or particulate sugar alcohol, iii) emulsifier, iv) a flavorant, v) a fat and optionally vi) a humectant, a food acid or salt thereof, a high intensity sweetener, a sensate, or a combination thereof;
wherein the flavor pre-blend is prepared by blending the flavor pre-blend ingredients wherein the process to prepare the flavor pre-blend is conducted entirely at a temperature less than or equal to 85 °C; and
wherein the flavor pre-blend is added as the final ingredient in the process.

## Patentansprüche

1. Eine Kaugummizusammensetzung, aufweisend:
- eine Gummibasis, und
- eine Aroma-Vormischung, aufweisend i) ein Saccharid-Sirup oder Zuckeralkohol-Sirup, ii) ein partikelförmiges Saccharid oder partikelförmiger Zuckeralkohol, iii) ein Emulgator, iv) Geschmackstoff v) ein Fett und optional vi) eine Lebensmittelsäure oder ein Salz davon, ein hochintensives Süßungsmittel, eine empfindungs-hervorrufende Substanz oder eine Kombination hiervon,
- wobei die Kaugummizusammensetzung begrenzte Bereiche von dem Fett und dem Geschmacksstoff aufweist,
- wobei die begrenzten Bereiche des Fetts und des Geschmackstoffs einen Grad von gemeinsamer Begrenzung von zumindest 10 % aufweisen, welcher nach der konfokalen Raman Spektroskopie bestimmt ist.

2. Kaugummizusammensetzung, aufweisend:
- eine Gummibasis, und
- eine Aroma-Vormischung, aufweisend i) ein Saccharid-Sirup oder Zuckeralkohol-Sirup, ii) ein partikelförmiges Saccharid oder partikelförmiger Zuckeralkohol, iii) ein Emulgator, iv) ein Geschmackstoff v) ein Fett und wahlweise vi) eine Lebensmittelsäure oder ein Salz davon, ein hochintensives Süßungsmittel, eine empfindungs-hervorrufende Substanz oder eine Kombination hiervon,
- wobei die Aroma-Vormischung weniger als 10 % Phasenseparation aufweist, welche durch visuelle Untersuchung nach dem Zentrifugieren der Aroma-Vormischung bei 239 G-Kräften und 25°C für 20 Minuten bestimmt ist, und
- wobei die Kaugummizusammensetzung mehr Geschmack als ein vergleichbarer Kaugummi mit dem identischen Art und Menge an Inhaltsstoffen abgibt, wobei die Inhaltsstoffe i)-vi) nicht als eine Vormischung zubereitet sind, oder
- wobei die Aroma-Vormischung weniger als 10 % Phasentrennung aufweist, welche mittels visueller Untersuchung nach dem Zentrifugieren der Aroma-Vormischung bei 239 G-Kräften und 25°C für 20 Minuten bestimmt ist, und
- wobei eine wässrige Extraktion der Kaugummizusammensetzung eine langsamere Aufrahmrate aufweist als eine wässrige Extraktion eines vergleichbaren Kaugummis mit identischer Art und Menge an Inhaltsstoffen, wobei die Inhaltsstoffe i)-vi) nicht als eine Vormischung zubereitet sind,
- wobei die Aufrahmrate mittels eines Photozentrifugal-Dispersionsanalysators bestimmt ist, wobei die Aufrahmrate bei der wässrigen Extraktion der Kaugummizusammensetzung weniger als 50 % der Aufrahmrate bei wässriger Extraktion eines vergleichbaren Kaugummis ist, wenn diese mittels eines Photozentrifugal-Dispersionsanalysators bei 2000 G-Kräften für 20,000 Sekunden bei 25°C analysiert werden.

3. Kaugummizusammensetzung nach Anspruch 2,
- wobei nach 10 Minuten des mechanischen Kauens die Kaugummizusammensetzung 4 bis 11 % mehr Geschmack als ein vergleichbarer Kaugummi abgibt, welcher die identische Art und Menge an Inhaltsstoffen aufweist, wobei die Inhaltsstoffe i)-vi) nicht als Vormischung zubereitet sind.

4. Kaugummizusammensetzung nach Anspruch 2,
- wobei die Aroma-Vormischung weniger als 10 % Phasentrennung aufweist, welche mittels visueller Untersuchung nach dem Zentrifugieren der Aroma-Vormischung bei 1699 G-Kräften und 25°C für 30 Minuten bestimmt ist, oder
- wobei die Aroma-Vormischung keine Phasenseparation aufweist, wenn diese mittels einer Photozentrifugal-Disperionsanalysators bei 25°C zwischen 100 und 1000 G-Kräften für 3 Stunden geprüft wird.

5. Kaugummizusammensetzung, aufweisend:
- eine Gummibasis,
- ein Füllsüßsoff, und eine Aroma-Vormischung, aufweisend i) ein Zuckeralkohol-Sirup, ii) partikelförmiges Mannitol, Isomalt oder eine Kombination hiervon, iii) einen Emulgator, iv) ein Geschmacksstoff, v) ein Fett und optional vi) ein Feuchthaltemittel, eine Lebensmittelsäure oder ein Salz davon, ein hochintensiver Süßstoff, eine empfindungs-hervorrufende Substanz oder eine Kombination davon,
- wobei die Aroma-Vormischung in einer Menge von 8 bis 15 Gew.-% der gesamten Kaugummizusammensetzung vorliegt, und
- wobei die Aroma-Vormischung bei einer Temperatur von weniger als oder gleich 85°C, getrennt von einer Mischung von Gummibasis und Füllsüßstoff, zubereitet wird und dann zu der Mischung zum Bilden einer homogenen Kaugummizusammensetzung hinzugegeben wird.

6. Kaugummizusammensetzung nach Anspruch 5,
- wobei die Aroma-Vormischung weniger als 10 % Phasentrennung aufweist, welche mittels visueller Untersuchung nach dem Zentrifugieren der Aroma-Vormischung bei 1699 G-Kräften und 25°C für 30 Minuten untersucht bestimmt ist, und
- die Aroma-Vormischung partikelförmiges Mannitol aufweist und
- wobei die Aroma-Vormischung eine Viskosität von 6950 bis 51.000 cP bei 50°C hat.

7. Kaugummi nach einem der Ansprüche 1 bis 6,
- wobei der Zuckeralkohol-Sirup der Aroma-Vormischung ein hydrierter Stärkehydrolisat-Sirup, ein Isomaltulose-Sirup, ein Malatit-Sirup, ein Sorbitol-Sirup, ein Polyglucitol-Sirup oder eine Kombination hiervon ist.

8. Kaugummi nach einem der Ansprüche 1 bis 6,
- wobei die Aroma-Vormischung den Saccharid-Sirup oder den Zuckeralkohol-Sirup in einer Menge von 30 bis 75 Gew.-% aufweist, basierend auf dem Gesamtgewicht der Aroma-Vormischung,
- wobei die Aroma-Vormischung ein partikelförmiges Saccharid oder partikelförmigen Zuckeralkohol in einer Menge von 5 bis 40 Gew.-% aufweist, basierend auf dem Gesamtgewicht der Aroma-Vormischung,
- wobei die Aroma-Vormischung eine Geschmacksstoff in einer Menge von 0,01 bis 20 Gew.-% aufweist, basierend auf dem Gesamtgewicht der Aroma-Vormischung,
- wobei die Aroma-Vormischung ein Fett in einer Menge von 2,5 bis 10 Gew.-% aufweist, basierend auf dem Gesamtgewicht der Aroma-Vormischung,
- wobei die Aroma-Vormischung einen Emulgator in einer Menge von 1,0 bis 15 Gew.-% aufweist, basierend auf dem Gesamtgewicht der Aroma-Vormischung,
- wobei die Aroma-Vormischung weiter ein Feuchthaltemittel in einer Menge von 0,01 bis 30 Gew.-% aufweist, basierend auf dem Gesamtgewicht der Aroma-Vormischung, oder
- wobei das Kaugummi eine Aroma-Vormischung in einer Menge von 5 bis 60 Gew.-% aufweist, basierend auf dem Gesamtgewicht des Kaugummis.

9. Kaugummi nach einem der Ansprüche 1 bis 4,
- wobei der partikelförmige Zuckeralkohol der Aroma-Vormischung Erythritol, Galactitol, hydriertes Stärkehydrolisat, Isomalt, Lactitol, Malatit, Mannitol, Polyglycitol, Sorbitol, Xylitol oder eine Kombination hiervon ist.

10. Verfahren zum Herstellen einer Kaugummizusammensetzung, aufweisend:
- Mischen einer Gummibasis, optional mit einem Füllsüßstoff, zum Bilden einer intermediären Kaugummizusammensetzung, und
- Mischen der intermediären Kaugummizusammensetzung mit einer Aroma-Vormischung zum Bilden der Kaugummizusammensetzung,
- wobei die Aroma-Vormischung i) ein Saccharid-Sirup oder Zuckeralkohol-Sirup, ii) ein partikelförmiges Saccharid oder partikelförmigen Zuckeralkohol, iii) einen Emulgator, iv) ein Geschmacksstoff, v) ein Fett und optional vi) ein Feuchthaltemittel, eine Lebensmittelsäure oder ein Salz hiervon, einen hochintensiven Süßstoff, eine empfindungs-hervorrufende Substanz oder eine Kombination hiervon aufweist,
- wobei die Aroma-Vormischung durch Mischen der Aroma-Vormischungs-Inhaltstoffe hergestellt wird, wobei der Prozess des Herstellens der Aroma-Vormischung vollständig bei einer Temperatur von weniger oder gleich 85°C durchgeführt wird, und
- wobei die Aroma-Vormischung als eine letzte Zutat in den Prozess hinzugegeben wird.

## Revendications

1. Composition pour gomme à mâcher, comprenant :
- une base de gomme ; et
- un prémélange d'arôme comprenant i) un sirop à base de saccharide ou un sirop à base d'alcool glucidique, ii) un saccharide particulaire ou un alcool glucidique particulaire, iii) un émulsifiant, iv) une essence, v) une matière grasse, et facultativement vi) un acide alimentaire ou un sel de celui-ci, un édulcorant haute intensité, un agent induisant une sensation, ou une combinaison de ceux-ci ;
laquelle composition pour gomme à mâcher comprend des régions localisées de la matière grasse et de l'essence, les régions localisées de la matière grasse et de l'essence ayant un degré de co-localisation d'au moins 10 % tel que déterminé par spectroscopie Raman confocale.

2. Composition pour gomme à mâcher, comprenant :
- une base de gomme ; et
- un prémélange d'arôme comprenant i) un sirop à base de saccharide ou un sirop à base d'alcool glucidique, ii) un saccharide particulaire ou un alcool glucidique particulaire, iii) un émulsifiant, iv) une essence, v) une matière grasse, et facultativement vi) un acide alimentaire ou un sel de celui-ci, un édulcorant haute intensité, un agent induisant une sensation, ou une combinaison de ceux-ci ;
dans laquelle le prémélange d'arôme présente moins de 10 % de séparation de phase par inspection visuelle après centrifugation du prémélange d'arôme à une force de 239 g et à 25 °C pendant 20 minutes ; et
laquelle composition pour gomme à mâcher libère davantage d'arôme qu'une gomme à mâcher comparative ayant un type et une quantité d'ingrédients identiques, dans laquelle les ingrédients i) à vi) ne sont pas préparés sous la forme d'un prémélange ; ou
dans laquelle le prémélange d'arôme présente moins de 10 % de séparation de phase par inspection visuelle après centrifugation du prémélange d'arôme à une force de 239 g et à 25 °C pendant 20 minutes ; et
dans laquelle une extraction aqueuse de la composition pour gomme à mâcher présente un taux de crèmage qui est plus lent qu'une extraction aqueuse d'une gomme à mâcher comparative ayant un type et une quantité d'ingrédients identiques, dans laquelle les ingrédients i) à vi) ne sont pas préparés sous la forme d'un prémélange,
dans laquelle le taux de crèmage est déterminé à l'aide d'un analyseur de dispersion photocentrifuge, dans laquelle le taux de crèmage pour l'extraction aqueuse de la composition pour gomme à mâcher est inférieur à 50 % du taux de crèmage de l'extraction aqueuse de la gomme à mâcher comparative lorsqu'elle est analysée à l'aide d'un analyseur de dispersion photocentrifuge à une force de 2 000 g pendant 20 000 secondes à 25 °C.

3. Composition pour gomme à mâcher selon la revendication 2, dans laquelle après 10 minutes de mâchage mécanique, la composition pour gomme à mâcher libère de 4 à 11 % plus d'arôme qu'une gomme à mâcher comparative ayant un type et une quantité d'ingrédients identiques, dans laquelle les ingrédients i) à vi) ne sont pas préparés sous la forme d'un prémélange.

4. Composition pour gomme à mâcher selon la revendication 2, dans laquelle le prémélange d'arôme présente moins de 10 % de séparation de phase déterminée par inspection visuelle après centrifugation du prémélange d'arôme à une force de 1 699 g et à 25 °C pendant 30 minutes, ou dans laquelle le prémélange d'arôme ne présente pas de séparation de phase lorsqu'il est testé à l'aide d'un analyseur de dispersion photocentrifuge à 25 °C, à une force de 100 à 1 000 g pendant 3 heures.

5. Composition pour gomme à mâcher, comprenant :
- une base de gomme ;
- un édulcorant de base ; et
- un prémélange d'arôme comprenant i) un sirop à base d'alcool glucidique, ii) du mannitol particulaire, de l'isomalt, ou une combinaison de ceux-ci, iii) un émulsifiant, iv) une essence, v) une matière grasse, et facultativement vi) un humectant, un acide alimentaire ou un sel de celui-ci, un édulcorant haute intensité, un agent induisant une sensation, ou une combinaison de ceux-ci ;
dans laquelle le prémélange d'arôme est présent en une quantité de 8 à 15 % en poids de la composition pour gomme à mâcher totale ; et
dans laquelle le prémélange d'arôme est préparé séparément à partir d'un mélange de base de gomme et d'édulcorant de base à une température inférieure ou égale à 85 °C, puis ajouté au mélange pour former une composition pour gomme à mâcher homogène.

6. Composition pour gomme à mâcher selon la revendication 5, dans laquelle le prémélange d'arôme présente moins de 10 % de séparation de phase déterminée par inspection visuelle après centrifugation du prémélange d'arôme à une force de 1 699 g et à 25 °C pendant 30 minutes, et
le prémélange d'arôme comprend du mannitol particulaire ; et
dans laquelle le prémélange d'arôme a une viscosité de 6 950 à 51 000 cP à 50 °C.

7. Gomme à mâcher selon l'une quelconque des revendications 1 à 6, dans laquelle le sirop à base d'alcool glucidique du prémélange d'arôme est un sirop d'hydrolysat d'amidon hydrogéné, un sirop d'isomaltulose, un sirop de maltitol, un sirop de sorbitol, un sirop de polyglucitol, ou une combinaison de ceux-ci.

8. Gomme à mâcher selon l'une quelconque des revendications 1 à 6, dans laquelle le prémélange d'arôme comprend le sirop à base de saccharide ou le sirop à base d'alcool glucidique en une quantité de 30 à 75 % en poids sur la base du poids total du prémélange d'arôme ;
dans laquelle le prémélange d'arôme comprend un saccharide particulaire ou un alcool glucidique particulaire en une quantité de 5 à 40 % en poids sur la base du poids total du prémélange d'arôme ;
dans laquelle le prémélange d'arôme comprend une essence en une quantité de 0,01 à 20 % en poids sur la base du poids total du prémélange d'arôme ;
dans laquelle le prémélange d'arôme comprend une matière grasse en une quantité de 2,5 à 10 % en poids sur la base du poids total du prémélange d'arôme ;
dans laquelle le prémélange d'arôme comprend un émulsifiant en une quantité de 1,0 à 15 % en poids sur la base du poids total du prémélange d'arôme ;
dans laquelle le prémélange d'arôme comprend en outre un humectant en une quantité de 0,1 à 30 % en poids sur la base du poids total du prémélange d'arôme ; ou
laquelle gomme à mâcher comprend le prémélange d'arôme en une quantité de 5 à 60 % en poids sur la base du poids total de la gomme à mâcher.

9. Gomme à mâcher selon l'une quelconque des revendications 1 à 4, dans laquelle l'alcool glucidique particulaire du prémélange d'arôme est de l'érythritol, du galactitol, un hydrolysat d'amidon hydrogéné, de l'isomalt, du lactitol, du maltitol, du mannitol, du polyglycitol, du sorbitol, du xylitol, ou une combinaison de ceux-ci.

10. Procédé de préparation d'une composition pour gomme à mâcher, comprenant :
- le mélange de la base de gomme, facultativement avec un édulcorant de base, pour former une composition pour gomme à mâcher intermédiaire ; et
- le mélange de la composition pour gomme à mâcher intermédiaire avec un prémélange d'arôme pour former une composition pour gomme à mâcher,
dans lequel le prémélange d'arôme comprend i) un sirop à base de saccharide ou un sirop à base d'alcool glucidique, ii) un saccharide particulaire ou un alcool glucidique particulaire, iii) un émulsifiant, iv) une essence, v) une matière grasse et facultativement vi) un humectant, un acide alimentaire ou un sel de celui-ci, un édulcorant haute intensité, un agent induisant une sensation, ou une combinaison de ceux-ci ;
dans lequel le prémélange d'arôme est préparé en mélangeant les ingrédients du prémélange d'arôme, le procédé de préparation du prémélange d'arôme étant intégralement réalisé à une température inférieure ou égale à 85 °C ; et
dans lequel le prémélange d'arôme est ajouté en tant qu'ingrédient final dans le procédé.
